(19) Europäisches Patentamt
European Patent Office
Office européen des brevets

(11) Veröffentlichungsnummer: **0 062 200**
**B1**

(12) **EUROPÄISCHE PATENTSCHRIFT**

(45) Veröffentlichungstag der Patentschrift: **23.01.85**

(51) Int. Cl.⁴: **C 09 B 31/00**, C 09 B 33/00 // D06P1/04

(21) Anmeldenummer: **82102278.7**

(22) Anmeldetag: **19.03.82**

# (54) Neue Disazofarbstoffe.

(30) Priorität: **26.03.81 DE 3111937**

(43) Veröffentlichungstag der Anmeldung: **13.10.82 Patentblatt 82/41**

(45) Bekanntmachung des Hinweises auf die Patenterteilung: **23.01.85 Patentblatt 85/4**

(84) Benannte Vertragsstaaten: **CH DE FR GB IT LI**

(56) Entgegenhaltungen:
**DE - A - 2 718 883**
**US - A - 4 083 844**

(73) Patentinhaber: **BASF Aktiengesellschaft, Carl-Bosch-Strasse 38, D-6700 Ludwigshafen (DE)**

(72) Erfinder: **Kurtz, Walter, Dr., Sonnenwendstrasse 73, D-6702 Bad Duerkheim (DE)**
Erfinder: **Lamm, Gunther, Dr., Heinrich-Heine-Strasse 7, D-6733 Hassloch (DE)**

**EP 0 062 200 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft Farbstoffe der allgemeinen Formel I

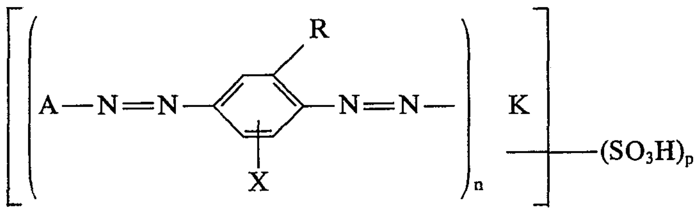

(I)

in der

A der Rest einer Diazokomponente,
K der Rest einer Kupplungskomponente, ausgenommen der Pyridonreihe,
n die Zahlen 1 oder 2,
p die Zahlen 0, 1, 2, 3 oder 4,
R ein Rest der Formel

$COOR^2$ 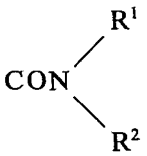 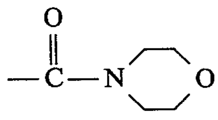 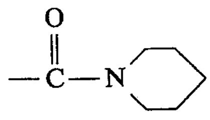 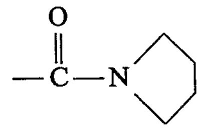

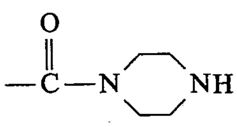 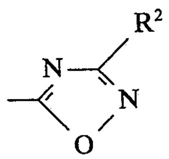 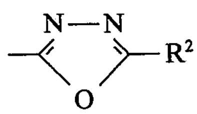 oder 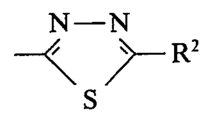

X Wasserstoff, Chlor, Brom, Methoxy, Äthoxy, Propoxy, Butoxy, Phenoxy, Methyl, Äthyl, Propyl, Butyl, Acetylamino, Dimethylamino, Diäthylamino, Carboxyl oder $-NO_2$ sind, wobei
$R^1$ gegebenenfalls substituiertes Alkyl, Alkenyl, Cycloalkyl oder Aryl und
$R^2$ Wasserstoff oder einen Rest $R^1$ bedeuten.

Die Reste A der Diazokomponenten stammen vorwiegend aus der Anilin-, Aminonaphthalin-, Aminoanthrachinon-, Thiazol-, Benzthiazol-, Benzisothiazol-, Thiadiazol-, Indazol-, Pyrazol- oder Azobenzol-Reihe.

Als Substituenten für die Reste A der Diazokomponente sind beispielsweise zu nennen:

In der Benzolreihe:
Chlor, Brom, Nitro, Cyan, Trifluormethyl, Methylsulfonyl, Äthylsulfonyl, Phenylsulfonyl, Carboxyl, Carbomethoxy, Carbobutoxy, Carbo-$\beta$-methoxy-äthoxy, Carbo-$\beta$-hydroxy-äthoxy, gegebenenfalls N-mono- oder N-disubstituiertes Carbon- oder Sulfonamid, Methyl, Äthyl, Methoxy und Äthoxy.

N-Substituenten der Carbon- oder Sulfonamide sind dabei z.B.
Methyl, Äthyl, Propyl, Butyl, $\beta$-Hydroxyäthyl, $\gamma$-Hydroxy-propyl, $\beta$-Methoxy-äthyl, $\gamma$-Methoxypropyl oder $\gamma$-Äthoxypropyl sowie das Pyrrolidid, Piperidid oder Morpholid.

In der Azobenzolreihe:
Chlor, Brom, Nitro, Cyan, Methyl, Hydroxy, Äthyl, Methoxy oder Äthoxy. In der heterocyclischen Reihe: Chlor, Brom, Nitro, Cyan, Methyl, Äthyl, Phenyl, Methoxy, Äthoxy, Methylmercapto, $\beta$-Carbomethoxy-äthylmercapto, $\beta$-Carboäthoxy-äthylmercapto, Carbomethoxy, Carboäthoxy, Acetyl, Methylsulfonyl oder Äthylsulfonyl.

Der Rest A leitet sich im einzelnen z.B. von folgenden Aminen ab:
o-, m- oder p-Nitroanilin, o-, m- oder p-Cyananilin, 2,4-Dicyananilin, o-, m- oder p-Bromanilin, 2,4,6-Tribromanilin, 2-Chlor-4-nitroanilin, 2-Brom-4-nitroanilin, 2-Cyan-4-nitroanilin, 2-Methylsulfonyl-4-nitroanilin, 2-Methyl-4-nitroanilin, 2-Methoxy-4-nitroanilin, Anilin, 2-, 3- oder 4-Toluidin, 2-, 3- oder 4-Chloranilin, 2,3-, 2,4-, 2,5-, 3,4- oder 3,5-Dichloranilin, 2-Methyl-4-chloranilin, 2-Methyl-5-chloranilin, 2-Methyl-3-chloranilin, 2-, 3- oder 4-Trifluormethylanilin, 2-Trifluormethyl-4-chloranilin,

2-Methyl-4,5-dichloranilin, 3-Methyl-4-chloranilin, 3-Methyl-6-chloranilin, 3-Methyl-4,6-dichloranilin, 4-Methyl-3-chloranilin, 2-, 3- oder 4-Äthylanilin, 2,3-, 2,4-, 2,5-, 3,4- oder 3,5-Dimethylanilin, 3- oder 4-Acetylaminoanilin, 4-Benzoylaminoanilin, 2,5-Dichlor-4-acetaminoanilin, 3-Acetamino-4-methylanilin, 5-Acetamino-2-methylanilin, 4-Acetamino-2-methylanilin, 5-Chlor-4-acetylamino-2-methylanilin, 5-Chlor-2-methoxyanilin, 4,5-Dichlor-2-methoxyanilin, 3-Chlor-4-methoxyanilin, 1-Aminobenzol-4-methylsulfon, 4-Aminodiphenylsulfon, 1-Amino-2-chlorbenzol-4-methylsulfon, 1-Amino-2-chlor-6-brombenzol-4-methylsulfon, 4-Amino-acetophenon, 3,4-Dicyananilin, 4-Aminodiphenyläther, 4-Chlor-2-nitroanilin, 4-Methyl-2-nitroanilin, 4-Methoxy-2-nitroanilin, 2-Chlor-5-aminobenzonitril, 2-Amino-5-chlorbenzonitril, 1-Amino-2-nitrobenzol-4-sulfonsäure-n-butylamid oder -β-methoxyäthylamid, 2,4-Dinitroanilin, 2,4-Dinitro-6-chloranilin, 2,4-Dinitro-6-bromanilin, 2,4-Dinitro-6-cyananilin, 1-Amino-2,4-dinitrobenzol-6-methylsulfon, 2,6-Dichlor-4-nitroanilin, 2,6-Dibrom-4-nitroanilin, 2-Chlor-6-brom-4-nitroanilin, 2,6-Dicyan-4-nitroanilin, 2-Cyan-4-nitro-6-chloranilin, 2-Cyan-4-nitro-6-bromanilin, 1-Amino-2,6-dibrom-benzol-4-methylsulfon, 1-Amino-2,6-dichlorbenzol-4-methylsulfon, 1-Amino-2,4-dinitrobenzol-6-carbonsäure-methylester oder -β-methoxyäthylester, 3,5-Dichloranthranilsäurepropylester, 3,5-Dibrom-anthranilsäure-β-methoxyäthylester, N-Acetyl-p-phenylendiamin, 2-, 3- oder 4-Aminobenzoesäure-methylester, -äthylester, -propylester, -butylester, -isobutylester, -β-methoxyäthylester, -β-äthoxy-äthylester, -methyl-diglykolester, -äthyl-diglykolester, -methyl-triglykolester, -äthyltriglykolester, -β-hydroxyäthylester, -β-acetoxy-äthylester, -β-(β'-hydroxy-äthoxy)-äthylester, -β-hydroxy-propylester, -γ-hydroxy-propylester, -ω-hydroxy-butylester, -ω-hydroxy-hexylester, 5-Nitro-anthranilsäuremethylester, isobutylester, -methyl-diglykolester, -β-methoxyäthylester, -β-butoxy-äthylester, -β-acetoxy-äthylester, 3- oder 4-Aminophthalsäure-, 5-Aminoisophthalsäure- oder Amino-terephthalsäure-dimethylester, -diäthylester, -dipropylester, -dibutylester, 3- oder 4-Aminobenzoesäureamid, -methylamid, -propylamid, -butylamid, -isobutylamid, -cyclohexylamid, -β-äthyl-hexylamid, -γ-methoxypropylamid, -γ-äthoxy-propylamid, 2-, 3- oder 4-Aminobenzoesäure-dimethylamid, -diäthylamid, -pyrrolidid, -morpholid, N-methyl-N-β-hydroxy-äthylamid, 5-Amino-isophthalsäurediamid, -bis-γ-methoxy-propylamid, Aminoterephthalsäure-bis-diäthylamid, 3- oder 4-Amino-phthalsäure-imid, -β-hydroxy-äthylamid-, γ-hydroxy-propylamid, 3-Amino-6-nitro-phthalsäure-β-hydroxy-äthylamid, 2-, 3- oder 4-Aminobenzosulfonsäure-dimethylamid, -diäthylamid, -pyrrolidid, -morpholid, Methylsulfonsäure-2'-, -3'- oder 4'-amino-phenylester, Äthylsulfonsäure-2'-, -3'-, oder -4'-amino-phenylester, Butylsulfonsäure-2'-, -3'- oder -4'-aminophenylester, Benzolsulfonsäure-2'-, -3'- oder 4'-aminophenylester, 1- und 2-Amino-anthrachinon, 1-Amino-4-chlor-anthrachinon, 3- oder 4-Aminodiphenylenoxid, 2-Amino-benzthiazol, 2-Amino-6-carbonsäure-methylesterbenzthiazol, 2-Amino-6-methyl-sulfonyl-benzthiazol, 2-Amino-6-cyanbenzthiazol, 2-Amino-6-nitro-benzthiazol, 5,6- oder 6,7-Dichlor-2-amino-benzthiazol, 4-Amino-5-brom-7-nitro-1,2-benzisothiazol, 3-Amino-5-nitro-2,1-benzisothiazol, 3-Amino-5-nitro-7-brom-2,1-benzisothiazol, 2-Aminothiazol, 2-Amino-5-nitrothiazol, 2-Amino-4-methyl-thiazol-5-carbonsäure-äthylester, 2-Amino-4-methyl-5-acetyl-thiazol, 2-Amino-3-cyan-4-methyl-thiophen-5-carbonsäureester, 2-Phenyl-5-amino-1,3,4-thiadiazol, 3-Methylmercapto-5-amino-1,2,4-thiadiazol, 3-β-Carbomethoxy-äthylmercapto-5-amino-1,2,4-thiadiazol sowie von den Diazokomponenten der Formeln

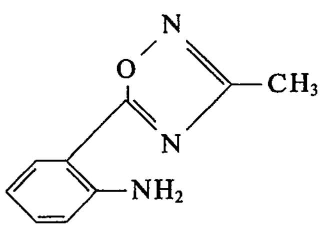
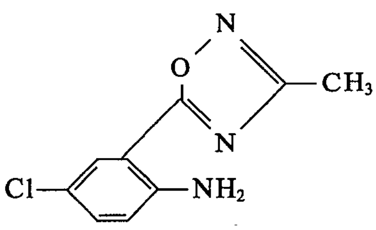
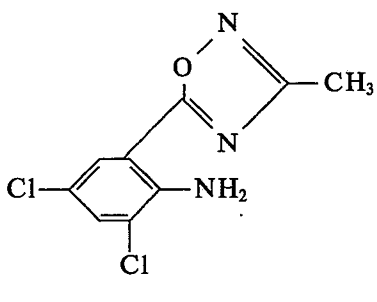

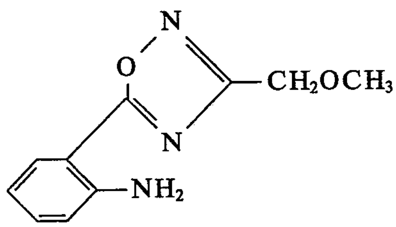

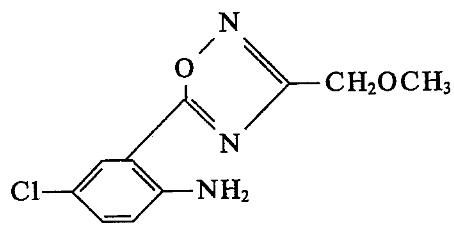

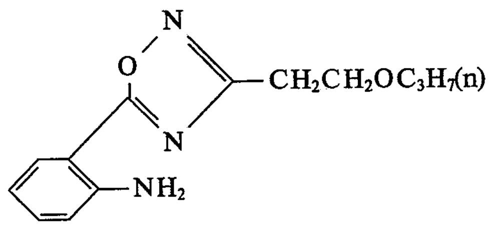

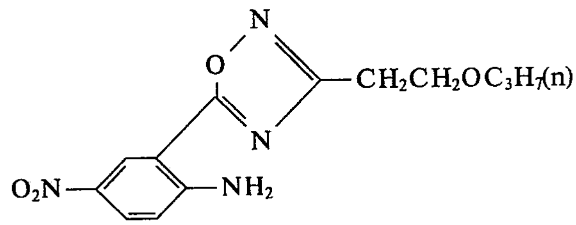

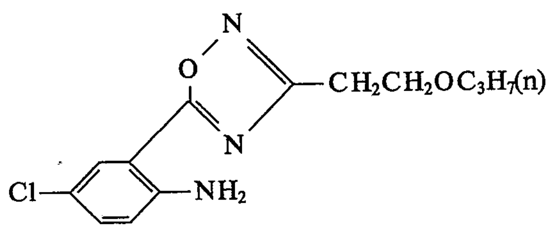

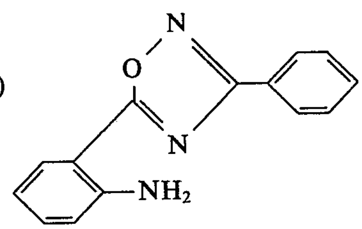

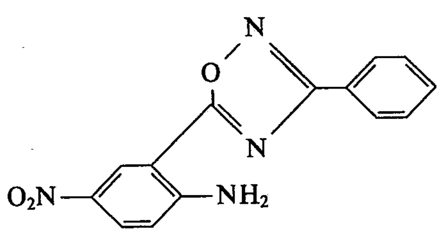

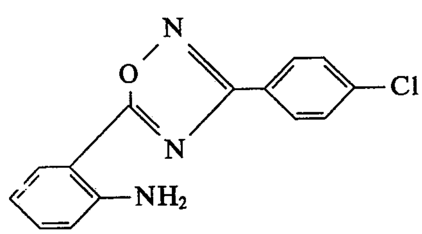

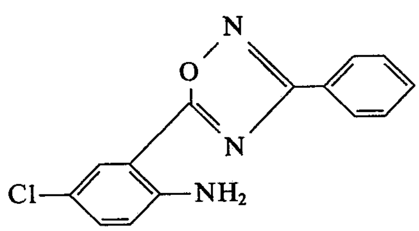

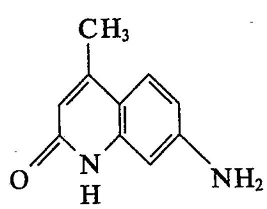

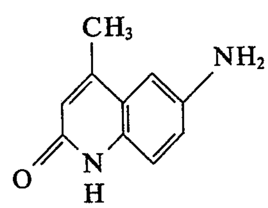

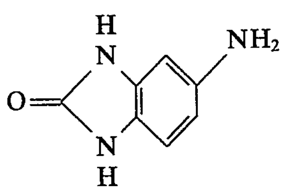

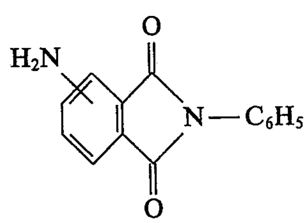

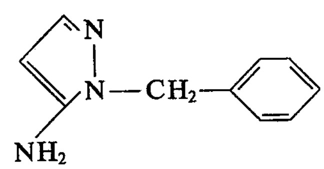

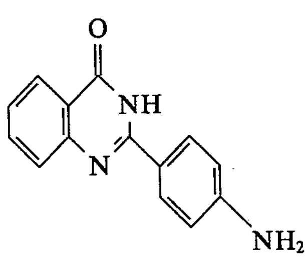

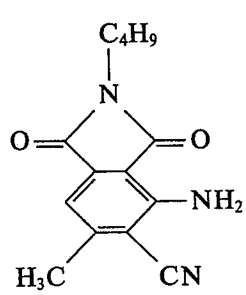

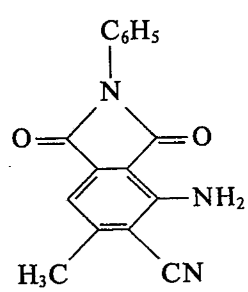

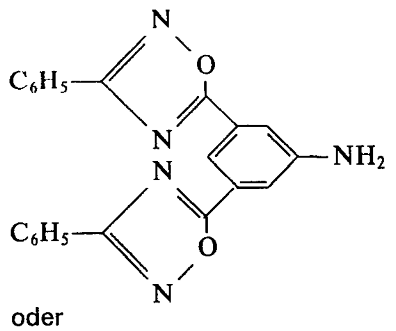
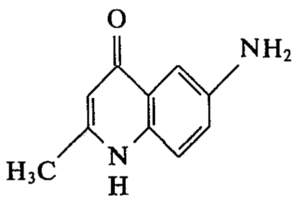
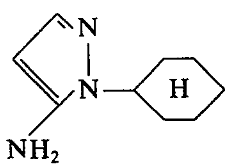

oder

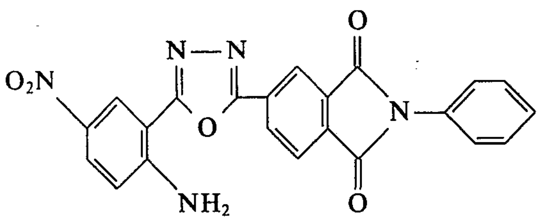

Geeignete Diazokomponenten der Aminoazobenzolreihe A—$NH_2$ sind beispielsweise: 4-Aminoazobenzol, 2',3-Dimethyl-4-aminoazobenzol, 3',2-Dimethyl-4-aminoazobenzol, 2,5-Dimethyl-4-aminoazobenzol, 2-Methyl-5-methoxy-4-aminoazobenzol, 2-Methyl-4',5-dimethoxy-4-aminoazobenzol, 4'-Chlor-2-methyl-5-methoxy-4-aminoazobenzol, 4'-Nitro-2-methyl-5-methoxy-4-aminoazobenzol, 4'-Chlor-2-methyl-4-aminoazobenzol, 2,5-Dimethoxy-4-aminoazobenzol, 4'-Chlor-2,5-dimethoxy-4-aminoazobenzol, 4'-Nitro-2,5-dimethoxy-4-aminoazobenzol, 4'-Chlor-2,5-dimethyl-4-aminoazobenzol, 4'-Methoxy-2,5-dimethyl-4-aminoazobenzol, 4'-Nitro-4-aminoazobenzol, 3,5-Dibrom-4-aminoazobenzol, 2,3'-Dichlor-4-aminoazobenzol, 3-Methoxy-4-aminoazobenzol, 4'-Hydroxy-2'-methyl-4-aminoazobenzol, 3-Chlor-4-aminoazobenzol.

Von den besonders wertvollen Diazokomponenten A — $NH_2$ seien im einzelnen genannt: 4-Nitro-anilin, 2-Chlor-4-nitroanilin, 2-Brom-4-nitroanilin, 2-Cyan-4-nitro-anilin, 2-Methoxy-4-nitro-anilin, 2-Amino-5-nitro-phenylsulfonsäuredimethylamid, 2-Amino-5-nitro-phenylsulfonsäurebutylamid, 2-Amino-5-nitro-phenylsulfonsäure-$\beta$-methoxyäthylamid, 2-Amino-benzonitril, 2-Chlor-4-amino-benzonitril, 2-Chlor-5-amino-benzonitril, 2-Amino-5-chlor-benzonitril, 3,5-Dichlor-2-amino-benzonitril, 1-Amino-2,4-dicyanbenzol, 1-Amino-2,4-dicyan-6-chlor-benzol, 2-Chlor-4-amino-5-nitro-benzonitril, 2-Amino-3-chlor-5-nitro-benzonitril, 2-Amino-3-brom-5-nitro-benzonitril, 2,6-Dicyan-4-nitro-anilin, 2,5-Dichlor-4-nitroanilin, 2,6-Dichlor-4-nitro-anilin, 2,6-Dibrom-4-nitro-anilin, 2-Chlor-6-brom-4-nitro-anilin, 2,4-Dinitro-anilin, 2,4-Dinitro-6-chloranilin, 2,4-Dinitro-6-brom-anilin, 2-Amino-3,5-dinitro-benzonitril, 1-Amino-4-nitrobenzol-2-methylsulfon, 1-Amino-4-nitrobenzol-2-äthylsulfon, 4-Methylsulfonyl-anilin, 1-Amino-2-chlorbenzol-4-methylsulfon, 1-Amino-2,6-dibrombenzol-4-methylsulfon, 1-Amino-2,6-dichlorbenzol-4-methylsulfon, 2-(3'-Phenyl-oxdiazolyl-1,2,4)-anilin, 2-(3'-Methoxymethyloxdiazolyl-1,2,4)-anilin, o-, m-, p-Chloranilin, o-, m-, p-Bromanilin, Anthranilsäure-methyl, äthyl-, propyl-, methoxyäthylester, 2- und 4-Amino-benzoesäureester, 2-Amino-5-nitro-benzoesäureester, 2-Amino-3-chlor-5-nitro-benzoesäureester, 2-Amino-3,5-dichlor-benzoesäureester, 2-Amino-3,5-dibrom-benzoesäureester, 2-Amino-3,5-dinitro-benzoesäure-methylester oder -$\beta$-methoxy-äthylester, 2-Aminoterephthalsäure-diäthylester, 4-Amino-azobenzol, 2,3'-Dimethyl-4-amino-azobenzol, 2',3-Dimethyl-4-amino-azobenzol, 2,5-Dimethyl-4-amino-azobenzol, 3,5-Dibrom-4-amino-azobenzol, 3-Chlor-4-aminoazobenzol, 3-Brom-4-aminoazobenzol, p-Cyananilin, 2,6-Dicyan-4-chlor- oder -4-methylanilin oder 2,6-Dichlor-4-cyananilin.

Von den besonders wertvollen heterocyclischen Diazokomponenten A — $NH_2$ seien erwähnt: 2-Amino-thiazol, 2-Amino-5-nitro-thiazol, 2-Amino-4-methyl-thiazol-5-carbonsäureäthylester, 2-Amino-5-phenyl-1,3,4-thiadiazol, 3-Phenyl-5-amino-1,2,4-thiadiazol, 3-Methyl-mercapto-5-amino-1,2,4-thiadiazol, 3-$\beta$-Carbomethoxy-äthylmercapto-5-amino-1,2,4-thiadiazol, 3-$\beta$-Carboäthoxy-äthylmercapto-5-amino-1,2,4-thiadiazol, 2-Amino-6-cyan-benzthiazol, 2-Amino-6-carbonsäuremethylester-benzthiazol, 2-Amino-6-nitro-benzthiazol,

2-Amino-3-cyan-4-methyl-thiophen-5-carbonester, 1-Benzyl-5-aminopyrazol, 1-Cyclohexyl-5-aminopyrazol.

Kupplungskomponentenreste K stammen z.B. aus der Phenol-, Naphthalin-, Benzimidazol-, Pyrazolon-, Pyridin-, Pyrimidin-, Acetoacetanilid-, Indol-, Thiazol-, Homophthalimid- oder Anilinreihe. Wichtige Kupplungskomponenten entsprechen den allgemeinen Formeln

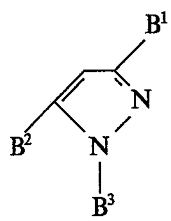
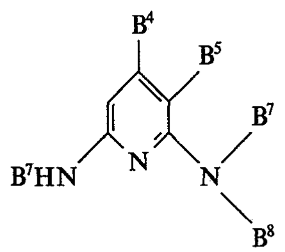
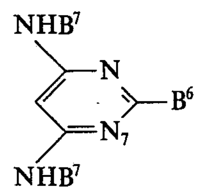

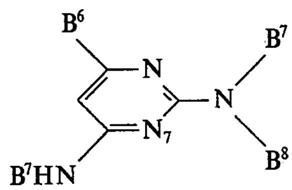
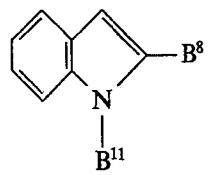
$B^9COCH_2CONH—B^{10}$

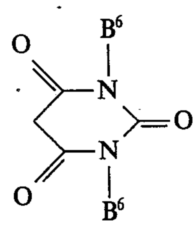
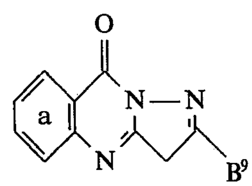
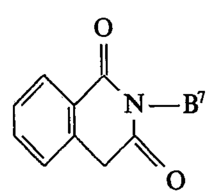
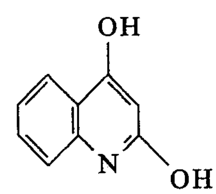

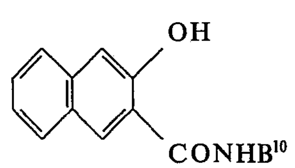
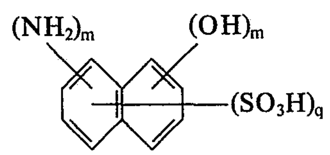
oder
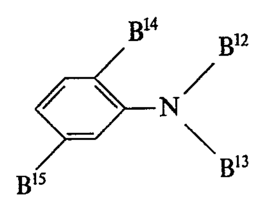

in denen

$B^1$ Wasserstoff, Methyl, Carboxyl, $C_1$- bis $C_8$-Alkoxycarbonyl oder Carbamoyl,
$B^2$ Hydroxy oder Amino,
$B^3$ Wasserstoff, $C_1$- bis $C_8$-Alkyl, Cyclohexyl, Benzyl, Phenyläthyl oder gegebenenfalls durch Chlor, Brom, Methyl, Äthyl, Methoxy, Äthoxy, Carboxyl oder Hydroxysulfonyl substituiertes Phenyl,
$B^4$ Wasserstoff, $C_1$- bis $C_3$-Alkyl, Hydroxy oder Amino,
$B^5$ Wasserstoff, Cyan, Carbamoyl, Acetyl, $CH_2SO_3H$ oder $SO_3H$,
$B^6$ Wasserstoff, gegebenenfalls durch Hydroxy, $C_1$- bis $C_4$-Alkoxy, Phenoxy oder Phenyl substituiertes $C_1$- bis $C_8$-Alkyl, Cyclohexyl oder gegebenenfalls durch Chlor, Methyl oder Methoxy substituiertes Phenyl,
$B^7$ Wasserstoff, oder einen aliphatischen, cycloaliphatischen oder aromatischen Rest,
$B^8$ Wasserstpff oder $C_1$- bis $C_4$-Alkyl,
$B^7$ und $B^8$ zusammen mit dem Stickstoff Pyrrolidino, Piperidino, Morpholino oder Hexamethylenimino,
$B^9$ Methyl oder Phenyl,
$B^{10}$ gegebenenfalls durch Chlor, Brom, Methyl, Ethyl, Methoxy, Ethoxy, Acetylamino oder Hydroxysulfonyl substituiertes Phenyl oder Naphthyl oder einen Rest der Formel

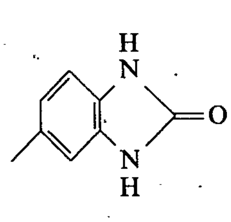
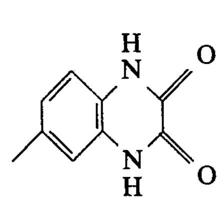
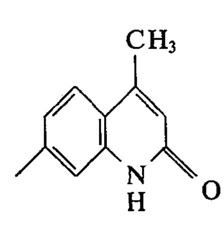
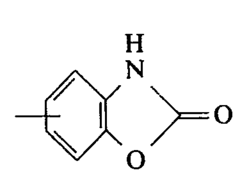

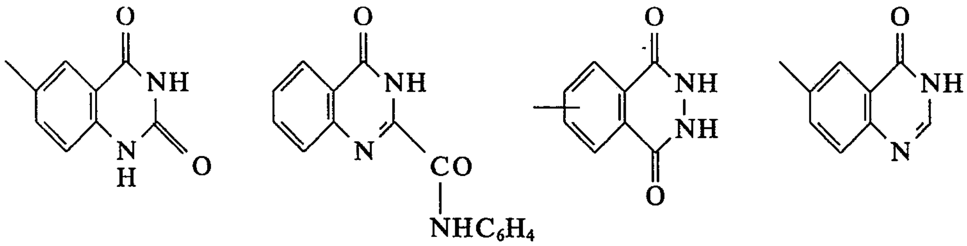

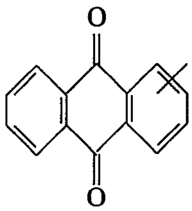 oder 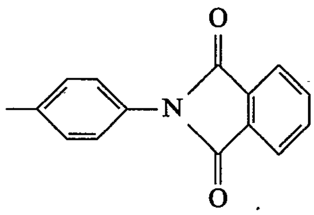 .

$B^{11}$ Wasserstoff, Methyl, Hydroxy-$C_2$- oder $C_3$-alkyl, β-Cyanethyl oder β-Carboxyethyl,
$B^{12}$ Wasserstoff, $C_1$- bis $C_4$-Alkyl, β-Hydroxyethyl, β-$C_1$- bis $C_4$-Alkanoyloxyethyl, β-Cyanethyl oder β- Methoxyethyl,
$B^{13}$ $C_1$- bis $C_4$-Alkyl, β-Cyanethyl, β-Hydroxyethyl oder -propyl, β-$C_1$- bis $C_4$-Alkanoyloxyethyl oder -propyl, β-$C_1$- bis $C_4$-Alkoxycarbonylethyl, β-$C_1$- bis $C_4$-Alkylaminocarbonyloxyethyl oder Phenylaminocarbonyloxyethyl,
$B^{14}$ Wasserstoff, Methoxy oder Chlor,
$B^{15}$ Wasserstoff, Chlor, Methyl oder $C_1$- bis $C_4$-Alkanoylamino, die Symbole
m unabhängig voneinander 0 oder 1 und
q 0, 1 oder 2 bedeuten, wobei der Ring a noch durch Chlor, Brom oder gegebenenfalls substituiertes Sulfamoyl substituiert sein kann.

Reste $B^7$ sind beispielsweise:

1. gegebenenfalls substituierte Alkylreste:

$CH_3$ $C_2H_5$ n- oder i-$C_3H_7$ n- oder i-$C_4H_9$ $C_6H_{13}$ $C(CH_3)_3$ $CH_2—CH(C_2H_5)—C_4H_9$

$CH_2CH_2OH$ $(CH_2)_3OH$ $CH_2CH(CH_3)OH$ $CH(CH_3)—CH_2OH$ $(CH_2)_4OH$ $(CH_2)_6OH$

$CH(CH_3)—(CH_2)_3C(OH)(CH_3)_2$ $(CH_2)_2O(CH_2)_2OH$ $(CH_2)_3O(CH_2)_4OH$ $(CH_2)_3OC_2H_4OH$

$(CH_2)_2CN$ $(CH_2)_5CN$ $(CH_2)_6CN$ $(CH_2)_7CN$ $(CH_2)_2O(CH_2)CN$ $(CH_2)_3O(CH_2)_2CN$

$(CH_2)_2O(CH_2)_2O(CH_2)_2CN$ $(CH_2)_3OC_2H_4OCH_3$ $(CH_2)_3OC_2H_4OC_2H_5$

$(CH_2)_3O(CH_2)_6OH$ $CH(CH_3)(CH_2)_3CH(CH_3)_2$ $(CH_2)_3OC_2H_4OCH(CH_3)_2$

$(CH_2)_3OC_2H_4OC_4H_9$ $(CH_2)_3OC_2H_4OCH_2C_6H_5$ $(CH_2)_3OC_2H_4OC_2H_4C_6H_5$

$(CH_2)_3OC_2H_4O—$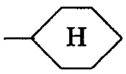 $(CH_2)_3OC_2H_4OC_6H_5$ $(CH_2)_3OCH(CH_3)—CH_2OCH_3$

$(CH_2)_3OCH(CH_3)CH_2OC_4H_9$ $(CH_2)_3OCH_2CH(CH_3)OCH_3$ $(CH_2)_3OCH(CH_3)CH_2OC_2H_5$

die entsprechenden Reste, bei denen die Gruppierungen

$—OC_2H_4—$ 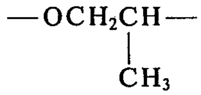 oder 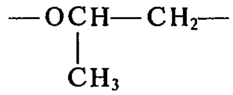

zwei- oder dreimal vorhanden sind;

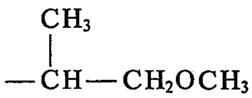 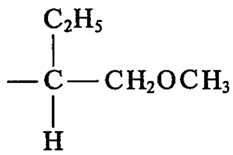 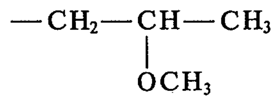

$CH_2CH_2OCH_3$ $CH_2CH_2OC_2H_5$ $CH_2CH_2OC_3H_7$ $CH_2CH_2OC_4H_9$ $CH_2CH_2OC_6H_5$

$(CH_2)_3OCH_3$ $(CH_2)_3OC_2H_5$ $(CH_2)_3OC_3H_7$ $(CH_2)_3OC_4H_9$ 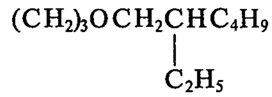

$(CH_2)_3OC_6H_{13}$ $(CH_2)_3OC_8H_{17}$ $(CH_2)_3O—(CH_2)_3OCH_2C_6H_5$ $(CH_2)_3OC_2H_4C_6H_5$

$(CH_2)_3OC_6H_5$ 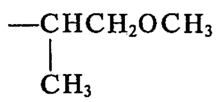 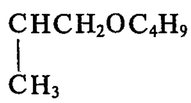 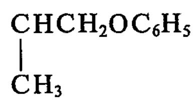 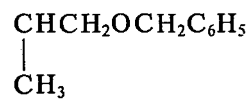

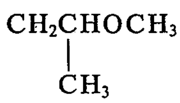 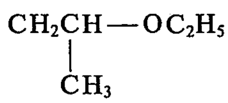 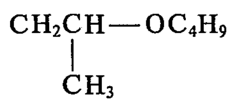 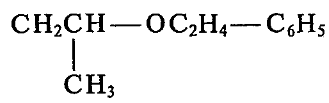

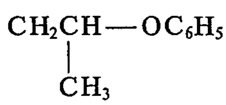 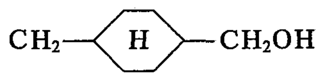

2. gegebenenfalls substituierte Cyclo- und Polycycloalkylreste:

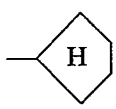 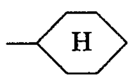 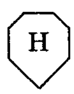 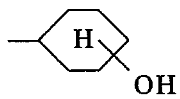 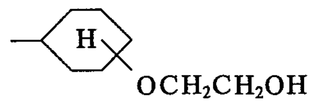

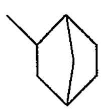 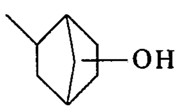 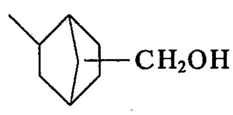 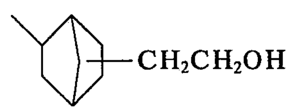

3. Aralkylreste:

$CH_2C_6H_5$ $C_2H_4C_6H_5$ 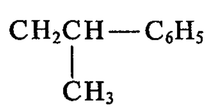 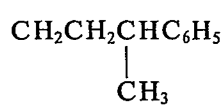 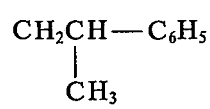

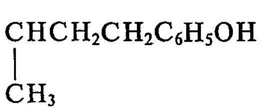 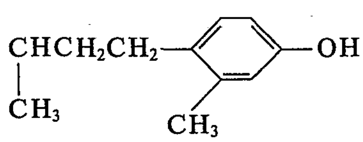 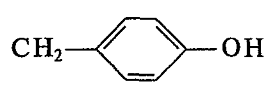 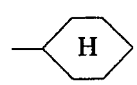

$C_2H_4C_6H_5$ 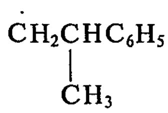 $C_6H_5$ oder $C_6H_4OC_2H_4OH$.

Einzelne Reste R der Formel COOR[1] sind z. B.:

$COOCH_3$ $COOC_2H_5$ $COOCH(CH_3)_2$ $COOC_3H_7(n)$ 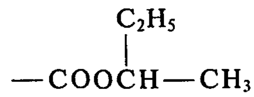

$COOC_4H_9(n)$ $COOC_5H_{11}$ $COOC_6H_{13}(n)$ $COOC_6H_{13}(i)$ 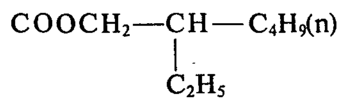

$COOC_9H_{19}(n)$ $COOC_{10}H_{21}(n)$ $COOC_{10}H_{21}(i)$ $COOCH_2CH_2OCH_3$

$COOCH_2CH_2OC_2H_5$ $COOCH_2CH_2OC_4H_9(n)$ 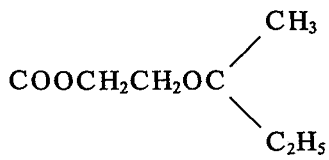

$CO(OCH_2CH_2)_2OCH_3$ $CO(OCH_2CH_2)_2OC_4H_9(n)$ $CO(OCH_2CH_2)_3OCH_3$

$CO(OCH_2CH_2)_3OC_4H_9(n)$ $CO(OCH_2CH_2)_4OCH_3$ $CO(OCH_2CH_2)_4OC_4H_9(i)$

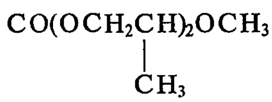 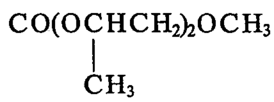 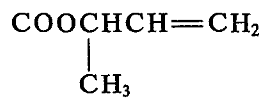

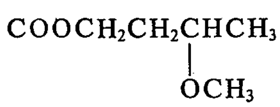 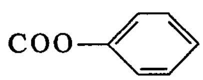 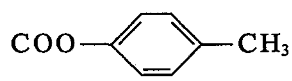 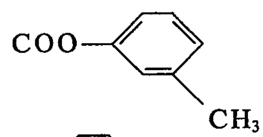

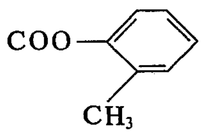 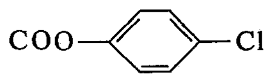 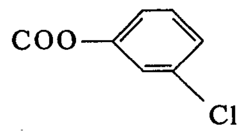 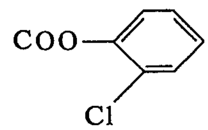

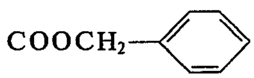 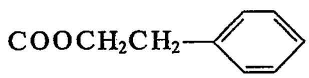 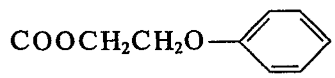

$COOCH_2CH_2OCOCH_3$ $COOCH_2CH_2NHCOCH_3$ $COO(CH_2)_3NH—COCH_3$.

Reste R[3] an den heterocyclischen Resten

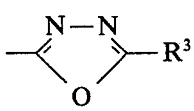 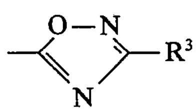 oder 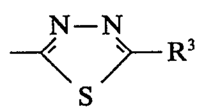

sind beispielsweise:

Wasserstoff, gegebenenfalls durch Sauerstoff unterbrochenes und durch Hydroxy, Pyrrolidonyl, Phthalimidyl, $C_1$- bis $C_8$-Alkoxy, Allyloxy, Benzyloxy, Phenyläthoxy, Phenoxy, Methylphenoxy, Chlorphenoxy oder Methoxyphenoxy substituiertes $C_1$- bis $C_8$-Alkyl, Benzyl, Phenyläthyl, Cyclohexyl, gegebenenfalls durch Chlor, Brom, Nitro, Methyl, Äthyl, Methoxy oder Äthoxy substituiertes Phenyl, Naphthyl, Pyridil, Thienyl oder Furyl.

Einzelne Reste R[2] der heterocyclischen Reste sind beispielsweise:

Methyl, Äthyl, Propyl, Butyl, Pentyl, Hexyl, Heptyl, 1-Äthylpentyl, Methoxymethyl, Methoxyäthyl, (n)-Propoxyäthyl, (i)-Propoxyäthyl, (n)-Butoxyäthyl, (n)-Hexoxyäthyl, Phenyl, Phenylallyl oder Reste der Formeln

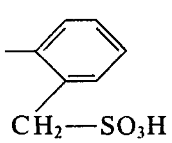 $—CH_2CH_2—SO_3H$ $—CH_2—SO_3H$

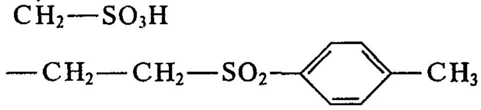 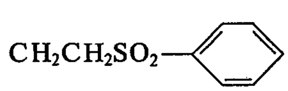 $(CH_2CH_2O)_2CH_3$

$(CH_2CH_2O)_3CH_3$.

Zur Herstellung der Verbindungen der Formel I kann man eine Diazoverbindung von Aminen der Formel

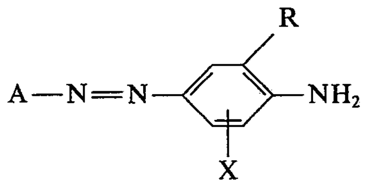

mit einer ein- oder zweifach kuppelnden Kupplungskomponente der Formel

HK

nach an sich bekannten Methoden umsetzen.

Die Verfahren sind im Prinzip bekannt. Einzelheiten der Herstellung können den Beispielen entnommen werden, in denen sich Angaben über Teile und Prozente, sofern nicht anders vermerkt, auf das Gewicht beziehen.

Von besonderer Bedeutung sind Verbindungen der Formel Ia

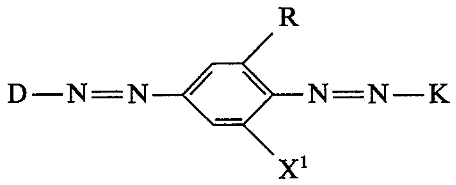

in der

D der Rest einer Diazokomponente der Anilinreihe,

K der Rest einer Kupplungskomponente der Indol-, Pyrazolon-, Pyridin-, Acylacetarylid-, Anilin- oder Sulfonaphthalinreihe,

R $COOR^2$ 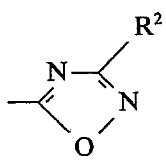 oder 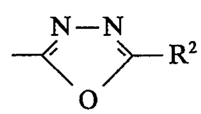 und

$X^1$ Wasserstoff, Chlor oder Brom sind.

Bevorzugte Diazokomponenten der Anilinreihe tragen als Substituenten insbesondere Fluor, Chlor, Brom, Trifluormethyl, Methyl, Äthyl, Methoxy, Äthoxy, Phenoxy, Cyan, Nitro, Methylsulfonyl, Äthylsulfonyl, Allylsulfonyl, Phenylsulfonyl, Carboxyl, Carbonsäureester, gegebenenfalls substituiertes Sulfamoyl oder Oxdiazolyl.

Bevorzugte Reste $COOR^2$ sind im einzelnen beispielsweise:

$COOCH_3$ $COOC_2H_5$ $COOC_3H_7(n)$ $COOC_3H_7(i)$ $COOC_4H_9(n)$

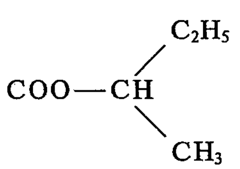 $COOC_5H_{11}$ $COOC_6H_{13}(n)$ $COOC_6H_{13}(i)$ $COOC_8H_{17}(n)$

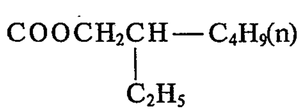 $COOC_9H_{19}(n)$ $COOC_{10}H_{21}(n)$ $COOC_{10}H_{21}(i)$

$COOCHCH_2OCH_3$ $COOCH_2CH_2OC_4H_9$ $CO(OCH_2CH_2)_2OCH_3$

$CO(OCH_2CH_2)_2OC_2H_5$ $CO(OCH_2CH_2)_2OC_4H_9(n)$ $CO(OCH_2CH_2)_3OCH_3$

$CO(OCH_2CH_2)_3OC_4H_9$ $CO(OCH_2CH_2)_4OCH_3$ $CO(OCH_2CH_2)_4OC_4H_9$

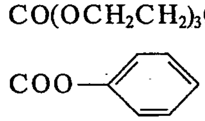 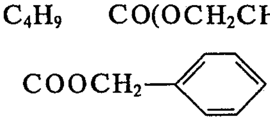 $CON(CH_3)_2$ $CON(C_2H_5)_2$ $CONH_2$.

Bevorzugte Reste $R^2$ in der 1,2,4-Oxdiazolyl-Reihe sind beispielsweise:

$CH_3$ $C_2H_5$ $CH_2OCH_3$ $CH_2CH_2OCH_3$ $CH_2CH_2OC_2H_5$ $CH_2CH_2OC_3H_7(n)$ $(CH_2CH_2O)_2CH_3$ $(CH_2CH_2O)_3CH_3$ $(CH_2CH_2O)_2C_3H_7(n)$ $C_6H_5$ $C_6H_4CH_3$ oder $C_6H_4Cl$.

Bevorzugte Reste $R^2$ in der 1,3,4-Oxdiazolyl-Reihe sind beispielsweise:

$CH_3$ $C_2H_5$ $C_3H_7$ $C_5H_{11}(n)$ 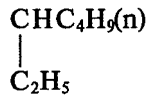 $C_6H_{13}$ oder $C_6H_5$.

Von besonderer technischer Bedeutung sind z. B. die Diazokomponenten der Formeln:

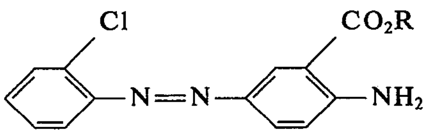

R = $CH_3$, $C_2H_5$, $C_3H_7(n)$, $C_4H_9(n)$, 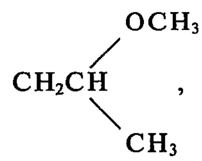 , $C_6H_{13}(n)$, $C_8H_{17}(i)$, $(CH_2CH_2O)_3CH_3$

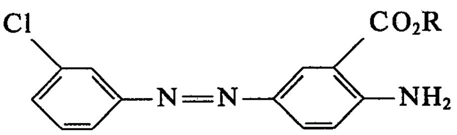

desgl.

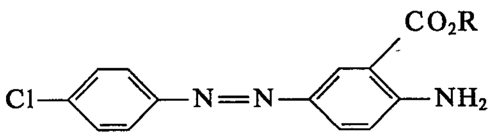

desgl.

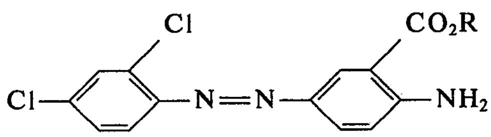

desgl.

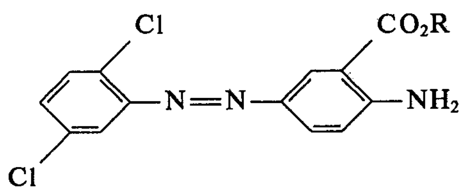

desgl.

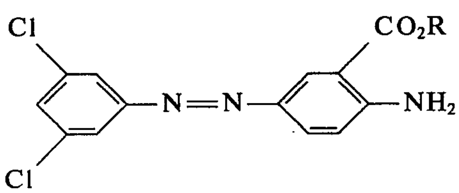

desgl.

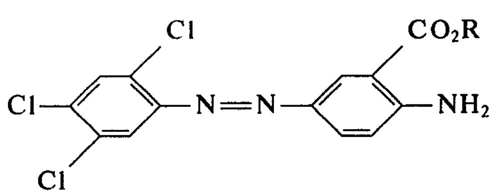

desgl.

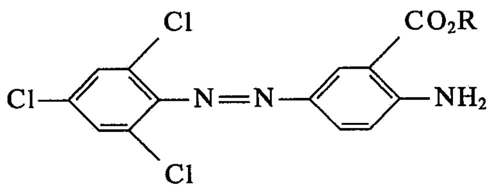

R = $CH_3$, $C_2H_5$, $C_3H_7(n)$, $C_4H_9(n)$,

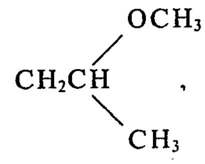

,

$C_6H_{13}(n)$, $C_8H_{17}(i)$, $(CH_2CH_2O)_3CH_3$

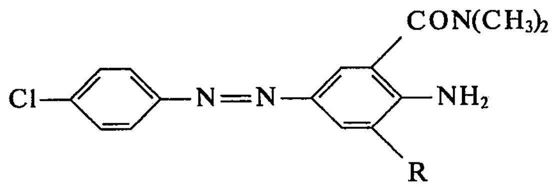

R = H, Br

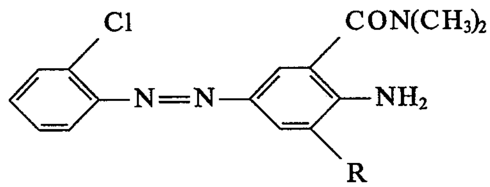

desgl.

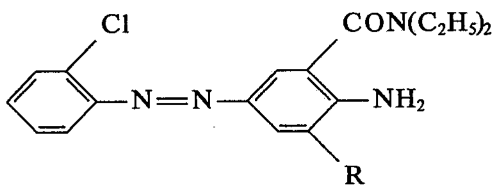

desgl.

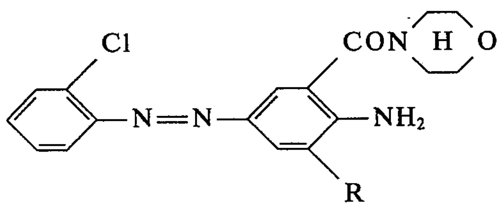

desgl.

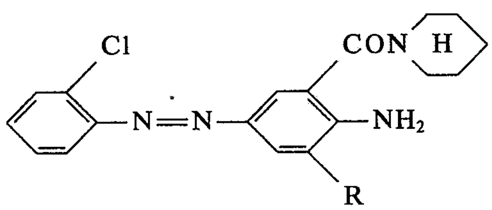

desgl.

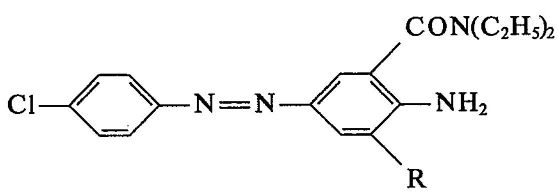

desgl.

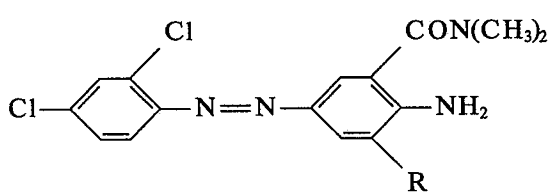

desgl.

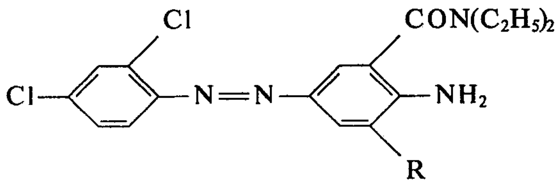

R = H, Br

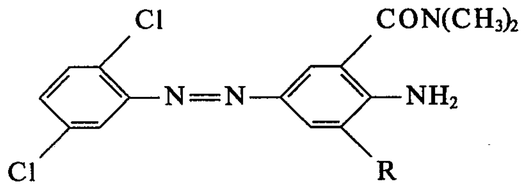

desgl.

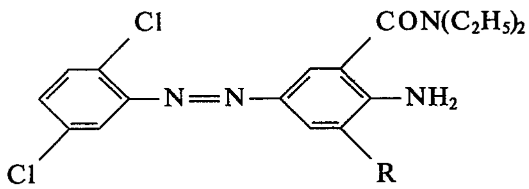

desgl.

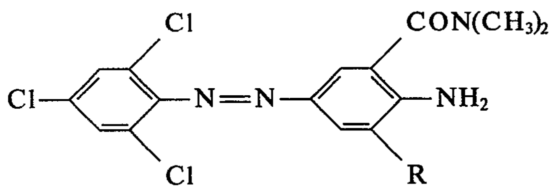

desgl.

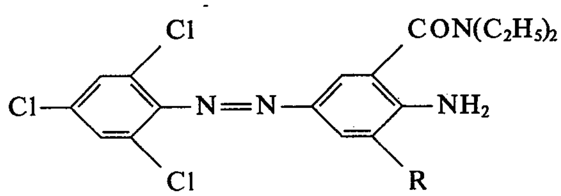

desgl.

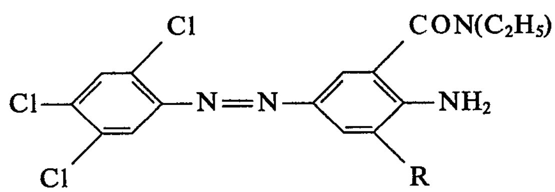

desgl.

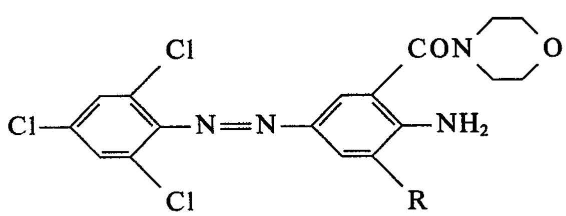

desgl.

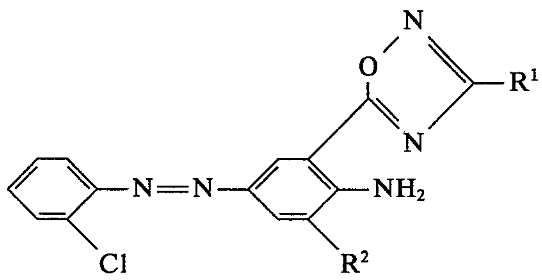

$R^1 = C_2H_5$, $CH_2OCH_3$,
$C_2H_4OCH_3$,
$C_2H_4OC_3H_7$,
$C_2H_4OCH_2$– 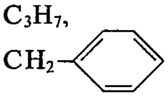
$C_6H_5$, 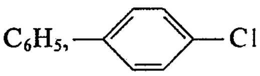
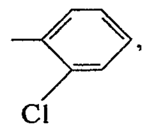, 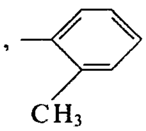

$R^2$ = H, Br, Cl

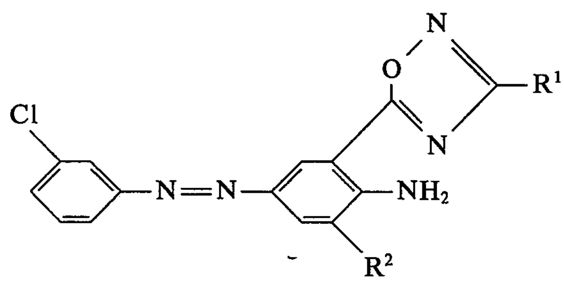

desgl.

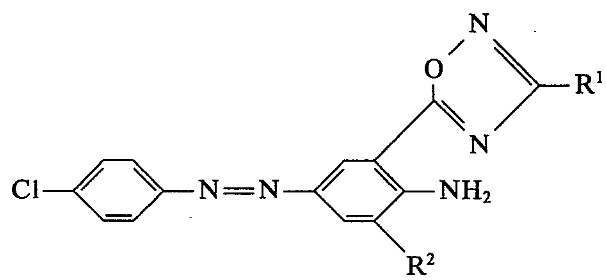

desgl.

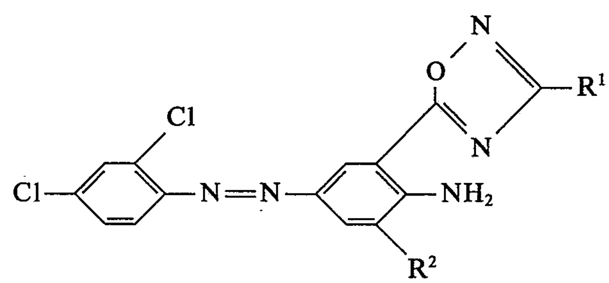

desgl.

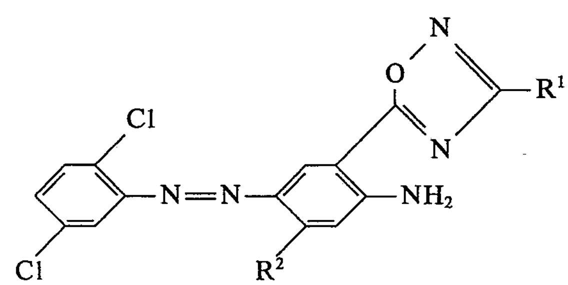

desgl.

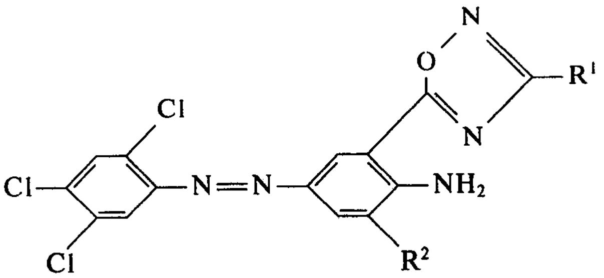

$R^1 = C_2H_5$, $CH_2OCH_3$, $C_2H_4OCH_3$, $C_2H_4OC_3H_7$,

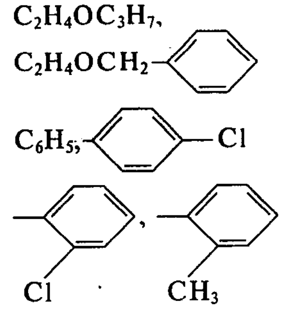

$R^2$ = H, Br, Cl

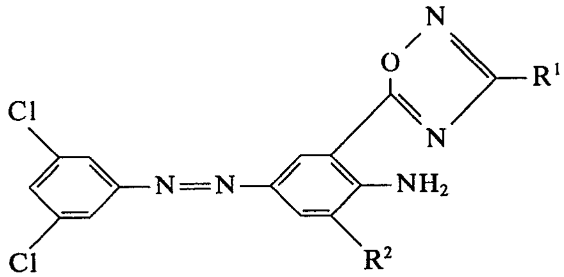

desgl.

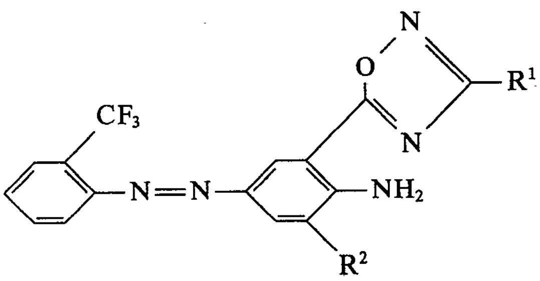

desgl.

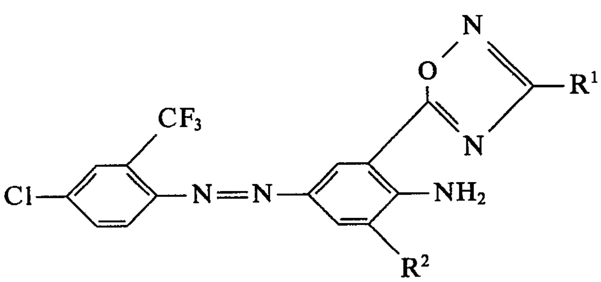

desgl.

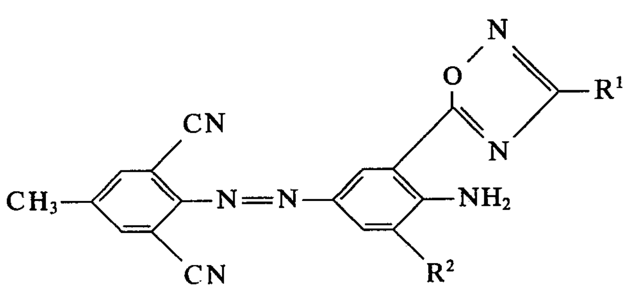

desgl.

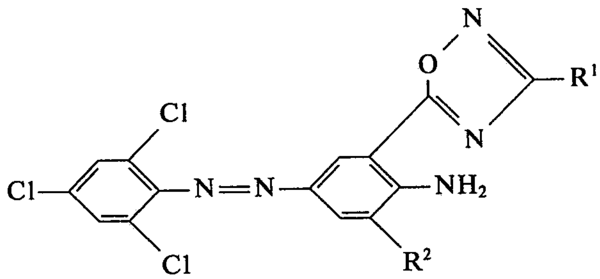

$R^1$ = $C_2H_5$, $CH_2OCH_3$, $C_2H_4OCH_3$, $C_2H_4OC_3H_7$, $C_2H_4OCH_2$– 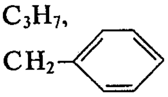 $C_6H_5$, 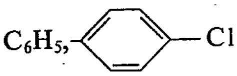 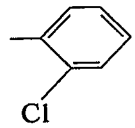, 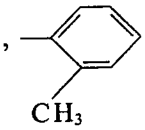

$R^2$ = H, Br, Cl

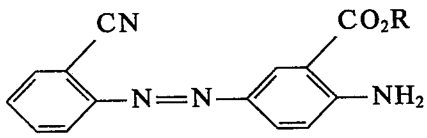

R = H, Br

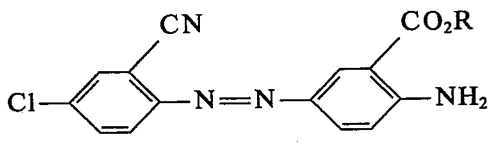

R = H, Br

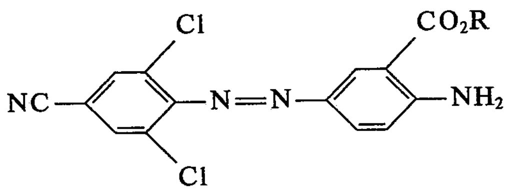

R = H, Br

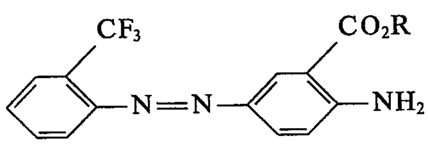

R = H, Br

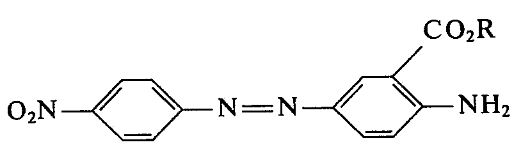

R = H, Br

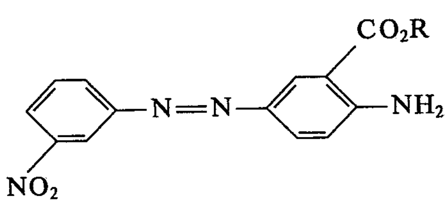

R = H, Br

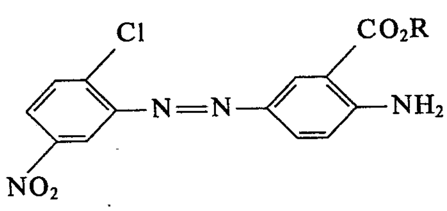

R = H, Br

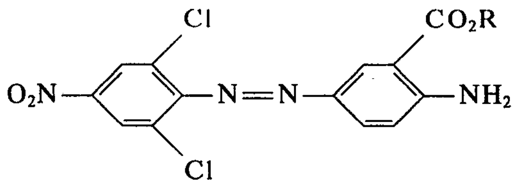

R = H, Br

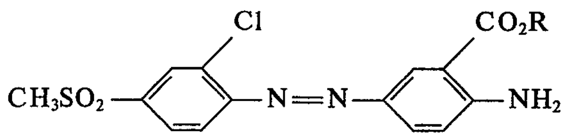

R = H, Br

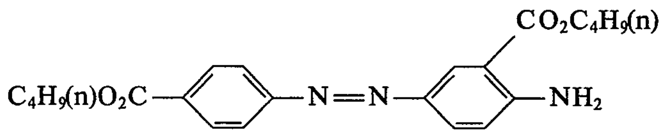

R = H, Br

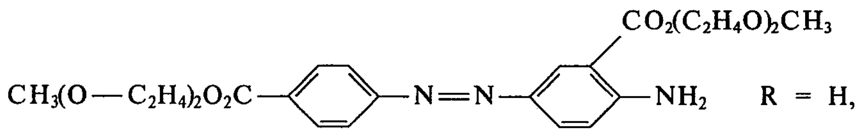

R = H, Br

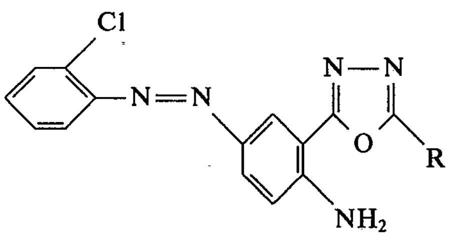

R = $CH_2$, $C_2H_5$, $C_3H_7$, $C_6H_9$, $C_6H_5$, o, m, p-Cl—$C_5H_4$

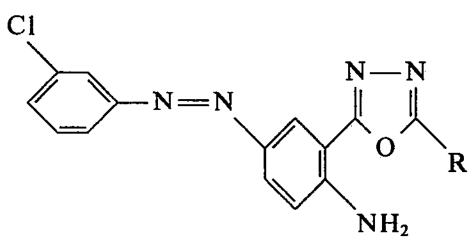

desgl.

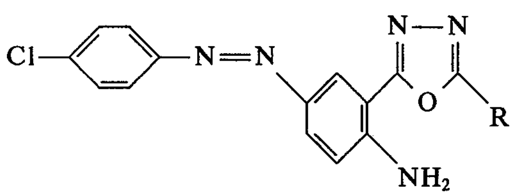

R = $CH_2$, $C_2H_5$, $C_3H_7$, $C_6H_9$, $C_6H_5$, o, m, p-Cl—$C_6H_4$

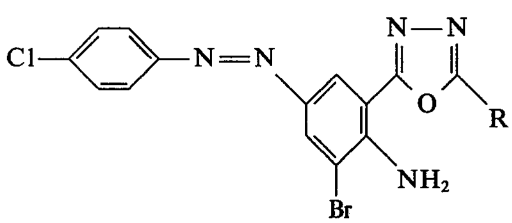

desgl.

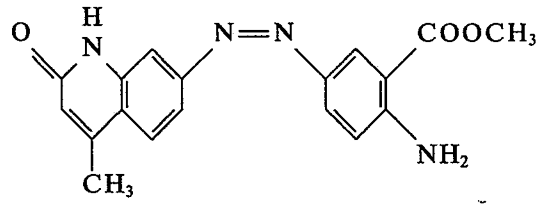

R = $CH_2$, $C_2H_5$, $C_3H_7$, $C_6H_9$, $C_6H_5$, o, m, p-Cl—$C_6H_4$

Von besonderer technischer Bedeutung sind z.B. die Kupplungskomponenten der Formeln

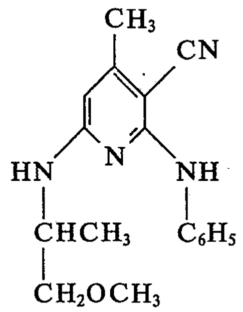
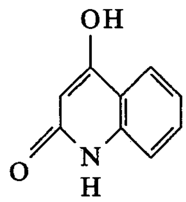
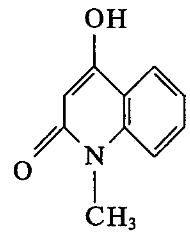
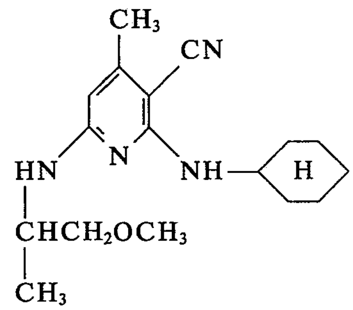

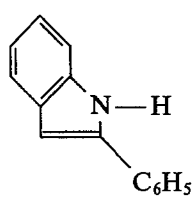
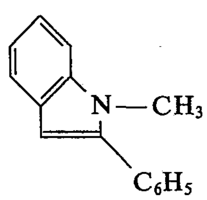
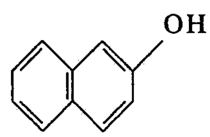

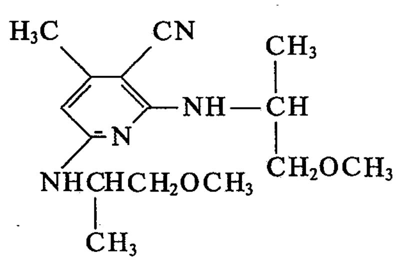
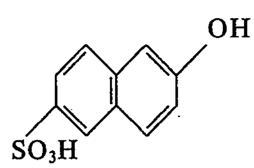
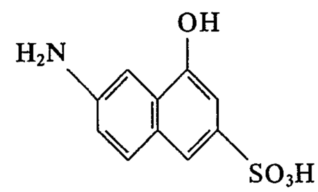

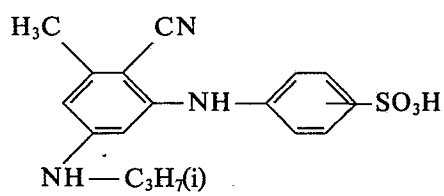
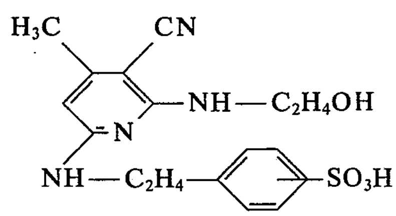

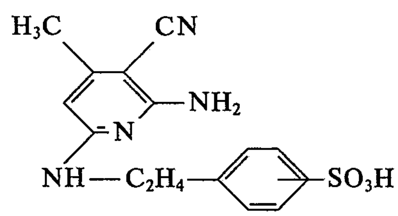
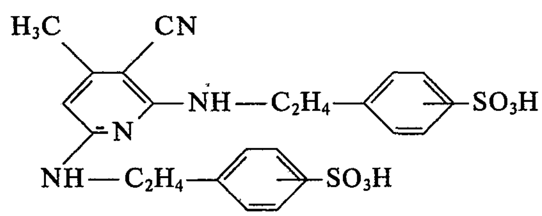

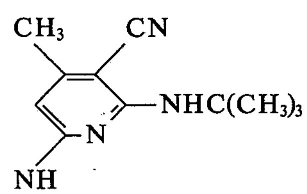
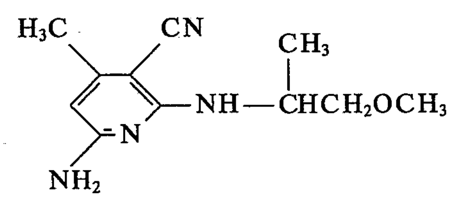

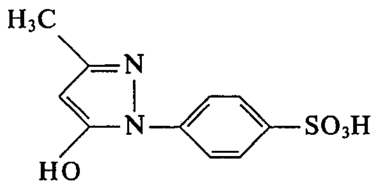

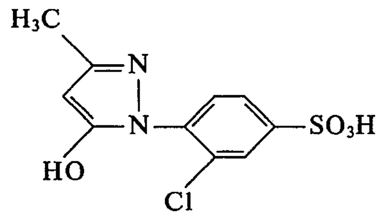

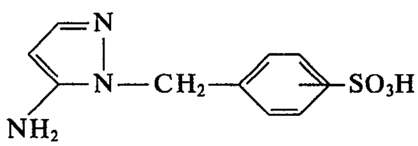

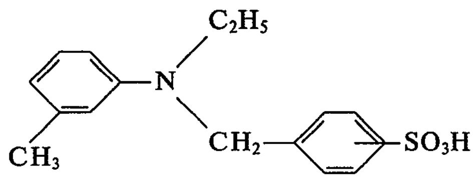

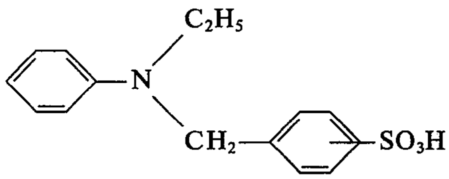

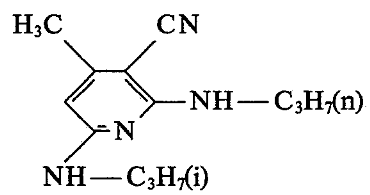

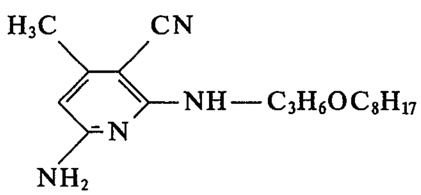

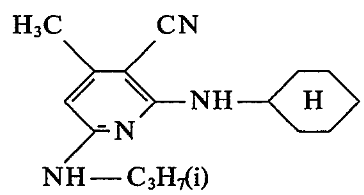

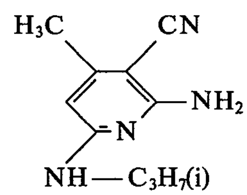

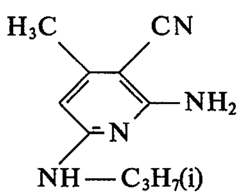

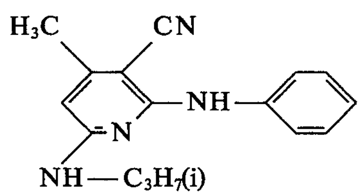

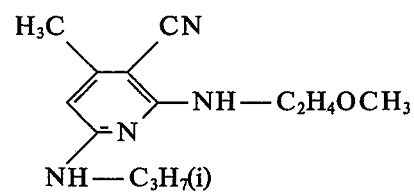

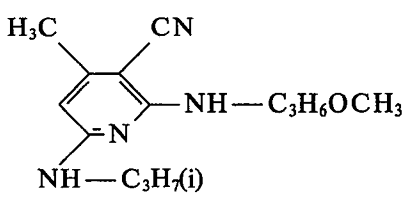

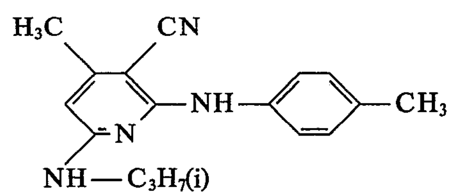

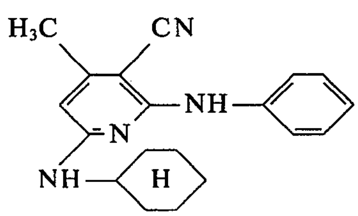

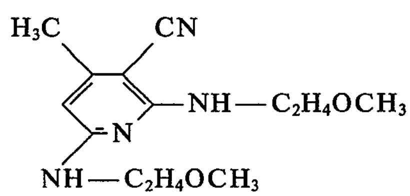

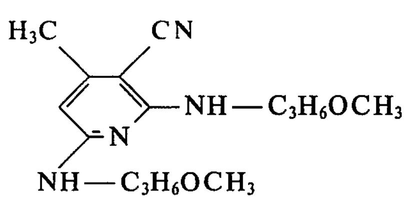

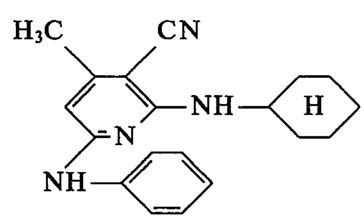

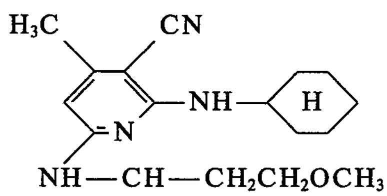

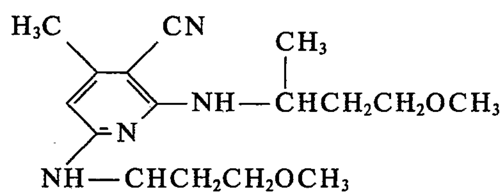

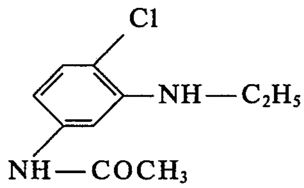

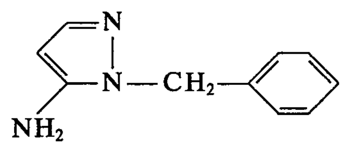

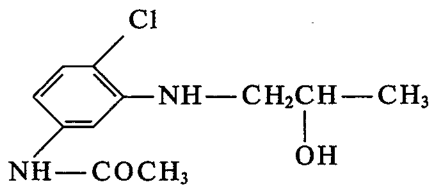

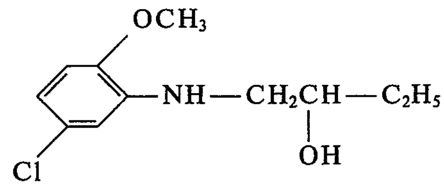

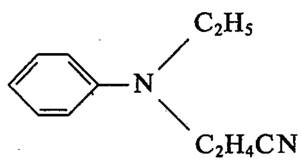

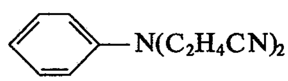

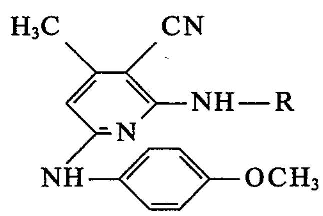

R = $C_2H_4OCH_3$,
$-C_3H_6OCH_3$(n),
$-CH-CH_2OCH_3$,
$CH_3$
$-CH-CH_2OCH_3$,
$C_2H_5$
$-C_2H_4OC_2H_5$,
$-C_3H_6OC_2H_5$

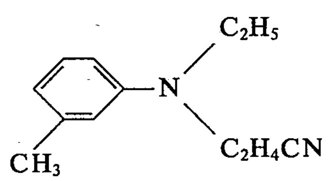

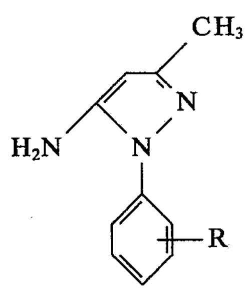

R = o, m, p, Chlor

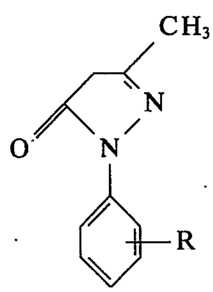

R = H, o, m, p, Chlor, Methyl, $SO_2NH_2$, $SO_2NHAr$

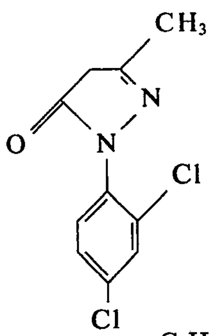

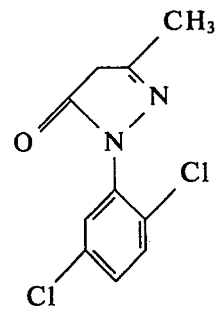

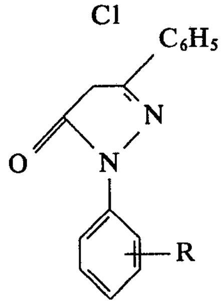

R = H, o, m, p, Chlor, Methyl, $SO_2NH_2$, $SO_2NHAr$

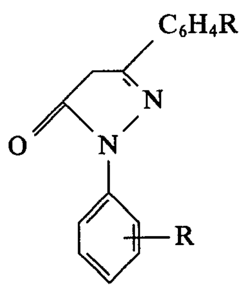

desgl.

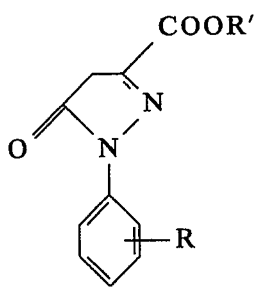

desgl.

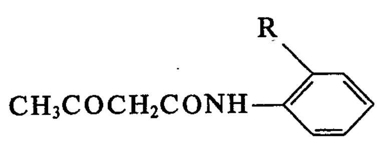

R = $OCH_3$, $OC_2H_5$, $OC_4H_9$, $CH_3$, $C_2H_5$, Cl, $OC_6H_5$

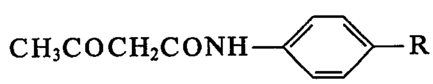

desgl.

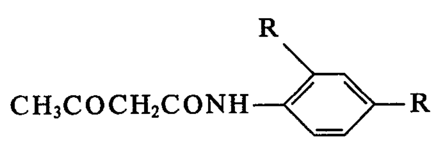

desgl.

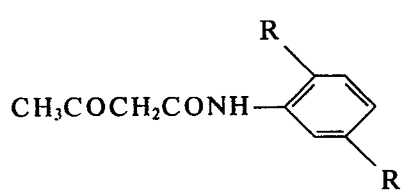

desgl.

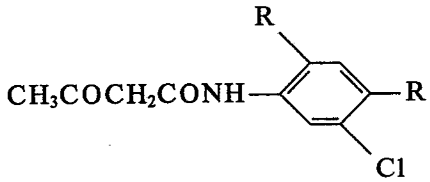

R = $OCH_3$, $OC_2H_5$, $OC_4H_9$, $CH_3$, $C_2H_5$, Cl, $OC_6H_5$

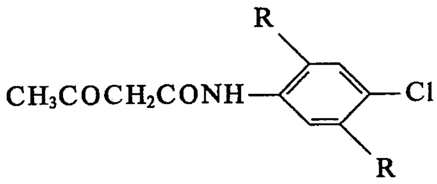

desgl.

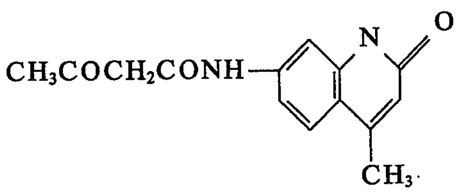

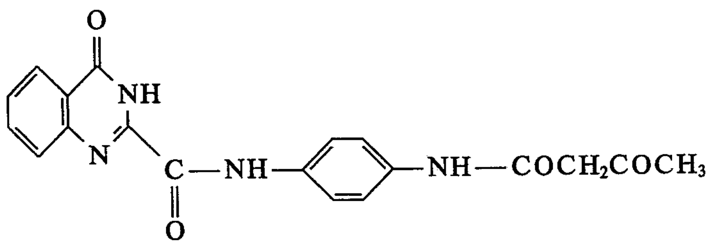

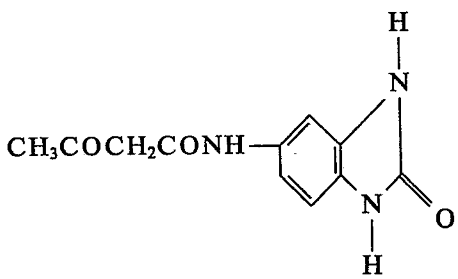

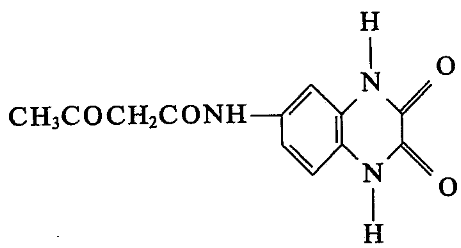

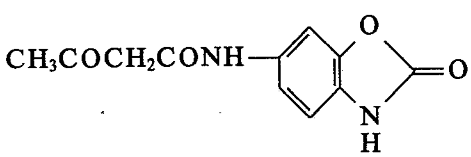

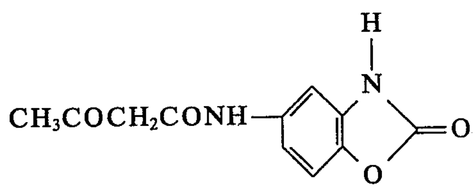

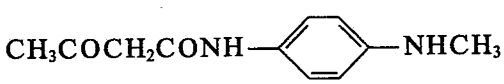

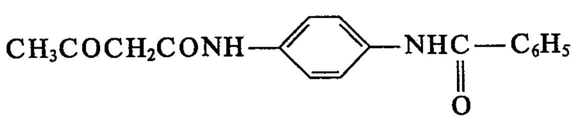

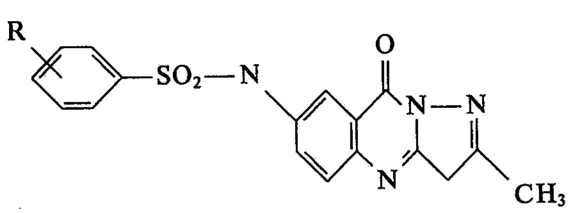

R = o, m, p, Chlor, $CH_3$

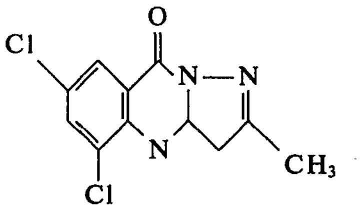 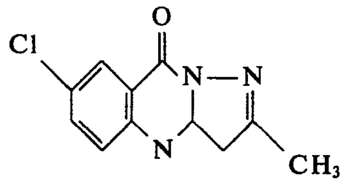

Die erfindungsgemäßen Farbstoffe eignen sich sehr gut zum Färben von synthetischen Polyestern sowie von Baumwolle und Mischgeweben aus Baumwolle und Polyestern nach der Fixierdruckmethode. Die sulfonsäuregruppenhaltigen Farbstoffe sind insbesondere für Polyamide und Leder geeignet, die basischen für Acrylnitrilpolymerisate. Die Färbungen zeichnen sich durch ein gutes Echtheitsniveau aus. Erfindungsgemäße Pigmente sind für die üblichen Anwendungszwecke brauchbar.

Gegenüber Farbstoffen des Standes der Technik (DE-A-2 718 883 und US-A-4 083 844), die im Benzring (siehe Formel I) eine Cyangruppe tragen, zeichnen sich erfindungsgemäße Verbindungen mit einer nächtsvergleichbaren Estergruppe durch bessere Licht- und Waschechtheiten der Färbungen auf Baumwolle und Polyester-Baumwolle aus.

Beispiel 1

91 Teile der Diazokomponente der Formel

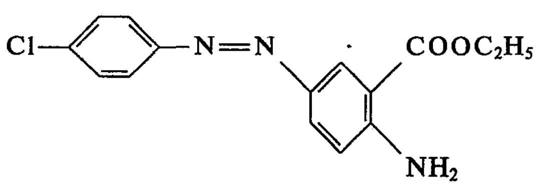

werden in 150 Teilen konzentrierter Salzsäure unter Zusatz von 4,5 Teilen Dispergiermittel und 150 Teilen $H_2O$ über Nacht gerührt. Man verdünnt mit 750 Teilen Eis und Wasser, läßt dann 120 Teile einer wäßrigen 23%igen Natriumnitritlösung zulaufen und rührt 2—3 Stunden bei 5—10°C, wobei eine dunkel gefärbte Lösung entsteht. Nach Zerstören von überschüssigem Nitrit mit Amidosulfonsäure läßt man die Diazoniumsalzlösung in folgende Suspension einlaufen.

63 Teile 1-(3-Chlorphenyl)-3-methyl-pyrazolon-(5) werden in 1000 Teilen Wasser mit Natronlauge gelöst und mit verdünnter Essigsäure wieder ausgefällt. Nach beendigtem Zulauf stellt man durch Zutropfen von 25%iger Natronlauge einen pH-Wert von 3,5 ein und rührt eine Stunde nach. Danach wird abgesaugt, gewaschen und getrocknet. Man erhält 150 Teile eines orangeroten Pulvers der Formel

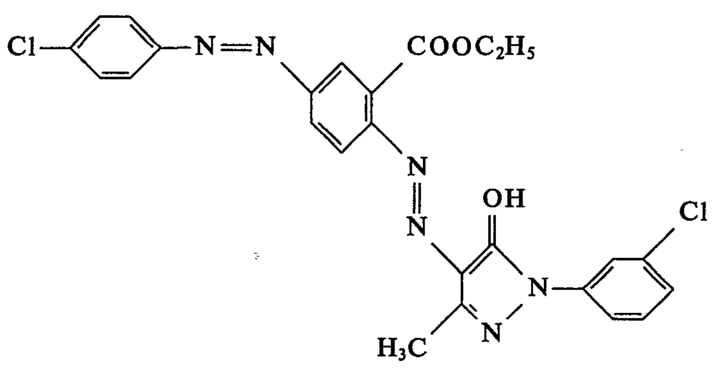

das Polyester/Baumwoll-Mischgewebe in kräftigen, gelben Tönen mit hervorragenden Echtheiten färbt.

Analog zu der in Beispiel 1 beschriebenen Arbeitsweise können z. B. die in der Tabelle 1 benannten Farbstoffe hergestellt werden.

Absorptionsspektren von Farbstoffen wurden, wenn nicht anders angegeben, in Dimethylformamid-Lösung aufgenommen.

Tabelle 1

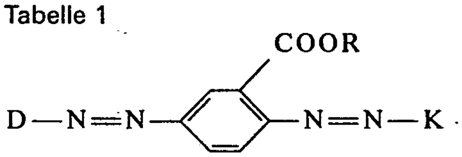

| Bsp. | D | R | K | Farbton | λ max. (nm) |
|---|---|---|---|---|---|
| 1 | 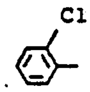 | $CO_2C_2H_5$ | 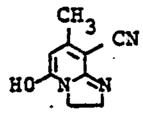 | orange | |
| 2 | " | $CO_2C_2H_4OCH_3$ | " | " | |
| 3 | " | $CO_2CH_2CH(CH_3)-OCH_3$ | " | " | |
| 4 | 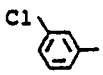 | " | " | " | |
| 5 | " | " | 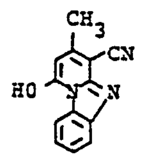 | " | |
| 6 | " | $CO_2H$ | 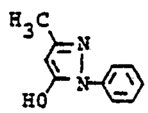 | goldgelb | |
| 7 | 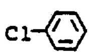 | " | " | " | |
| 8 | 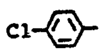 | " | 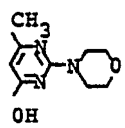 | " | |
| 9 | 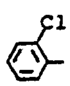 | $CO_2CH_3$ | 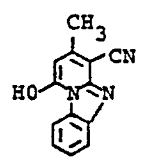 | rotorange | |
| 10 | " | $CO_2C_2H_4OCH_3$ | " | " | |
| 11 | " | $CO_2C_4H_9$(n) | 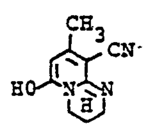 | orange | |
| 12 | " | " | 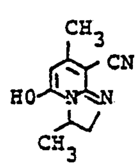 | " | |
| 13 | " | $CO_2C_6H_{13}$(n) | " | " | |

Beispiel 2

32,1 Teile der Diazokomponente der Formel

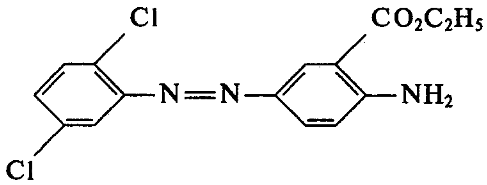

werden analog der in Beispiel 1 beschriebenen Arbeitsweise diazotiert. Nach Zerstören von überschüssiger salpetriger Säure gibt man die erhaltene Diazoniumsalzlösung zu 18,8 Teilen N,N-Cyanäthyl-äthyl-m-toluidin, die in 500 Raumteilen Wasser mit 20 Raumteilen Salzsäure gelöst wurden.

Zur Beschleunigung der Kupplungsreaktion hebt man den pH-Wert des Gemisches durch Zugabe von Natriumformiatlösung auf pH 1,0 bis 2,0 an. Sobald die Kupplung beendet ist, saugt man ausgefallenes Produkt ab, wäscht mit Wasser und trocknet. Man erhält 50,1 Teile eines rotbraunen Pulvers, das sich in Dimethylformamid mit dunkelroter Farbe löst. Der Farbstoff hat die Formel

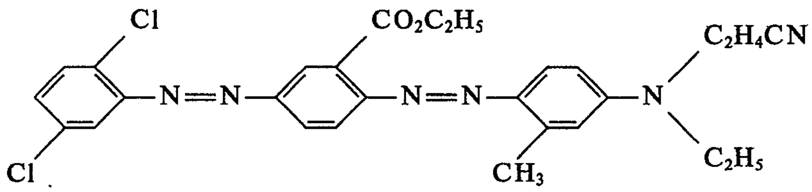

und färbt Polyester sowie Baumwolle und Mischgewebe aus Polyester und Baumwolle in kräftigen braunstichig roten Tönen an. Die erhaltenen Färbungen haben ein hohes Echtheitsniveau.

Analog zu der in Beispiel 2 beschriebenen Arbeitsweise lassen sich z. B. die in der Tabelle 2 beschriebenen Farbstoffe herstellen.

Tabelle 2

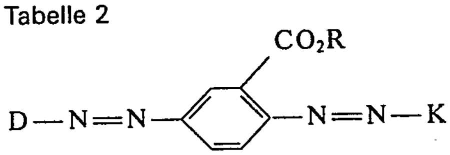

| Nr. | D | R | K | Farbton | $\lambda$max. (nm) in $(CH_3)_2NCHO$ |
|---|---|---|---|---|---|
| 1 | 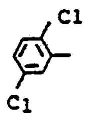 | $CH_3$ | 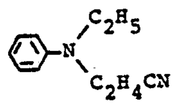 | braunsti-chig rot | |
| 2 | " | $C_2H_4OCH_3$ | " | " | |
| 3 | " | " | 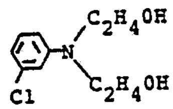 | rotbraun | |
| 4 | " | " | 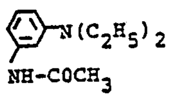 | rotviolett | |
| 5 | " | $CH_3$ | 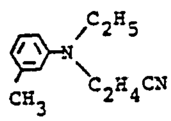 | rotbraun | |
| 6 | 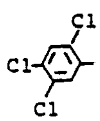 | " | " | bordo | |
| 7 | " | " | 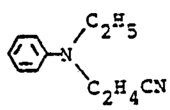 | braunsti-chig rot | 507 |
| 8 | 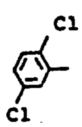 | " | " | " | 490 |
| 9 | " | " | 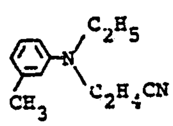 | " | 504 |
| 10 | 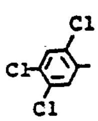 | " | 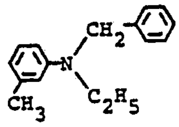 | bordo | 533 |
| 11 | " | " | 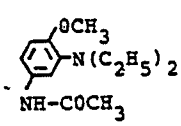 | blau | 577 |

Fortsetzung

| Nr. | D | R | K | Farbton | λmax. (nm) in $(CH_3)_2NCHO$ |
|---|---|---|---|---|---|
| 12 | 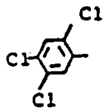 | $CH_3$ | 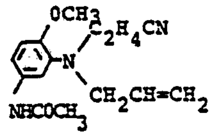 | blau-violett | 546 |
| 13 | 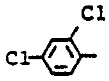 | " | 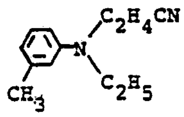 | rotbraun | 511 |
| 14 | 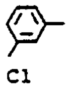 | " | 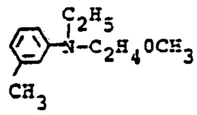 | " | |
| 15 | " | $C_2H_5$ | 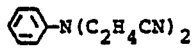 | orange | |
| 16 | " | " | 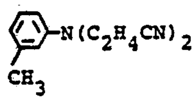 | rotorange | |
| 17 | 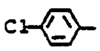 | " | 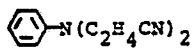 | orange | |
| 18 | 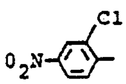 | " | 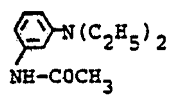 | rotsti-chig blau | |
| 19 | " | " | 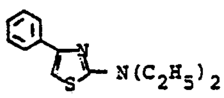 | blau | 569 |
| 20 | 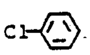 | $C_3H_7(n)$ | 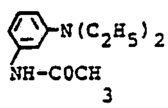 | bordo | |
| 21 | " | $CH_2CH_2OCH_3$ | 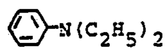 | rot | |
| 22 | 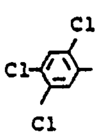 | 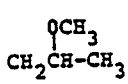 | 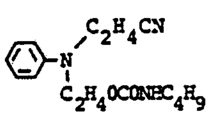 | bordo | 517 |
| 23 | 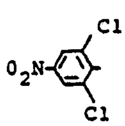 | $CH_3$ | 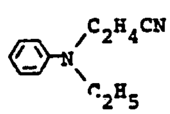 | rotbraun | 505 |

Fortsetzung

| Nr. | D | R | K | Farbton | λmax. (nm) in $(CH_3)_2NCHO$ |
|---|---|---|---|---|---|
| 24 | 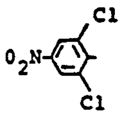 | $C_2H_4OCH_3$ | 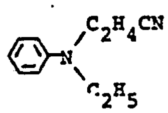 | rotbraun | 507 |
| 25 | " | 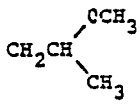 | " | " | 506 |
| 26 | 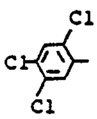 | $CH_3$ | 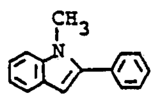 | braunstichig rot | |
| 27 | " | $C_3H_7$(n) | " | " | |
| 28 | 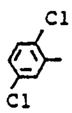 | $CH_3$ | 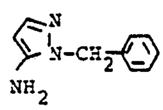 | gelbstichig rot | |
| 29 | " | $CH_2CH_2OCH_3$ | " | " | |
| 30 | " | $CH_3$ | 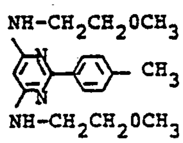 | bordo | |
| 31 | " | " | 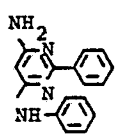 | braunstichig rot | 503 |
| 32 | " | " | 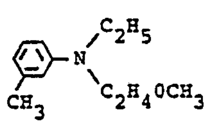 | rot | |
| 33 | 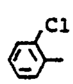 | $C_6H_{13}$(n) | " | " | |
| 34 | 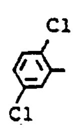 | $CH_3$ | 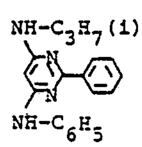 | bordo | 516 |
| 35 | 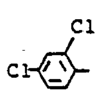 | " | 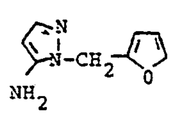 | scharlach | 481 |

Fortsetzung

| Nr. | D | R | K | Farbton | λmax. (nm) in $(CH_3)_2NCHO$ |
|---|---|---|---|---|---|
| 36 | 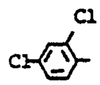 | $CH_3$ | 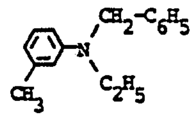 | bordo | 522 |
| 37 | 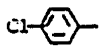 | " | 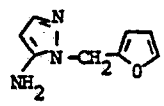 | orange | 475 |
| 38 | " | $CH_2CH_2OCH_3$ | " | " | 473 |
| 38 | 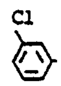 | $CH_3$ | " | " | 470 |
| 39 | 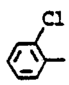 | " | " | " | 474 |
| 40 | " | " | 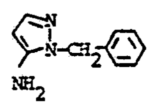 | " | 473,5 |
| 41 | " | " | 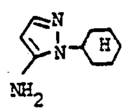 | scharlach | 477 |

| Nr. | D | R | K | Farbton | λmax. (nm) in DMF |
|---|---|---|---|---|---|
| 42 | 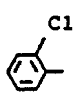 | $CH_3$ | 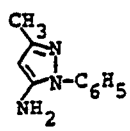 | scharlach | 475 |
| 43 | " | " | 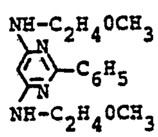 | bordo | 500 |
| 44 | " | " | 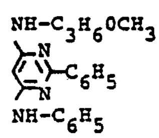 | " | 514 |
| 45 | 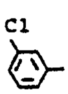 | $C_2H_5$ | 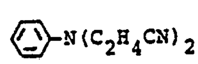 | orange | |
| 46 | 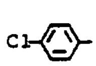 | " | " | " | |

Fortsetzung

| Nr. | D | R | K | Farbton | λmax. (nm) in DMF |
|---|---|---|---|---|---|
| 47 | 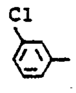 | $C_2H_5$ | 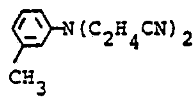 | orange | |
| 48 | " | 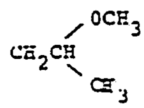 | " | " | |
| 49 | " | $CH_2CH_2OCH_3$ | " | " | |
| 50 | " | " | 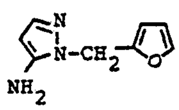 | " | 475 |
| 51 | 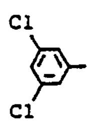 | 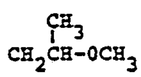 | 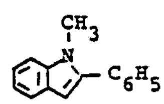 | rotbraun | |
| 52 | 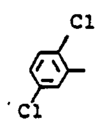 | " | 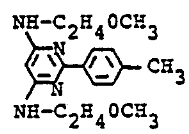 | bordo | 510 |
| 53 | " | $CH_2CH_2OCH_3$ | 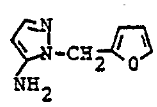 | scharlach | 486 |
| 54 | " | " | 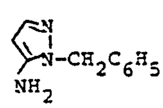 | " | |
| 55 | 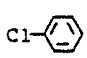 | $C_4H_9$(n) | 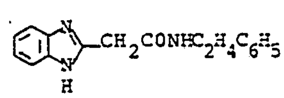 | grünsti-chig gelb | |
| 56 | 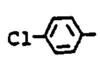 | " | 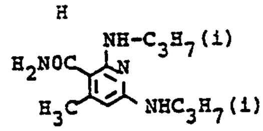 | bordo | |
| 57 | 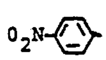 | $CH_3CH_2OCH_3$ | 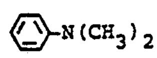 | braun | |
| 58 | " | $CH_3$ | 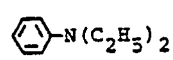 | " | 517 |
| 59 | " | " | 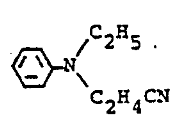 | " | 507 |

Fortsetzung

| Nr. | D | R | K | Farbton | λmax. (nm) in DMF |
|---|---|---|---|---|---|
| 60 | 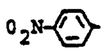 | $CH_3$ | 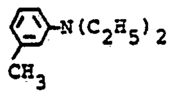 | violett | 544 |
| 61 | " | " | 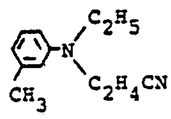 | rotbraun | 517 |
| 62 | 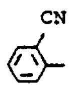 | $C_3H_7$(n) | 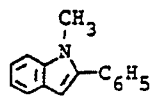 | " | |
| 63 | " | $CH_2CH_2OCH_3$ | 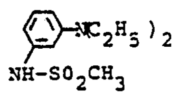 | rot | |
| 64 | 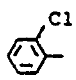 | " | " | " | |
| 65 | 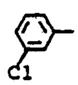 | " | " | " | |
| 66 | " | $CH_3$ | " | " | |
| 67 | " | $C_2H_5$ | " | " | |

Beispiel 3

30,0 Teile der Diazokomponente der Formel

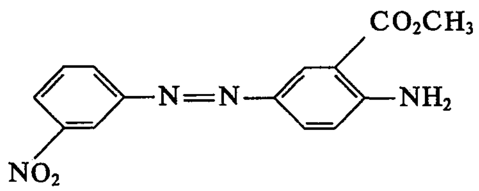

werden analog zu der in Beispiel 1 beschriebenen Arbeitsweise diazotiert. Man erhält eine klare Diazoniumsalzlösung, die mit einer Lösung von 26,6 Teilen der Kupplungskomponente der Formel

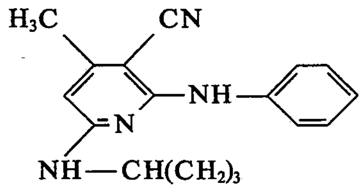

in 200 Raumteilen Eisessig vereinigt wird.

Nach Anheben des pH-Wertes der Kupplung mit Natronlauge auf pH 1,5 bis 2,5 verläuft die Kupplungsreaktion rasch. Man rührt 2 Stunden nach, saugt den ausgefallenen Farbstoff ab, wäscht ihn mit Wasser salzfrei und trocknet. Man erhält 55,5 Teile eines dunkelroten Pulvers, das sich in Dimethylformamid mit blaustichig roter Farbe löst und Polyester, Baumwolle sowie Mischgewebe aus Polyester und Baumwolle in kräftigen blaustichig roten Tönen mit vorzüglichen Licht-, Thermofixier- und Naßechtheiten färbt. Die Farbtonübereinstimmung der Färbungen auf den verschiedenen Textilmaterialien ist gut.

Der Farbstoff hat die Formel

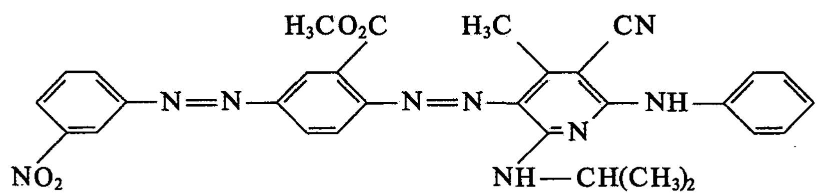

Analog zur im Beispiel 3 beschriebenen Arbeitsweise wurden z. B. die in der Tabelle 3 beschriebenen Farbstoffe hergestellt.

Tabelle 3

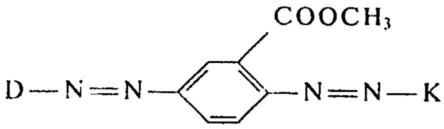

| Nr. | D | K | Farbton | λmax. (nm) in DMF |
|---|---|---|---|---|
| 1 | 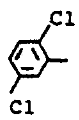 | 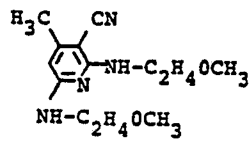 | bordo | 517 |
| 2 | 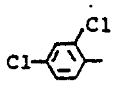 | " | " | 518 |
| 3 | " | 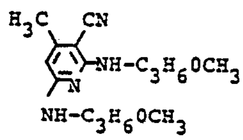 | " | 520 |
| 4 | 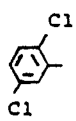 | " | " | 522 |
| 5 | 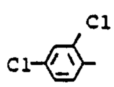 | 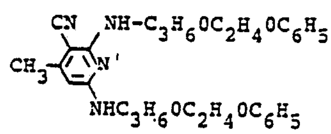 | " | 521,5 |
| 6 | 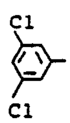 | " | " | |
| 7 | 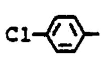 | 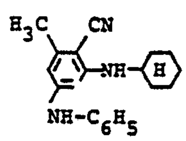 | blaustichig rot | |
| 8 | 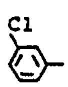 | " | " | 515 |
| 9 | 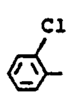 | " | rot | 518 |
| 10 | 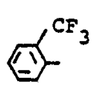 | " | " | |
| 11 | 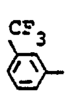 | " | " | |

Fortsetzung

| Nr. | D | K | Farbton | λmax. (nm) in DMF |
|---|---|---|---|---|
| 12 | 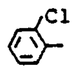 | 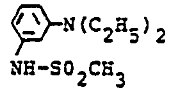 | blaustichig rot | |
| 13 | 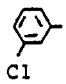 | " | " | |
| 14 | 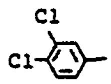 | 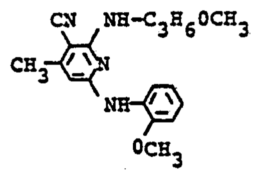 | " | 512 |
| 15 | 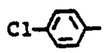 | " | rot | 507 |
| 16 | 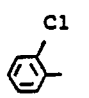 | 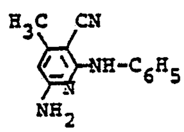 | " | 502 |
| 17 | " | 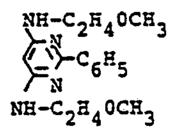 | " | 500 |
| 18 | " | 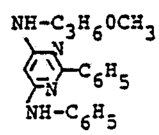 | " | 514 |
| 19 | 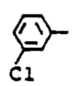 | 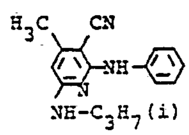 | " | |
| 20 | 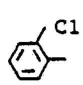 | " | " | |
| 21 | 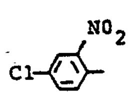 | 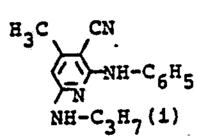 | bordo | 527 |
| 22 | 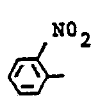 | " | rot | 516,5 |

Fortsetzung

| Nr. | D | K | Farbton | $\lambda$max. (nm) in DMF |
| --- | --- | --- | --- | --- |
| 23 | 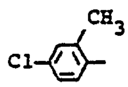 | 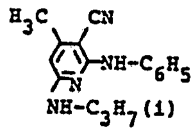 | rot | |
| 24 | 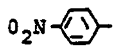 | " | bordo | 530 |
| 25 | 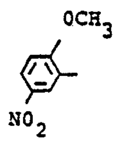 | " | " | |
| 26 | 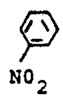 | " | rot | |
| 27 | 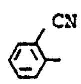 | " | bordo | |
| 27 a | 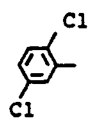 | 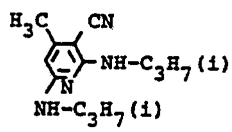 | " | |
| 28 | " | 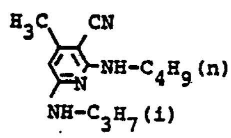 | " | 517 |
| 29 | " | 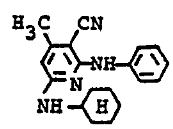 | " | 524 |
| 30 | 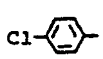 | " | rot | |
| 31 | 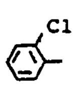 | " | " | 516,5 |
| 32 | 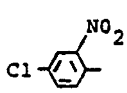 | " | rotviolett | 530,5 |
| 33 | 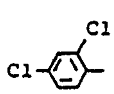 | " | bordo | |

Fortsetzung

| Nr. | B | K | Farbton | λmax (nm) in DMF |
|---|---|---|---|---|
| 34 | 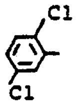 | 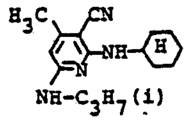 | blaustichig rot | 521 |
| 35 | 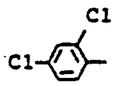 | " | " | 522,5 |
| 36 | 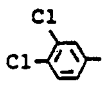 | " | " | |
| 37 | 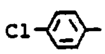 | " | rot | |
| 38 | 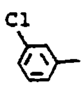 | " | " | |
| 39 | 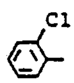 | " | " | 514 |
| 40 | 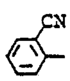 | " | bordo | |
| 41 | 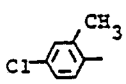 | " | rot | 509 |
| 42 | 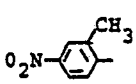 | " | bordo | 529 |
| 43 | 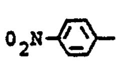 | " | " | 527 |
| 44 | 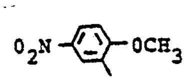 | " | " | |
| 45 | 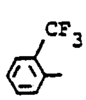 | 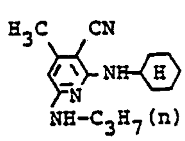 | rot | |
| 46 | 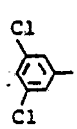 | " | bordo | |

Fortsetzung

| Nr. | D | K | Farbton | λmax. (nm) in DMF |
|---|---|---|---|---|
| 47 | 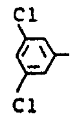 | 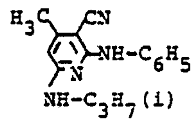 | bordo | |
| 48 | 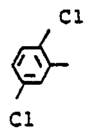 | " | blaustichig rot | 525 |
| 49 | 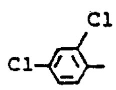 | " | " | 520 |
| 50 | 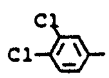 | " | " | |
| 51 | 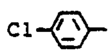 | " | rot | |
| 52 | 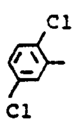 | 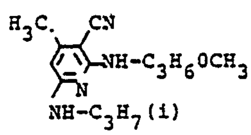 | bordo | 522 |
| 53 | " | 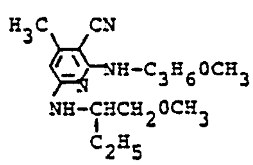 | " | 521 |
| 54 | 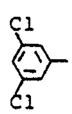 | " | " | |
| 55 | 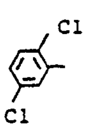 | " | " | |
| 56 | " | 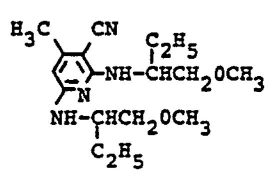 | " | |

Fortsetzung

| Nr. | D | K | Farbton | λmax. (nm) in DMF |
|---|---|---|---|---|
| 57 | 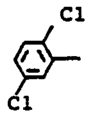 | 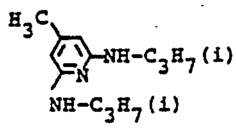 | rotstichig blau | |
| 58 | 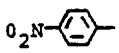 | 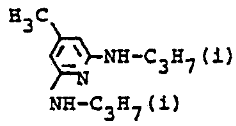 | rotstichig blau | |
| 59 | 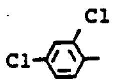 | 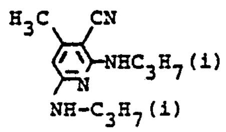 | blaustichig rot | |
| 60 | 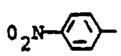 | " | bordo | 526 |
| 61 | 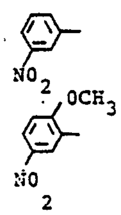 | " | " | |
| 62 | | " | " | |
| 63 | 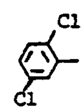 | 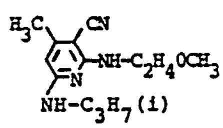 | blaustichig rot | 517,5 |
| 64 | " | 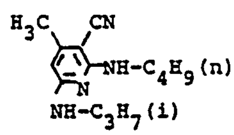 | bordo | 519 |
| 65 | " | 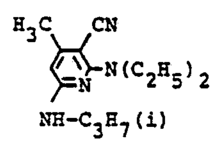 | " | 522 |
| 66 | " | 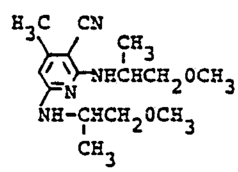 | " | |
| 67 | 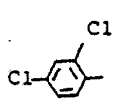 | " | rubin | |

Beispiel 4

34,0 Teile der Diazokomponente der Formel

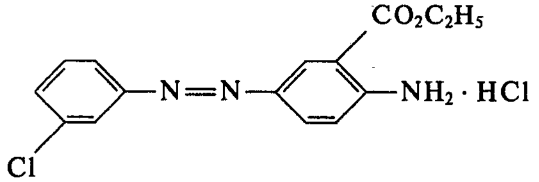

werden in 45 Raumteile einer 30%igen Salzsäure eingerührt. Dazu gibt man 1,5 Teile eines Dispergiermittels und 45 Raumteile Wasser. Das Gemisch wird über Nacht gerührt und dann durch Zugabe von ca. 200 Teilen Eis auf 0°C abgekühlt. Man tropft 40 Raumteile einer 23%igen Natriumnitrit-Lösung innerhalb von 15 Minuten zu und rührt die Diazotierung noch 1 bis 2 Stunden bei 0–7°C nach. Es entsteht eine klare Lösung. Falls geringe Anteile eines unlöslichen Rückstandes vorhanden sein sollten, wird die Diazoniumsalzlösung filtriert. Nach Zerstören überschüssiger salpetriger Säure läßt man die Diazoniumsalzlösung in folgendes Gemisch einlaufen:

14,5 Teile β-Naphthol werden in 1500 Raumteilen Wasser mit Natronlauge bei pH 10–12 gelöst. Nach Abkühlen des Gemisches auf 10°C setzt man 50 Teile Natriumcarbonat zu und beginnt mit dem Zulauf der Diazoniumsalzlösung. Während des Zulaufs gibt man unter sehr gutem Rühren 50%ige Natronlauge so hinzu, daß der pH-Wert der Kupplung zwischen 9,0 und 11,0 gehalten wird.

Nach Zugabe der Diazoniumsalzlösung ist die Kupplung innerhalb weniger Minuten beendet. Ausgefallener Farbstoff wird abgesaugt, mit Wasser neutral gewaschen und getrocknet.

Man erhält 33 Teile eines roten Pulvers der Formel

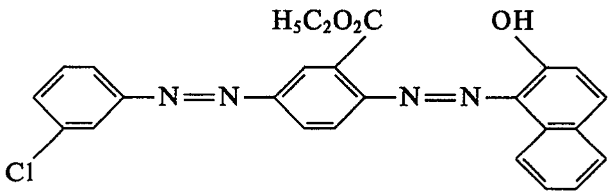

das sich in N-Methylpyrrolidon mit roter Farbe löst und Polyäthylenterephthalatgewebe in brillanten gelbstichig roten Tönen färbt.

Analog der in Beispiel 4 beschriebenen Arbeitsweise wurden z.B. die in der folgenden Tabelle 4 beschriebenen Farbstoffe hergestellt.

Tabelle 4

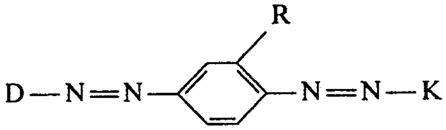

| Nr. | D | R | K | Farbton | $\lambda$max. (nm) in DMF |
|---|---|---|---|---|---|
| 1 | 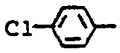 | $COOC_6H_{13}$(n) | 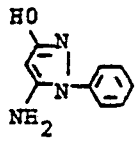 | gelbstichig rot | |
| 2 | 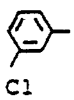 | $CO_2C_6H_{13}$(n) | 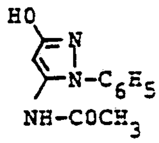 | gelbstichig rot | |
| 3 | " | $CO_2$-$C_2H_4OC_4H_9$(i) | " | " | |
| 4 | 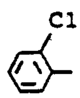 | $CO_2CH_3$ | 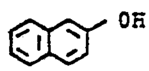 | scharlach | |
| 5 | " | $CO_2C_2H_4OCH_3$ | " | " | |
| 6 | 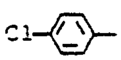 | | " | " | 513 |
| 7 | " | $CO_2C_3H_7$(n) | " | " | |
| 8 | " | $CO_2C_3H_7$(n) | 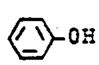 | gelb | |
| 9 | " | $CO_2C_4H_9$(n) | " | " | |
| 10 | " | 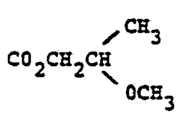 | 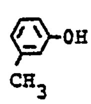 | " | |
| 11 | 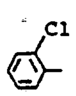 | $CO_2C_3H_7$(i) | 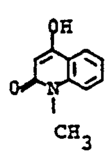 | gelb | 445 |
| 12 | 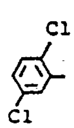 | 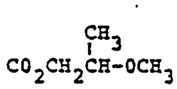 | 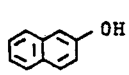 | scharlach | 517 |

Fortsetzung

| Nr. | D | R | K | Farbton | λmax. (nm) in DMF |
|---|---|---|---|---|---|
| 13 | 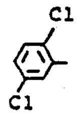 | $CO_2C_2H_4OCH_3$ | 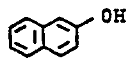 | scharlach | 516 |
| 14 | 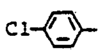 | $CO_2C_4H_9$(n) | 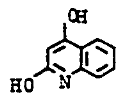 | rotstichig gelb | 455 |
| 15 | 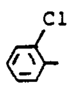 | $CO_2(C_2H_4O)_3CH_3$ | 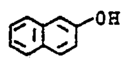 | scharlach | 516 |
| 16 | 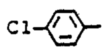 | $CO_2C_6H_{13}$(n) | 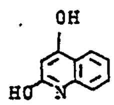 | rotstichig gelb | 456 |
| 17 | 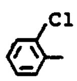 | $CO_2C_6H_{13}$(n) | 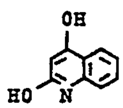 | " | |
| 18 | " | $CON(C_2H_5)_2$ | " | gelb | |
| 19 | 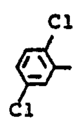 | $CO_2CH_3$ | 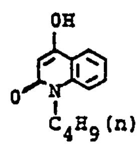 | rotstichig gelb | |
| 20 | 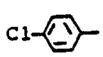 | $CO_2C_6H_{13}$(n) | 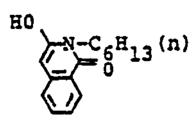 | gelb | |
| 21 | " | " | " | " | |
| 22 | " | $CO_2CH_3$ | " | " | |
| 24 | " | $CO_2C_2H_5$ | 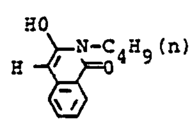 | " | |

Fortsetzung

| Nr. | D | R | K | Farbton | λmax. (nm) in DMF |
|---|---|---|---|---|---|
| 25 | 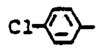 | $CO_2C_2H_5$ | 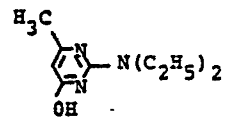 | orange | |
| 26 | " | " | 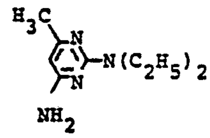 | rotorange | |

Beispiel 5

17,6 Teile der Diazokomponente der Formel

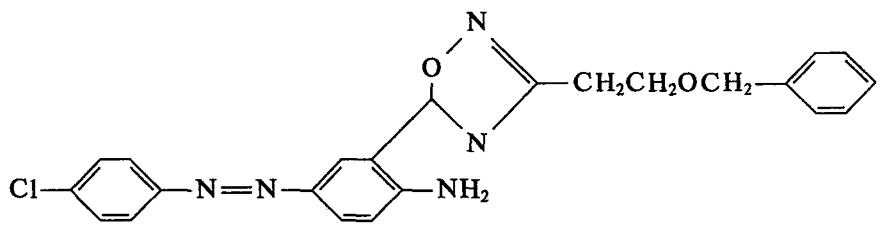

werden mit einem Gemisch aus 80 Raumteilen Eisessig und 20 Raumteilen Propionsäure verrührt. Dann kühlt man die Mischung auf ≤ 10°C ab und tropft bei 5–10°C 14 Teile einer 42–44%igen Nitrosylschwefelsäure-Lösung hinzu. Die Diazotierung rührt 2 bis 3 Stunden und ist dann beendet. Nun gibt man 10 Teile der Kupplungskomponente der Formel

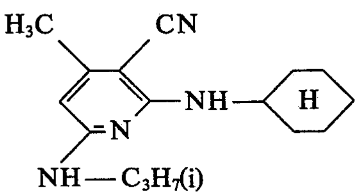

und 1 Teil der Kupplungskomponente der Formel

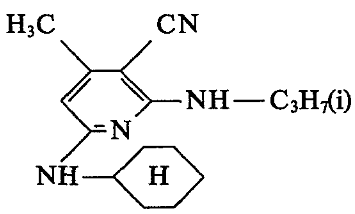

hinzu, rührt 30 Minuten nach und hebt dann den pH-Wert der Kupplung durch Zugabe von Natronlauge auf 2,0 bis 2,5 an. Man erhält eine Ausfällung des Gemisches der Farbstoffe der Formeln

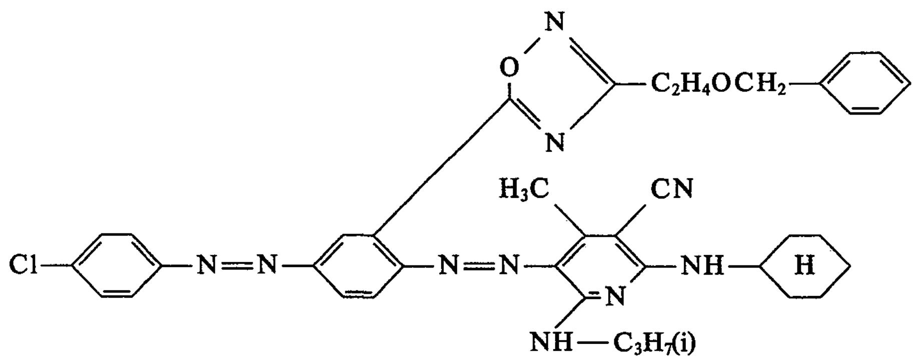

und

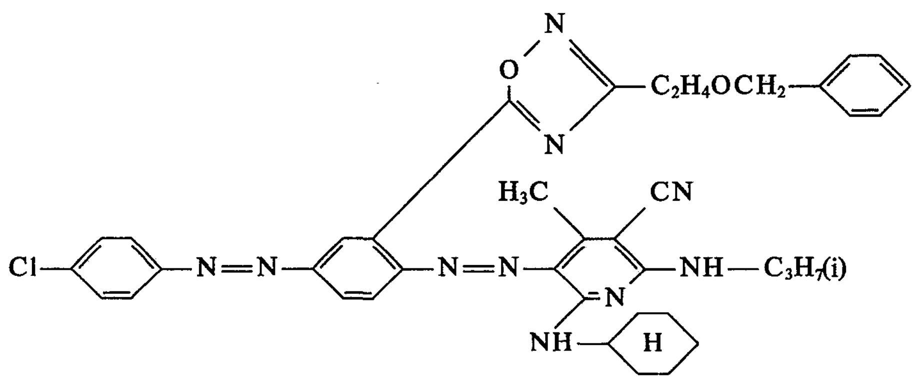

Das Farbstoffgemisch wird wie üblich isoliert, gewaschen und getrocknet. Man erhält 79,3 Teile eines dunkelroten Pulvers, das sich in Dimethylformamid mit blaustichig roter Farbe löst und Baumwolle sowie Polyester als auch Mischgewebe aus beiden Fasern in kräftigen, blaustichig roten Tönen mit vorzüglichen Echtheiten färbt.

Analog zur in Beispiel 5 beschriebenen Arbeitsweise können zum Beispiel die in der Tabelle 5 beschriebenen Farbstoffe hergestellt werden.

Tabelle 5

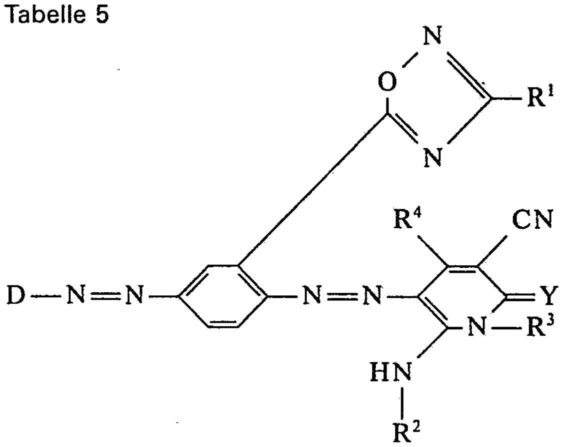

| Nr. | D | $R^1$ | $R^2$ | $R^3$ | Y | $R^4$ | Farbton | λmax. (nm) in DMF |
|---|---|---|---|---|---|---|---|---|
| 1 | 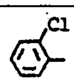 | $C_2H_4OCH_2C_6H_5$ | $C_2H_5$ | H | $NC_2H_5$ | $C_2H_5$ | rot | |
| 2 | " | " | $C_3H_7$(i) | H | $NC_3H_7$(i) | $CH_3$ | " | |
| 3 | " | " | H | $C_4H_9$ | " | $NHC_4H_9$ | orange | |
| 4 | " | $C_2H_4OC_3H_7$(n) | H | " | " | " | " | |
| 5 | " | " | H | H | $NC_4H_9$(n) | $NHC_2H_5$ | rot | |
| 6 | " | $C_2H_4OCH_3$ | H | H | " | " | " | |
| 7 | " | $C_2H_5$ | H | H | NH | $NHC_2H_4C_6H_5$ | gelbstichig rot | |
| 8 | " | " | 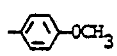 | H | $NH-C_4H_9$ | $CH_3$ | bordo | |
| 9 | " | $CH_3$ | 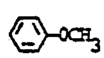 | H | " | " | " | |
| 10 | 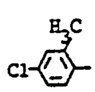 | $C_6H_5$ | $C_3H_6OCH_3$ | H | $NC_3H_6OCH_3$ | " | rot | 518 |
| 11 | 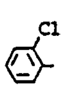 | " | $C_3H_7$(i) | H | $N-C_6H_5$ | " | " | 520 |
| 12 | 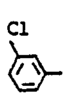 | " | " | H | " | " | " | |
| 13 | " | " | " | H | " | $C_2H_5$ | " | |

Fortsetzung

| Nr. | D | $R^1$ | $R^2$ | $R^3$ | Y | $R^4$ | Farbton | λmax. (nm) in DMF |
|---|---|---|---|---|---|---|---|---|
| 14 | 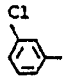 | $C_6H_5$ | $C_3H_7$(i) | H | $N-C_6H_5$ | $C_3H_7$(n) | rot | |
| 15 | " | " | " | H | $N-C_3H_7$(i) | $CH_3$ | " | |
| 16 | " | " | H | H | NH | $C_3H_7$ | gelbstichig rot | 499 |
| 17 | " | " | H | H | " | $CH_3$ | " | 497 |
| 18 | 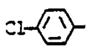 | " | $C_3H_7$(i) | H | N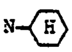 | " | bordo | |
| 19 | " | " | " | H | $N-C_6H_5$ | $CH_3$ | bordo | |
| 20 | " | " | " | H | $N-C_3H_7$(i) | " | " | |
| 21 | 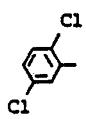 | " | " | H | " | " | " | |
| 22 | " | " | $C_2H_4OCH_3$ | H | $NC_2H_4OCH_3$ | " | " | |
| 23 | " | " | 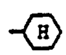 | H | $N-C_6H_5$ | " | " | |
| 24 | " | " | $C_3H_7$(i) | H | " | " | " | |
| 25 | 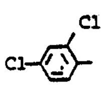 | " | " | H | " | " | " | 527 |
| 26 | " | " | " | H | N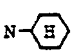 | " | " | 522,5 |
| 27 | " | " | " | H | $NC_3H_7$(i) | " | " | |
| 28 | " | " | H | H | NH | $C_3H_7$(m) | rot | |
| 29 | 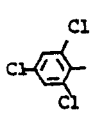 | " | $C_3H_7$(i) | H | $N-C_3H_7$(i) | $CH_3$ | bordo | |
| 30 | " | " | " | H | $N-C_6H_5$ | " | " | |

Fortsetzung

| Nr. | D | $R^1$ | $R^2$ | $R^3$ | Y | $R^4$ | Farbton | λmax. (nm) in DMF |
|---|---|---|---|---|---|---|---|---|
| 31 | 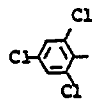 | $C_6H_5$ | $C_3H_7$(i) | H | 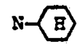 | $CH_3$ | bordo | |
| 32 | 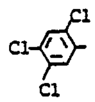 | " | " | H | " | " | " | |
| 33 | " | " | " | H | $N-C_6H_5$ | " | " | |
| 34 | 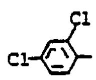 | 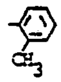 | " | H | 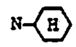 | " | " | 524,5 |
| 35 | " | 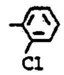 | " | H | " | " | " | 527 |
| 36 | 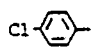 | $C_2H_4OCH_2C_6H_5$ | " | H | $N-C_6H_5$ | " | " | |
| 37 | 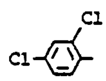 | " | " | H | $N-C_6H_5$ | " | " | |
| 38 | " | $C_2H_4OC_3H_7$(n) | $CHCH_3$<br>$CH_2OCH_3$ | H | 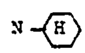 | " | " | |

Beispiel 6

374 Teile 2,6-Dichlor-3-cyan-4-methylpyridin werden bei 30 bis 45°C auf literaturbekannte Weise (z. B. DE-OS 2 260 827) mit überschüssigem Isopropylamin zu einem Gemisch aus ca. 370 Teilen der Verbindung der Formel

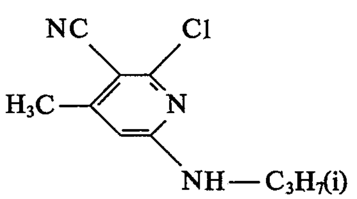

und ca. 32 Teilen der Verbindung der Formel

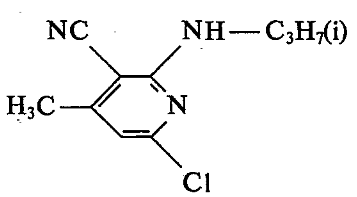

umgesetzt.

Der Schmelzpunkt des isolierten Gemisches ist 160°C. 84 Teile dieses Produktgemisches werden mit 140 Teilen Cyclohexylamin 5 Stunden bei 140 bis 145°C gerührt. Das Gemisch wird dann auf 500 Teile Eiswasser und 50 Raumteile konzentrierte Salzsäure ausgerührt, die erhaltene Fällung bei pH 3 bis 3,5

abgepuffert. Ausgefallenes Produkt wird abfiltriert, mit Wasser gewaschen und getrocknet. Ausbeute: 105 Teile der Kupplungskomponenten der Formeln

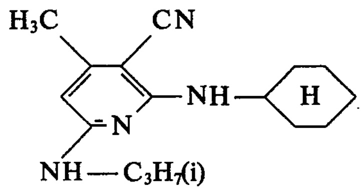

und

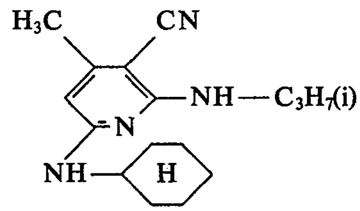

Schmelzpunkt des Gemisches ist 156°C. Das Mischungsverhältnis entspricht dem der Zwischenstufe, wie sie bei der Synthese aus 2,6-Dichlor-3-cyan-4-methylpyridin mit Isopropylamin anfällt.

11,6 Teile der Diazokomponente der Formel

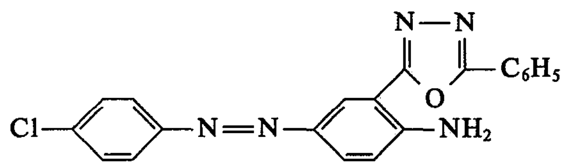

werden analog zur in Beispiel 5 beschriebenen Arbeitsweise diazotiert und analog zur dort beschriebenen Arbeitsweise auf 8,4 Teile des oben genannten Kupplungskomponentengemisches gekuppelt. Nach Isolierung und Trocknung wie üblich erhält man 20 Teile eines dunkelroten Pulvers der Farbstoffe

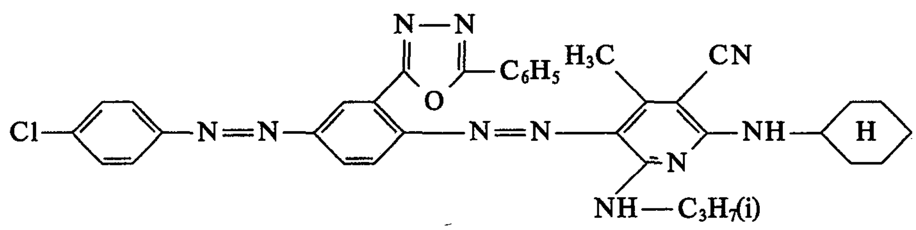

sowie

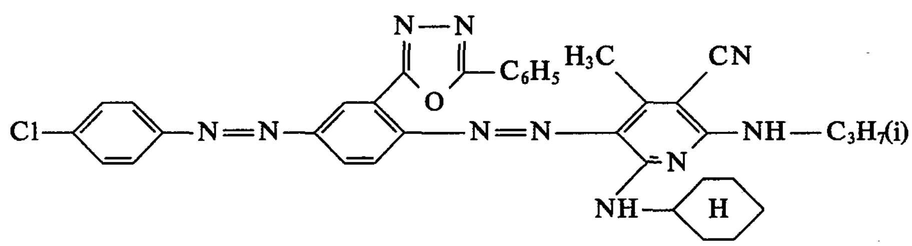

Das Farbstoffgemisch löst sich in Dimethylformamid mit blaustichig roter Farbe ($\lambda$ max : 520 nm) und färbt Polyester, Baumwolle oder Mischgewebe aus beiden Fasern in klaren, kräftigen, blaustichig roten Tönen mit vorzüglichen Licht- und Naßechtheiten.

Analog zur in Beispiel 6 beschriebenen Arbeitsweise lassen sich z. B. die in Tabelle 6 beschriebenen Farbstoffe herstellen.

Tabelle 6

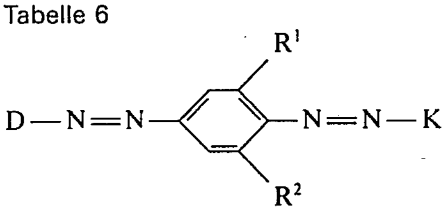

| Nr. | D | $R^1$ | $R^2$ | K | Farbton | λmax. (nm) in DMF |
|---|---|---|---|---|---|---|
| 1 | 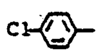 | 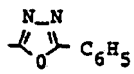 | H | 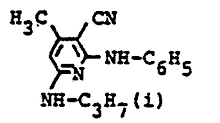 | bordo | 523 |
| 2 | " | 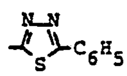 | H | " | " | |
| 3 | " | 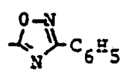 | Br | " | " | |
| 4 | 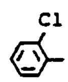 | " | " | " | " | |
| 5 | " | " | " | 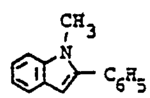 | gelbbraun | |
| 6 | " | " | " | 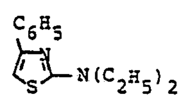 | violett | |
| 7 | 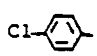 | " | " | " | " | |
| 8 | " | " | " | 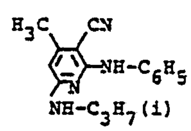 | rotviolett | |
| 9 | " | " | " | 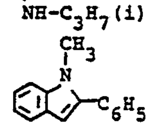 | braun | |
| 10 | " | 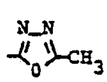 | " | 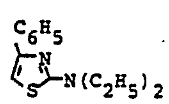 | rotstichig blau | |
| 11 | " | " | H | " | violett | |
| 12 | " | " | H | 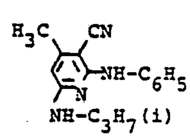 | blaustichig rot | |

Fortsetzung

| Nr. | D | $R^1$ | $R^2$ | K | Farbton | $\lambda$max. (nm) in DMF |
|---|---|---|---|---|---|---|
| 13 | 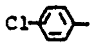 | 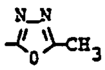 | H | 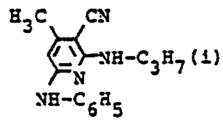 | bordo | |
| 14 | " | " | H | 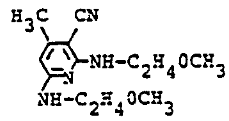 | " | |
| 15 | " | " | H | 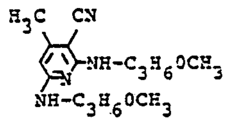 | " | |
| 16 | " | 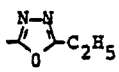 | H | 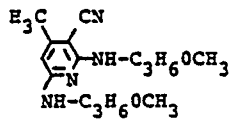 | bordo | |
| 17 | " | $-CON(CH_3)_2$ | Br | 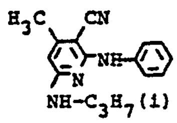 | rot | |
| 18 | 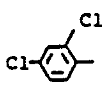 | " | Br | " | " | |
| 19 | 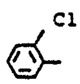 | $CON(C_2H_5)_2$ | H | 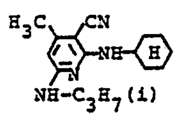 | " | |
| 20 | Cl | 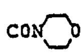 | H | " | gelbstichig rot | 503 |
| 21 | 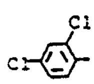 | $CON(CH_3)_2$ | H | " | rot | 514 |
| 22 | " | " | H | 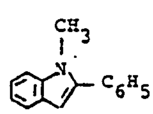 | rotorange | |
| 23 | 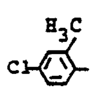 | $CO_2C_2H_4OCH_3$ | H | 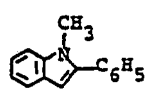 | braunstichig rot | |
| 24 | " | " | Br | " | braun | |

Fortsetzung

| Nr. | D | $R^1$ | $R^2$ | K | Farbton | λmax. (nm) in DMF |
|---|---|---|---|---|---|---|
| 25 | 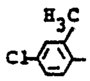 | $CO_2C_2H_4OCH_3$ | H | 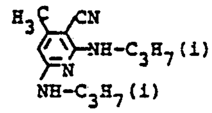 | rot | |
| 26 | " | " | H | 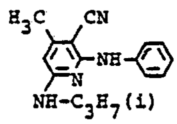 | " | |
| 27 | 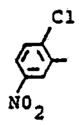 | 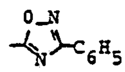 | H | 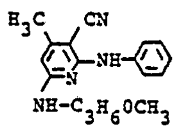 | bordo | |
| 28 | " | $-CO_2C_4H_9$ | Br | 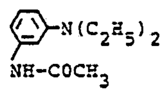 | violett | |
| 29 | 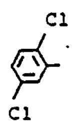 | " | Br | " | " | |
| 30 | " | $CON(C_2H_5)_2$ | Br | 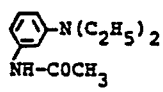 | " | |
| 31 | " | " | Br | 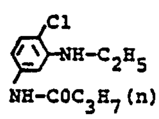 | rot | |
| 32 | " | $CO_2C_4H_9(n)$ | " | " | " | |
| 33 | 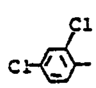 | " | " | " | bordo | |
| 34 | 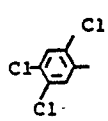 | " | " | " | " | |
| 35 | " | " | " | 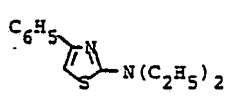 | violett | |
| 36 | 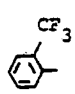 | " | " | " | " | |

Fortsetzung

| Nr. | D | $R^1$ | $R^2$ | K | Farbton | $\lambda$max. (nm) in DMF |
|---|---|---|---|---|---|---|
| 37 | 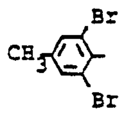 | $CO_2C_4H_9$(n) | H | 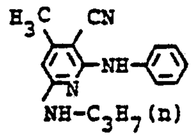 | bordo | |
| 38 | 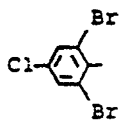 | " | H | " | " | |
| 39 | 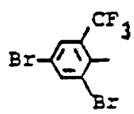 | " | H | " | " | |
| 40 | 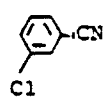 | | H | 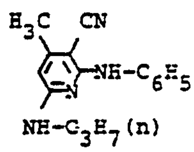 | blaustichig rot | |
| 41 | " | " | Br | " | bordo | |
| 42 | 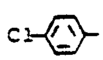 | " | " | " | " | |
| 50 | 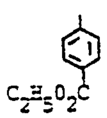 | $CO_2C_2H_5$ | H | " | " | |
| 51 | 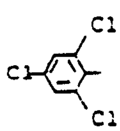 | $CO_2C_3H_7$(n) | Br | " | " | |
| 55 | 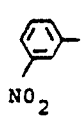 | 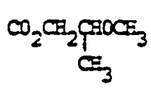 | H | 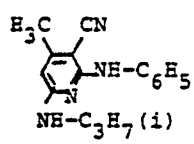 | blaustichig rot | |
| 56 | " | " | H | 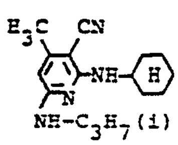 | " | |
| 57 | " | $CO_2C_3H_7$(n) | H | 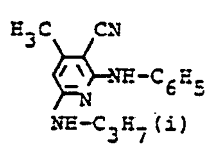 | " | |

Fortsetzung

| Nr. | D | $R^1$ | $R^2$ | K | Farbton | λmax. (nm) in DMF |
|---|---|---|---|---|---|---|
| 58 | 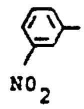 | $CO_2C_4H_9$(n) | H | 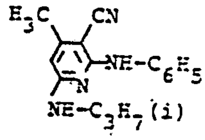 | blaustichig rot | |
| 59 | " | " | H | 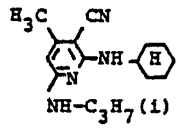 | " | |
| 60 | " | $CO_2C_3H_7$(n) | H | " | " | |
| 61 | 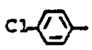 | " | Br | 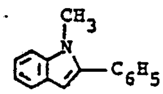 | orangerot | |
| 62 | " | $CO_2C_4H_9$(n) | " | 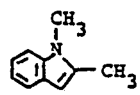 | " | |
| 63 | " | $CO_2CH_3$ | " | 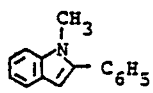 | " | |
| 64 | 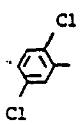 | " | " | " | braunrot | |
| 65 | " | " | " | 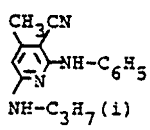 | bordo | 520 |
| 66 | " | " | " | 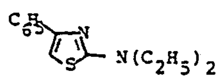 | rotstichig blau | 545 |
| 67 | 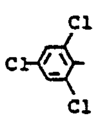 | $CO_2C_2H_4OCH_3$ | Br | 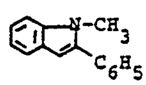 | gelbbraun | |
| 68 | " | $OCH_3$<br>$CO_2CH_2CHCH_3$ | " | " | " | |
| 69 | " | " | " | 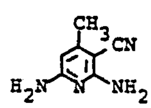 | rotbraun | |
| 70 | " | " | " | 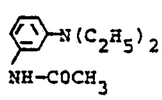 | violett | |

Fortsetzung

| Nr. | D | $R^1$ | $R^2$ | K | Farbton | λmax. (nm) in DMF |
|---|---|---|---|---|---|---|
| 71 | 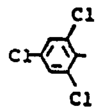 | 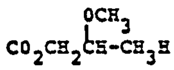 | Br | 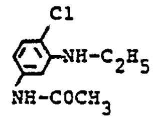 | rot | |
| 72 | 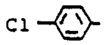 | $CO_2C_2H_4OC_6H_5$ | " | 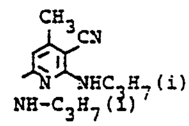 | blaustichig rot | |
| 73 | " | $CO_2C_6H_5$ | H | 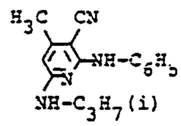 | " | |
| 74 | " | $CO_2C_4H_9(n)$ | H | " | " | |
| 75 | " | " | H | 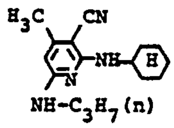 | rot | |
| 76 | 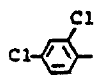 | $CO_2C_2H_4OCH_3$ | H | " | bordo | |
| 77 | 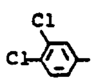 | 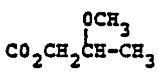 | H | " | " | |
| 78 | 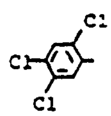 | " | H | 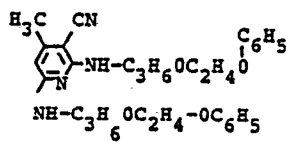 | " | |
| 79 | 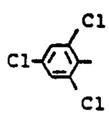 | " | H | " | " | |
| 80 | 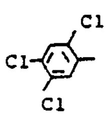 | " | H | 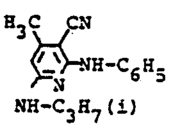 | " | 535,5 |
| 81 | 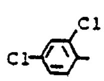 | $CO_2C_2H_4OCH_3$ | H | " | " | |
| 82 | 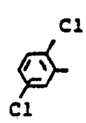 | " | H | " | bordo | 522 |

Fortsetzung

| Nr. | D | $R^1$ | $R^2$ | K | Farbton | λmax. (nm) in DMF |
|---|---|---|---|---|---|---|
| 83 | 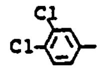 | 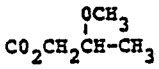 | H | 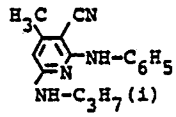 | blaustichig rot | |
| 84 | 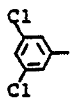 | " | H | " | " | |
| 85 | 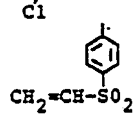 | " | H | 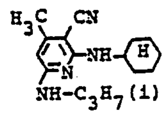 | rot | |
| 86 | 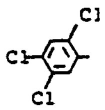 | " | H | 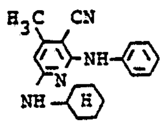 | rotviolett | 536 |
| 87 | 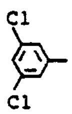 | $CO_2C_2H_4OCH_3$ | H | 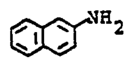 | violett | |
| 88 | 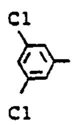 | 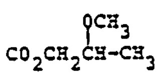 | H | 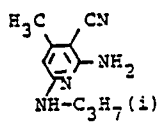 | rot | |
| 89 | 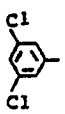 | 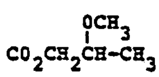 | H | 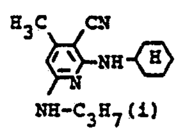 | bordo | |
| 90 | 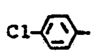 | " | H | " | rot | |
| 91 | 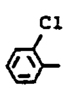 | " | H | 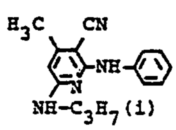 | " | 514 |
| 92 | Cl | 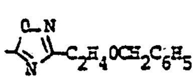 | H | " | bordo | |
| 93 | " | " | H | 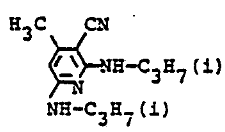 | rot | |
| 94 | " | 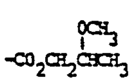 | H | 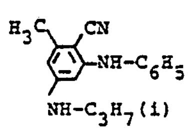 | " | |

Fortsetzung

| Nr. | D | $R^1$ | $R^2$ | K | Farbton | λmax. (nm) in DMF |
|---|---|---|---|---|---|---|
| 95 | Cl | 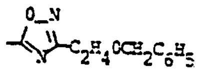 | H | 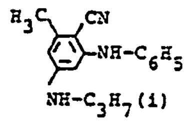 | blaustichig rot | |
| 96 | 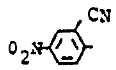 | 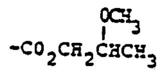 | | ″ | violett | |
| 97 | 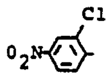 | 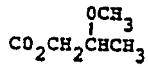 | H | 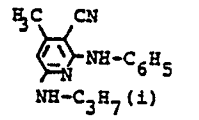 | ″ | 530 |
| 98 | ″ | $CO_2C_2H_5$ | H | 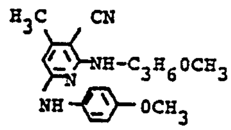 | blauschwarz | 552 |
| 99 | ″ | $CO_2C_2H_5$ | H | 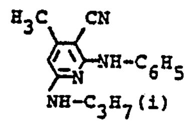 | violett | 530 |
| 100 | 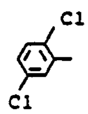 | ″ | H | 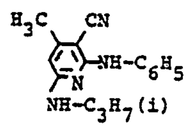 | bordo | 526 |
| 101 | 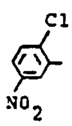 | ″ | H | 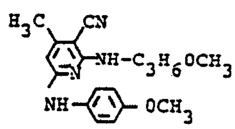 | ″ | |
| 102 | 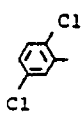 | ″ | H | 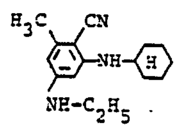 | ″ | |
| 103 | 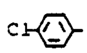 | $CO_2C_3H_7(i)$ | H | 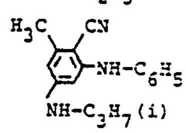 | rot | |
| 104 | ″ | $CO_2C_2H_5$ | H | 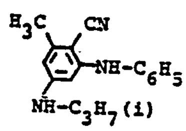 | rot | |
| 105 | 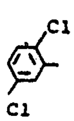 | ″ | H | 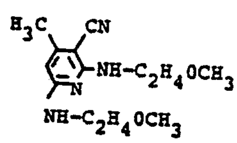 | blaustichig rot | |

Fortsetzung

| Nr. | D | $R^1$ | $R^2$ | K | Farbton | λmax. (nm) in DMF |
|---|---|---|---|---|---|---|
| 106 | 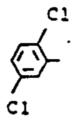 | $CO_2CH_2CH(CH_3)_2$ | H | 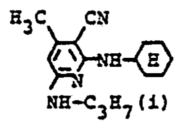 | blaustichig rot | 519 |
| 107 | " | $CO_2CH(CH_3)CH_2Cl$ | H | " | " | 520 |
| 108 | " | $CO_2CH_2CH_2Cl$ | H | " | " | 521 |
| 109 | " | $CO_2CH_2CH(CH_3)(C_2H_5)$ | H | " | " | |
| 110 | " | $CO_2CH_2CH_2C(CH_3)=CH_2$ | H | " | " | |
| 111 | " | $CO_2C_2H_4OC_2H_5$ | H | " | " | |
| 112 | 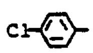 | $CO_2C_3H_7(i)$ | H | 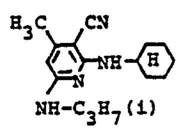 | rot | |
| 113 | " | $CO_2C_2H_5$ | H | " | rot | |
| 114 | 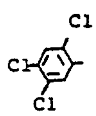 | $CO_2CH_3$ | H | " | bordo | 530 |
| 115 | 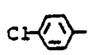 | $CO_2CH_3$ | H | 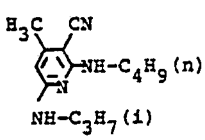 | rot | |
| 116 | " | " | H | 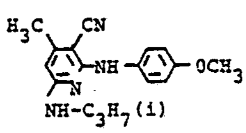 | bordo | |
| 117 | " | " | H | 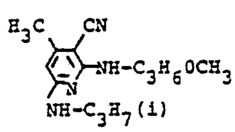 | rot | |
| 118 | 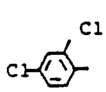 | $CO_2C_2H_5$ | H | 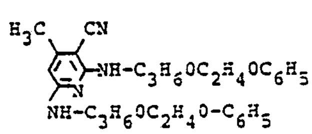 | bordo | 521,5 |
| 119 | 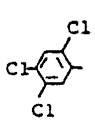 | $CO_2CH_3$ | H | " | " | |

Fortsetzung

| Nr. | D | $R^1$ | $R^2$ | K | Farbton | λmax. (nm) in DMF |
|---|---|---|---|---|---|---|
| 120 | 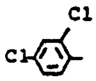 | $CO_2CH_3$ | H | 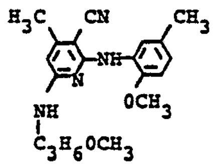 | bordo | 524 |
| 121 | " | " | H | 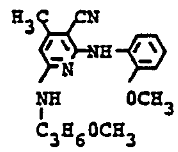 | " | 522 |
| 122 | " | " | H | 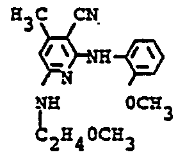 | " | 518 |
| 123 | 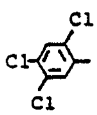 | " | H | 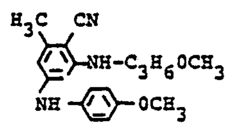 | violett | 540 |
| 124 | 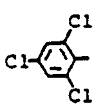 | " | H | " | rot | |
| 125 | " | 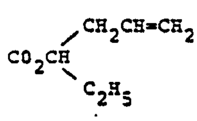 | H | 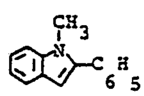 | rotbraun | |
| 126 | 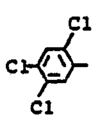 | $CO_2CH_3$ | H | 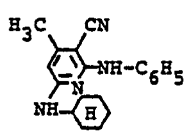 | rotviolett | |
| 127 | " | " | H | 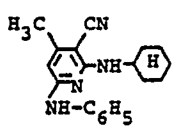 | rotviolett | |
| 128 | " | " | Br | 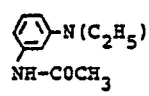 | violett | |
| 129 | " | " | H | 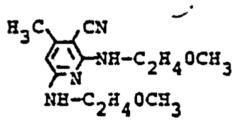 | bordo | |
| 130 | " | " | H | 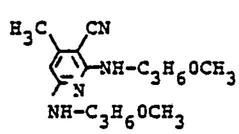 | violett | |

Fortsetzung

| Nr. | D | $R^1$ | $R^2$ | K | Farbton | $\lambda$max. (nm) in DMF |
|---|---|---|---|---|---|---|
| 131 | 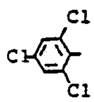 | $CO_2CH_3$ | H | 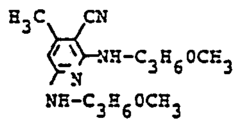 | dunkelrot | 512 |
| 132 | 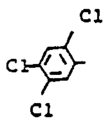 | " | H | 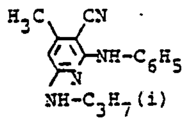 | bordo | - |
| 133 | 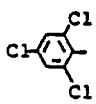 | " | H | " | dunkelrot | 514 |
| 134 | " | " | H | 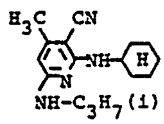 | " | 511 |
| 135 | " | " | H | 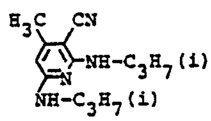 | " | |
| 136 | " | $CO_2C_4H_9(n)$ | H | 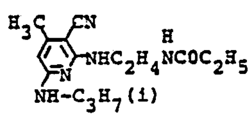 | " | |
| 137 | 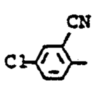 | " | H | 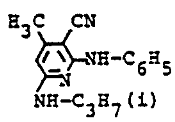 | violett | |
| 138 | " | 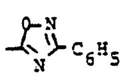 | H | " | " | |
| 139 | 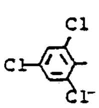 | " | H | 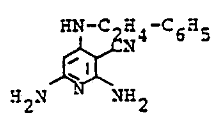 | braunrot | |
| 140 | " | $-CO_2C_2H_4OCH_3$ | H | " | " | |

Fortsetzung

| Nr. | D | $R^1$ | $R^2$ | K | Farbton | λmax. (nm) |
|---|---|---|---|---|---|---|
| 141 | 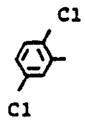 | $-CO_2C_2H_5$ | H | 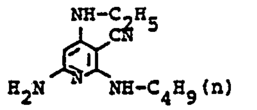 | rot | |
| 142 | " | " | H | 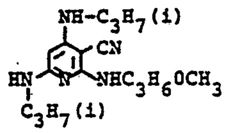 | violett | |
| 143 | " | $-CO_2C_4H_9$(n) | H | 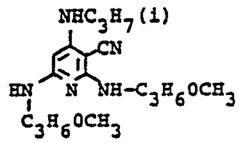 | " | |
| 144 | " | " | H | 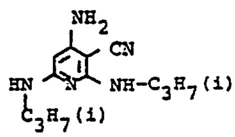 | rot | |
| 145 | 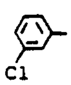 | $-CO_2CH_3$ | H | 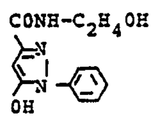 | goldgelb | |
| 146 | " | $-CO_2C_2H_5$ | H | " | " | |
| 147 | 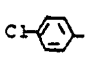 | $-CO_2C_2H_4OCH_3$ | H | " | " | |
| 148 | 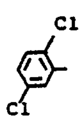 | $-CO_2C_3H_7$(n) | H | 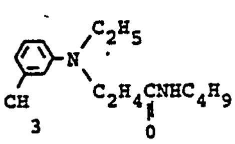 | rot | |
| 149 | " | 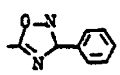 | H | 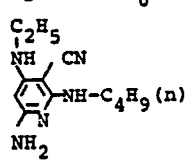 | blaustichig rot | |
| 150 | 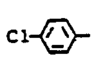 | $CO_2CH_3$ | H | 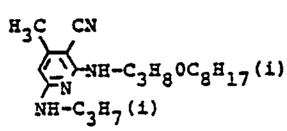 | rot | |
| 151 | 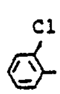 | " | H | " | " | |
| 152 | 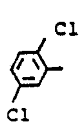 | " | H | " | bordo | 519 |

Fortsetzung

| Nr. | D | $R^1$ | $R^2$ | K | Farbton | λmax. (nm) |
|---|---|---|---|---|---|---|
| 153 | 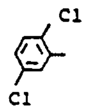 | $CO_2CH_3$ | H | 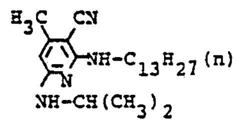 | bordo | 519 |
| 154 | 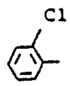 | " | H | " | rot | |
| 155 | " | " | H | 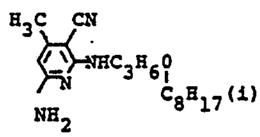 | gelbstichig rot | |
| 156 | 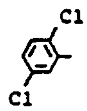 | " | H | " | rot | |
| 157 | 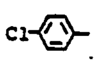 | " | H | " | orangerot | |
| 158 | 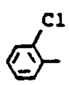 | $CO_2-C_9H_{19}$ | H | 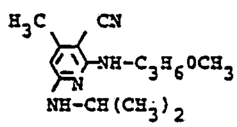 | rot | |
| 159 | " | $CO_2-C_{13}H_{27}$ | H | " | " | |
| 160 | 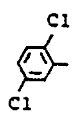 | " | H | " | bordo | |
| 161 | " | $-CO_2CH_3$ | H | 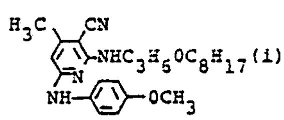 | rotviolett | |
| 162 | " | $-CO_2C_3H_7$ | H | 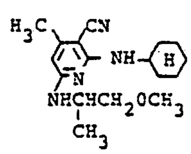 | rubinrot | |
| 163 | 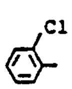 | $CO_2CH_3$ | H | 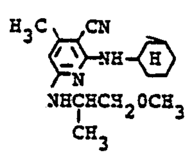 | rot | |
| 164 | " | $CO_2C_2H_5$ | H | " | " | |

Fortsetzung

| Nr. | D | $R^1$ | $R^2$ | K | Farbton | λmax. (nm) |
|---|---|---|---|---|---|---|
| 165 | 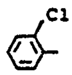 | $CO_2C_3H_7$(n) | H | 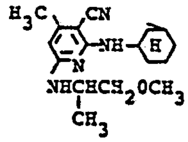 | rot | |
| 166 | " | 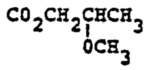 | H | " | " | |
| 167 | " | 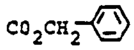 | H | " | " | |
| 168 | 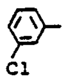 | " | H | " | " | |
| 169 | " | $CO_2CH_3$ | H | " | " | |
| 170 | " | $CO_2C_2H_5$ | H | " | " | |
| 171 | 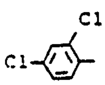 | " | H | " | rubin | |
| 172 | " | $CO_2CH_3$ | H | " | " | |
| 173 | " | 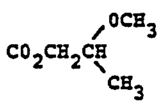 | H | 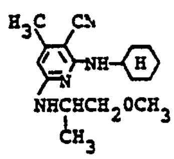 | " | |
| 174 | 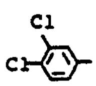 | " | H | " | " | |
| 175 | " | $CO_2CH_3$ | H | " | " | |
| 176 | " | $CO_2C_2H_5$ | H | " | " | |
| 177 | 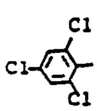 | " | H | " | " | |
| 178 | " | $CO_2CH_3$ | H | " | " | |
| 179 | " | 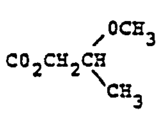 | H | " | " | |
| 180 | " | $CO_2CH_3$ | H | 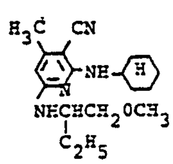 | " | |

Fortsetzung

| Nr. | D | $R^1$ | $R^2$ | K | Farbton | λmax. (nm) |
|---|---|---|---|---|---|---|
| 181 | 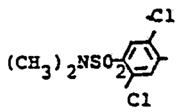 | $CO_2CH_3$ | H | 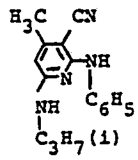 | violett | |
| 182 | " | " | H | 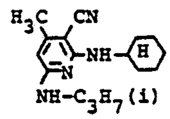 | bordo | |
| 183 | " | " | H | 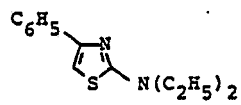 | marine-blau | 564 |
| 184 | 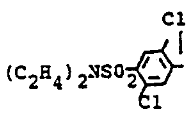 | " | H | " | " | 565 |
| 185 | 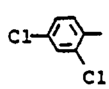 | 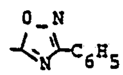 | H | " | " | 565 |
| 186 | 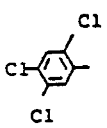 | " | H | " | " | 569 |
| 187 | 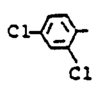 | " | H | 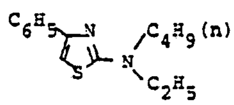 | " | 564 |
| 188 | 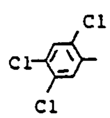 | " | H | " | " | 568 |
| 189 | " | " | H | 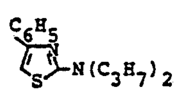 | marine-blau | 571 |
| 190 | " | 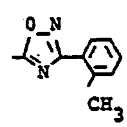 | H | " | " | 569 |
| 191 | 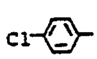 | $-CON(CH_3)_2$ | Br | 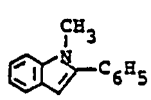 | gelbbraun | 461 |
| 192 | " | " | CN | " | rotbraun | 489 |

Beispiel 7a

40 Teile der Verbindung der Formel

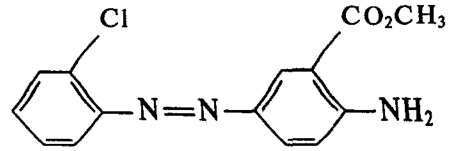

(Schmp. 138–140°C)

werden unter Rühren bei 15–25°C in Portionen in 105 Teile Oleum, 23%ig, gegeben. Anschließend rührt man das Gemisch 6 Stunden bei 40°C. Nach Abkühlen auf Raumtemperatur wird die Sulfierung auf 400 Teile Eis ausgerührt. Die erhaltene Fällung wird mit Natronlauge oder Natriumacetat auf pH 4 bis 6 abgestumpft. Das ausgefallene Produkt der Formel

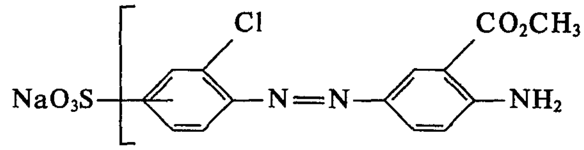

wird abgesaugt, mit etwas Wasser gewaschen und getrocknet. Man erhält 42 Teile eines gelbbraunen Pulvers, das sich in Wasser mit gelber Farbe löst. Das Absorptionsspektrum, aufgenommen mit dem Bittman Spektralphotometer ACTA III, zeigt ein Maximum bei 394 nm (pH 5–6,5 in Wasser). Die Diazokomponente ist dünnschichtchromatographisch einheitlich und zersetzt sich beim Erhitzen bei Temperaturen oberhalb von 270°C. 19 Teile dieses Pulvers werden in 900 Raumteilen Wasser bei 55°C gelöst (pH 6,0–7,0). Nun gibt man noch 0,5 Teile eines Dispergiermittels hinzu und kühlt auf Raumtemperatur ab. Sobald die Temperatur der Lösung ≤30°C beträgt, hebt man den pH-Wert des Gemisches mit wenig Natronlauge auf 7,0 bis 9,0 an und gibt danach 18 Raumteile einer 23%igen Natriumnitrit-Lösung hinzu. Die erhaltene goldgelbe bis orangefarbene Fällung wird auf 0 bis 5°C abgekühlt und dann auf einmal mit ca. 30 Raumteilen konzentrierter Salzsäure angesäuert. Man erhält eine sandfarbene Suspension des Diazoniumsalzes die noch ca. 2 Stunden bei 3 bis 8°C gerührt wird. Dann gibt man eine Lösung aus 20,1 Teilen der Kupplungskomponente der Formel

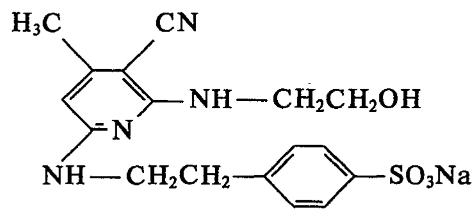

in 300 Raumteilen Wasser hinzu und hebt den pH-Wert der Kupplung auf 4,5 bis 5,0 an. Die Kupplung ist nach ca. 60 Minuten beendet. Nun hebt man den pH-Wert des Gemisches auf 6,5 bis 7,0 an, gibt 190 Teile Natriumchlorid hinzu und saugt den ausgefallenen Farbstoff der Formel

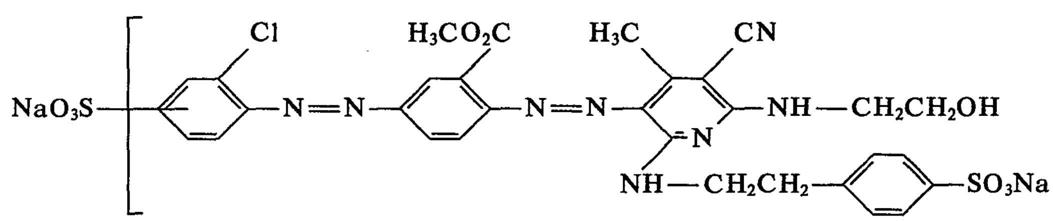

ab und trocknet das Filtergut bei 100°C. Man erhält 50 Teile eines dunkelroten Pulvers, das sich in Wasser mit gelbstichig roter Farbe löst und stickstoffhaltige Fasern in blaustichig roten Tönen färbt.

Das Absorptionsspektrum des Farbstoffes hat in Wasser Maxima bei 488 nm und 320 nm (pH-Wert 5–6,5).

Beispiel 7b

35,5 Teile der Verbindung der Formel

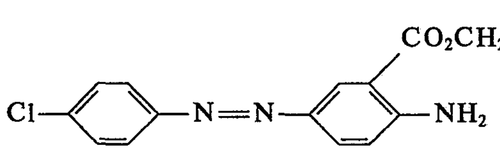

(Schmp. 112°C)

werden bei 25 bis 40°C in 108 Teile Oleum (23 %ig) eingerührt. Das Gemisch wird 3 bis 5 Stunden bei 40°C nachgerührt und dann auf 10°C abgekühlt. Dann setzt man zuerst 25 Teile Eis und danach bei 5 bis 15°C 34 Teile einer 44 %igen Nitrosylschwefelsäure-Lösung hinzu und rührt das Gemisch 4 Stunden bei 5 bis 12°C nach. Dann läßt man die fertige Diazotierung in ein Gemisch von 200 Teilen Wasser, 800 Teilen Eis und 37,8 Teilen der Kupplungskomponente der Formel

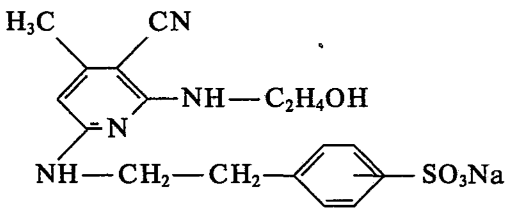

einlaufen. Während des Zulaufs gibt man gleichzeitig noch Natronlauge oder Natriumacetat so hinzu, daß der pH-Wert der Kupplung bei etwa 4,0 bis 9,0 und die Temperatur bei bis zu 25°C gehalten wird.

Die Kupplung rührt 2 Stunden bei pH 4,5 bis 7,5 nach, dann saugt man ausgefälltes Produkt ab, wäscht mit wenig Wasser und trocknet. Man erhält 87,5 Teile eines dunklen Pulvers der Formel

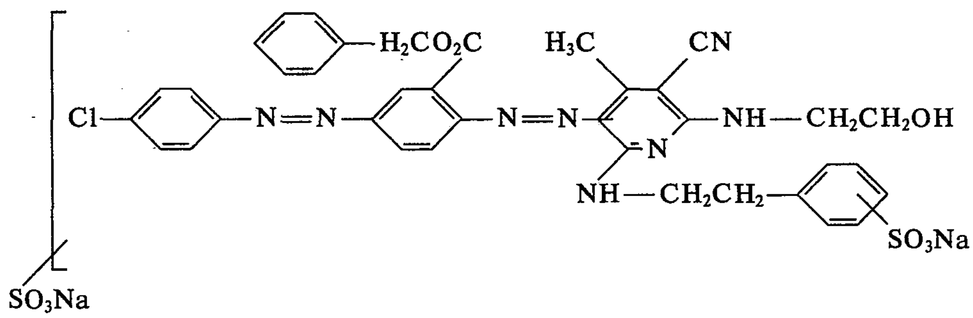

das sich in Wasser und Dimethylformamid mit roter Farbe löst und Polyamid, Wolle oder Leder in roten Tönen mit guten Echtheiten färbt.

Die Sulfierung der Diazokomponente erfolgt vermutlich im Benzylrest.

Analog zu der in den Beispielen 7a und b beschriebenen Arbeitsweise lassen sich z. B. die in Tabelle 7 beschriebenen Farbstoffe herstellen.

Tabelle 7

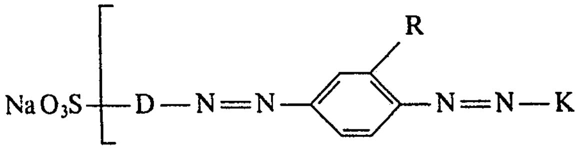

| Nr. | D | R | K | Farbton | λmax. (nm) in $H_2O$ |
|---|---|---|---|---|---|
| 1 | 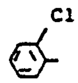 | $CO_2CH_3$ | 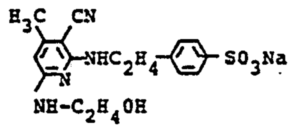 | rot | 491 |
| 2 | 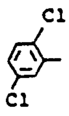 | " | " | bordo | |
| 3 | 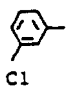 | " | " | blausti-chig rot | |
| 4 | " | 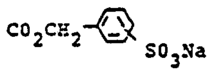 | " | " | |
| 5 | 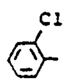 | " | " | " | |
| 6 | " | $CO_2CH_3$ | 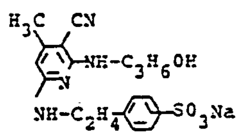 | " | 493 |
| 7 | " | " | 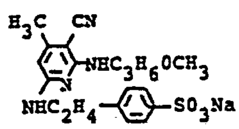 | " | 492 |
| 8 | " | " | 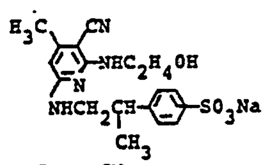 | " | |
| 9 | " | 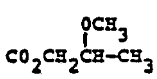 | 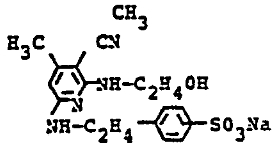 | " | |
| 10 | " | 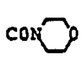 | " | " | |
| 11 | " | $CON(CH_3)_2$ | " | " | |

Fortsetzung

| Nr. | D | R | K | Farbton | λmax. (nm) in $H_2O$ |
|---|---|---|---|---|---|
| 12 | 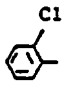 | 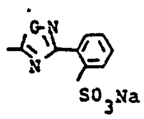 | 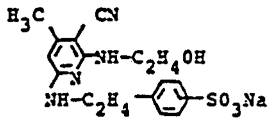 | blaustichig rot | |
| 13 | " | 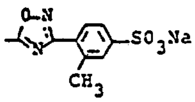 | " | " | |
| 14 | " | 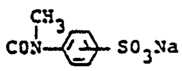 | " | " | |
| 15 | 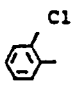 | $CO_2C_2H_4OCH_3$ | 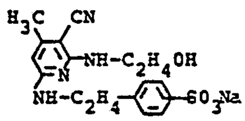 | " | |
| 16 | " | $CO_2(C_2H_4O)_3CH_3$ | 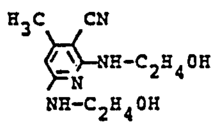 | " | |
| 17 | " | $CO_2CH_3$ | 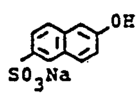 | rot | |
| 18 | " | $CO_2C_2H_4OCH_3$ | " | " | |
| 19 | " | $CO_2C_3H_6OSO_3Na$ | " | " | |
| 20 | " | $CON(CH_3)_2$ | " | " | |
| 21 | " | 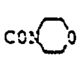 | " | " | |
| 22 | " | $CON(CH_3)_2$ | 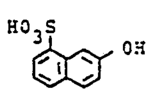 | " | |
| 23 | " | $CO_2CH_3$ | 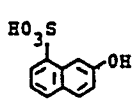 | " | |
| 24 | " | 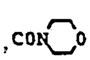 | 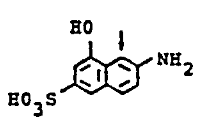 | rotstichig blau | |

Fortsetzung

| Nr. | D | R | K | Farbton | $\lambda$max. (nm) in $H_2O$ |
|---|---|---|---|---|---|
| 25 | 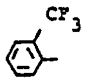 | $CO_2CH_3$ | 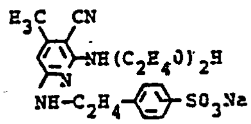 | bordo | |
| 26 | " | $CON(CH_3)_2$ | " | " | |
| 27 | 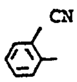 | " | " | " | |
| 28 | " | $CO_2CH_3$ | " | " | |
| 29 | 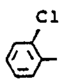 | " | 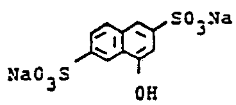 | rot | |
| 30 | " | $CON(CH_3)_2$ | " | " | |
| 31 | " | " | 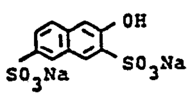 | " | |
| 32 | " | $CO_2CH_3$ | " | " | |
| 33 | " | " | 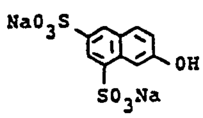 | " | |
| 34 | " | " | 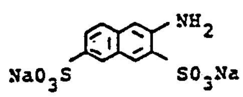 | bordo | |
| 35 | " | $CON(CH_3)_2$ | " | " | |
| 36 | " | " | 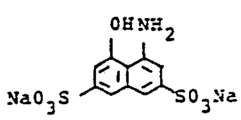 | blau | |
| 37 | " | $CO_2CH_3$ | " | " | |

Fortsetzung

| Nr. | D | R | K | Farbton | λmax. (nm) in $H_2O$ |
|---|---|---|---|---|---|
| 38 | 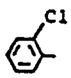 | $CO_2CH_3$ | 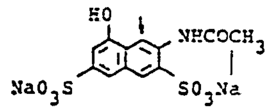 | violett | |
| 39 | " | $CON(CH_3)_2$ | 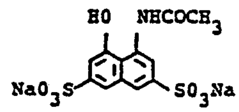 | blau | |
| 40 | " | 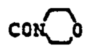 | " | " | |
| 41 | " | 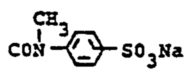 | 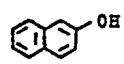 | gelbstichig rot | |
| 42 | " | 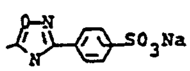 | 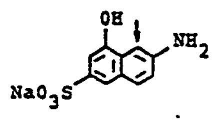 | blau | |
| 43 | " | 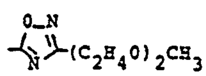 | " | " | |
| 44 | " | " | 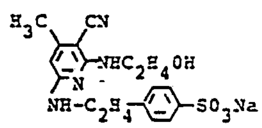 | rot | |
| 45 | 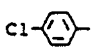 | 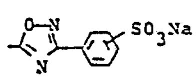 | 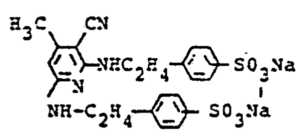 | " | |
| 46 | " | 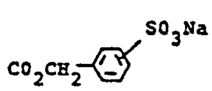 | 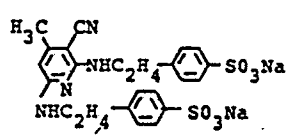 | " | |
| 47 | " | 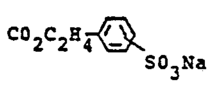 | " | " | |
| 48 | 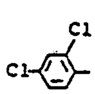 | " | " | " | |
| 49 | 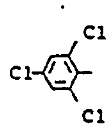 | " | " | " | |

Fortsetzung

| Nr. | D | R | K | Farbton | $\lambda$max. (nm) in $H_2O$ |
|---|---|---|---|---|---|
| 50 | 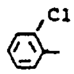 | $CO_2CH_3$ | 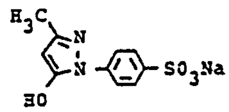 | orange | |
| 51 | " | $CON(CH_3)_2$ | " | gelb | |
| 52 | " | " | 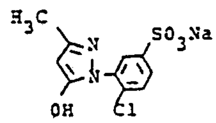 | goldgelb | |
| 53 | " | $CO_2CH_3$ | " | " | |
| 54 | " | " | 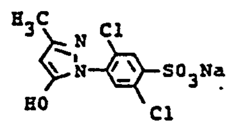 | " | |
| 55 | " | " | 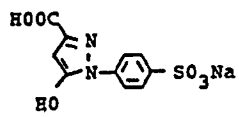 | " | |
| 56 | " | " | 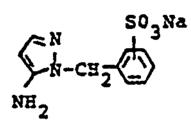 | orange | |
| 57 | " | " | 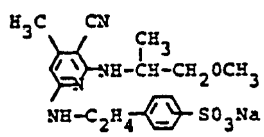 | blausti-chig rot | |
| 58 | " | " | 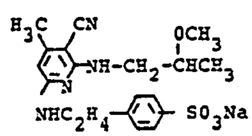 | " | |
| 59 | " | " | 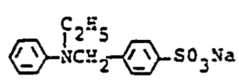 | " | |
| 60 | 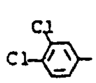 | 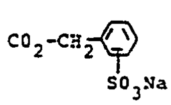 | 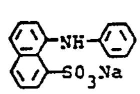 | blau (Polyamid) (Wolle braun) | |
| 61 | 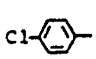 | 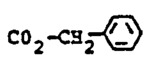 | 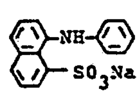 | blau (Polyamid) | |

Fortsetzung

| Nr. | D | R | K | Farbton | λmax. (nm) in $H_2O$ |
|---|---|---|---|---|---|
| 62 | 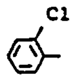 | 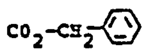 | 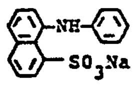 | blau (Polyamid) | |
| 63 | 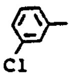 | " | " | " | |
| 64 | " | 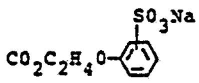 | 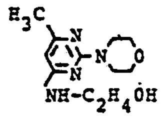 | rot | |
| 65 | 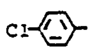 | 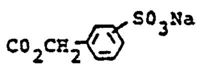 | " | " | |
| 66 | " | 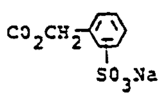 | 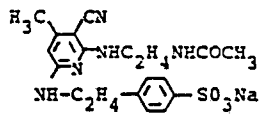 | blaustichig rot | |
| 67 | " | " | 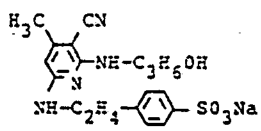 | " | |
| 68 | 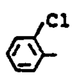 | $CO_2CH_3$ | 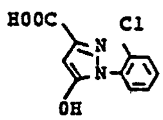 | gelborange | |
| 69 | " | 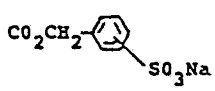 | 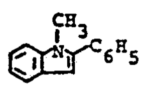 | rotbraun | |
| 70 | " | " | 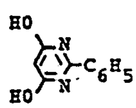 | goldgelb | |
| 71 | 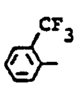 | " | 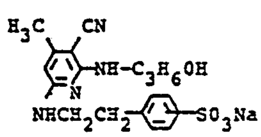 | blaustichig rot | |
| 72 | " | " | 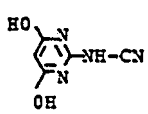 | goldgelb | |

Fortsetzung

| Nr. | D | R | K | Farbton | λmax. (nm) in $H_2O$ |
|---|---|---|---|---|---|
| 73 | 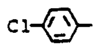 | 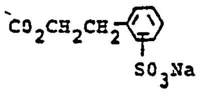 | 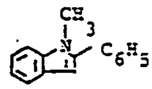 | rotbraun | |
| 74 | ʺ | 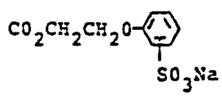 | ʺ | ʺ | |
| 75 | 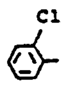 | $CO_2H$ | 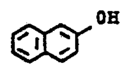 | rot | |
| 76 | 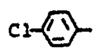 | ʺ | ʺ | ʺ | |
| 77 | ʺ | $CO_2CH_3$ | 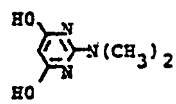 | gelb | |
| 78 | 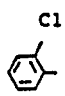 | 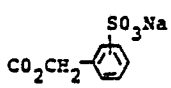 | 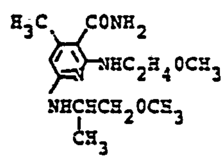 | violett | |

Beispiel 8

42,2 Teile der Diazokomponente der Formel

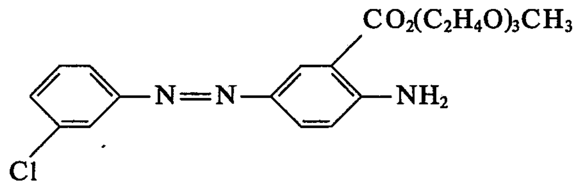

werden wie üblich mit 33 Raumteilen konzentrierter Salzsäure und 33 Raumteilen einer 23%igen Natriumnitrit-Lösung bei 0 bis 10°C in 800 Raumteilen Wasser diazotiert. Nach Zerstören eines etwa vorhandenen Überschusses an salpetriger Säure gibt man 56,2 Teile der Kupplungskomponente der Formel

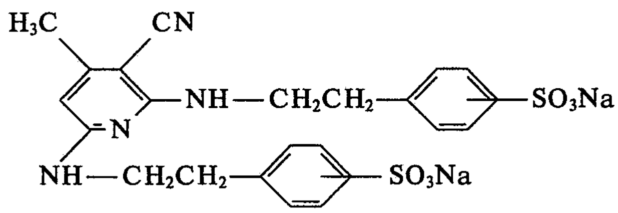

die in ca. 1000 Raumteilen Wasser gelöst sind, hinzu und hebt den pH-Wert des Kupplungsgemisches durch Natronlaugezusatz auf 5 bis 7,0 an. Die Kupplung verläuft oberhalb von pH 2,5 rasch und ist schnell beendet. Man fällt den entstandenen Farbstoff durch Zugabe von 100 Teilen Natriumchlorid vollständig aus, saugt ab und trocknet.

Man erhält 98 Teile (ber. 100%) des Farbstoffs der Formel

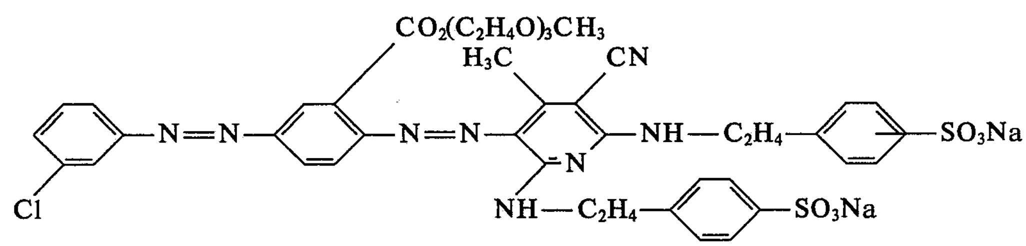

als dunkelrotes Pulver. ($\lambda$ max. 512 nm in $(CH_3)_2NCHO$). Der Farbstoff löst sich in Wasser mit roter Farbe und färbt Polyamid-Gewebe in leicht blaustichigen Tönen mit guter Licht- und Naßechtheit. Wolle und Lederfärbungen sind neutral Rot.

Analog der in Beispiel 8 beschriebenen Arbeitsweise werden die in der folgenden Tabelle beschriebenen Farbstoffe hergestellt.

Tabelle 8

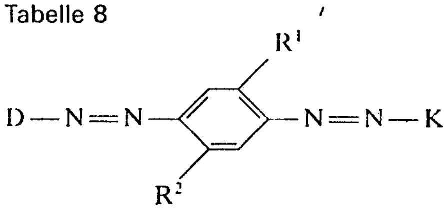

| Nr. | D | $R^1$ | $R^2$ | K | Farbton | λmax. (nm) in $H_2O$ |
|---|---|---|---|---|---|---|
| 1 | 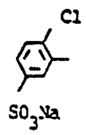 | $CO_2CH_3$ | $CH_3$ | 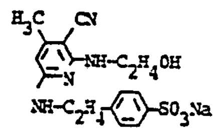 | blaustichig rot | |
| 2 | " | " | $OCH_3$ | " | " | |
| 3 | 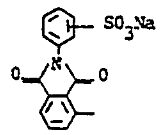 | " | H | " | " | |
| 4 | 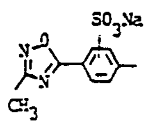 | " | H | " | " | |
| 5 | 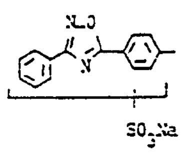 | " | H | " | " | |
| 6 | 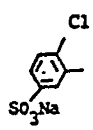 | " | H | 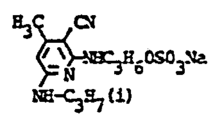 | rot | |
| 7 | " | $CON(CH_3)_2$ | H | " | " | |
| 8 | " | $CO_2CH_3$ | H | 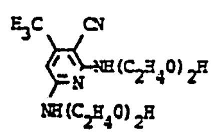 | " | |
| 9 | " | 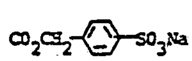 | H | 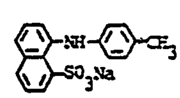 | blau (Polyamid) | |
| 10 | " | $CO_2CH_2CH_2OCH_3$ | H | " | " | |
| 11 | 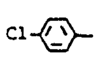 | 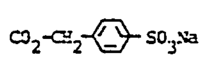 | H | " | " | |

Fortsetzung

| Nr. | D | $R^1$ | $R^2$ | K | Farbton | λmax. (nm) in $H_2O$ |
|---|---|---|---|---|---|---|
| 12 | 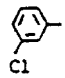 | 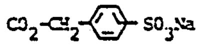 | H | 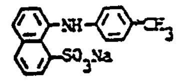 | blau (Polyamid) | |
| 13 | 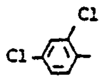 | " | H | " | " | |
| 14 | 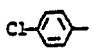 | 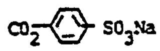 | H | " | " | |
| 15 | " | 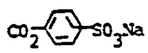 | H | 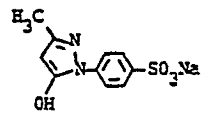 | orange | |
| 16 | " | 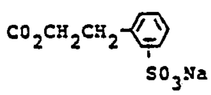 | H | " | " | |
| 17 | " | 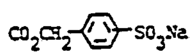 | H | 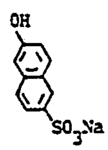 | rot | |
| 18 | 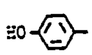 | $CO_2CH_3$ | H | 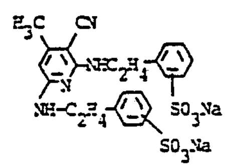 | " | |
| 19 | 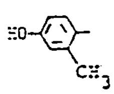 | " | H | " | " | |
| 20 | 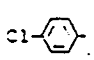 | $CO_2H$ | $NHCOCH_3$ | 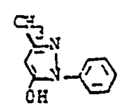 | " | |
| 21 | " | " | " | 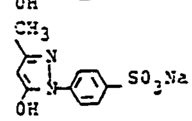 | " | |

Beispiel 9

17 Teile der Diazokomponente der Formel

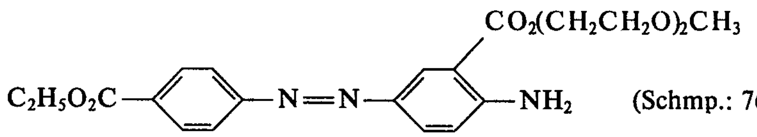

(Schmp.: 76°C)

werden in 26 Raumteilen Propionsäure und 130 Raumteilen Eisessig verrührt. Man kühlt das Gemisch auf 10°C ab und gibt dann 14 Teile einer 44%igen Nitrosylschwefelsäure und 60 Teile Eis hinzu. Die Diazotierung rührt 1 bis 2 Stunden bei 5 bis 10°C. Dann gibt man eine Lösung von 14,1 Teilen der Kupplungskomponente der Formel

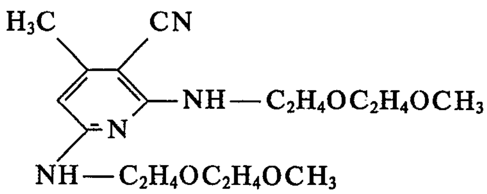

in 50 Raumteilen Wasser und 4 Raumteilen konzentrierter Salzsäure hinzu und hebt den pH-Wert des Gemisches durch Zugabe von Natronlauge auf 1,5 bis 2,5 an. Dabei setzt man noch etwas Wasser zu, damit das Kupplungsgemisch gut rührbar bleibt.

Die Kupplung ist nach wenigen Minuten beendet. Der ausgefallene Farbstoff der Formel

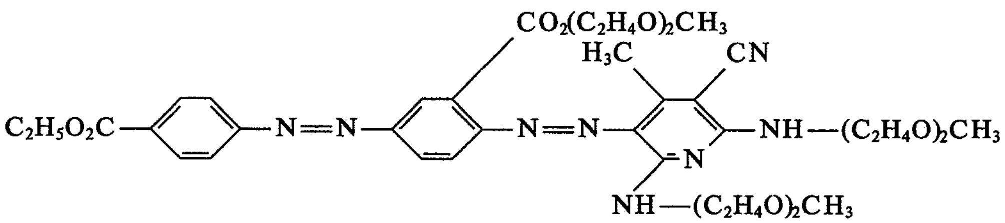

wird wie üblich isoliert und getrocknet. Man erhält 41 Teile eines dunkelroten Pulvers, das sich in Dimethylformamid und Glykoläthern mit blaustichig roter Farbe löst und Polyester und Polyester/Baumwolle-Mischgewebe in licht- und thermofixierechten, blaustichig roten Tönen färbt und druckt.

Der Farbstoff hat einen Schmelzpunkt von 188–191°C (Absorptionsmaximum in Dimethylformamid: 513 nm).

Analog zur in Beispiel 9 beschriebenen Arbeitsweise können z. B. die in Tabelle 9 beschriebenen Farbstoffe hergestellt werden. Farbstoffe mit noch längeren oder zusätzlichen Polyäther-Resten eignen sich auch zum Färben von Leder nach Spritzfärbeverfahren.

Tabelle 9

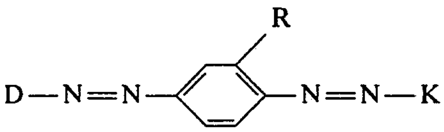

| Nr. | D | R | K | Farbton | λmax. (nm) |
|---|---|---|---|---|---|
| 1 | 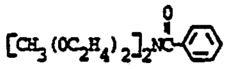 | $CO_2C_2H_4OCH_3$ | 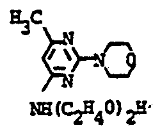 | rot | |
| 2 | " | " | 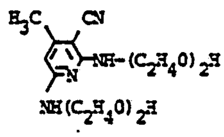 | " | |
| 3 | " | " | 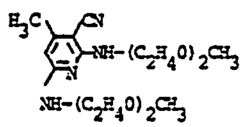 | " | |
| 4 | 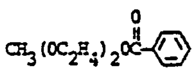 | " | " | " | 512 |
| 5 | " | $CON[(C_2H_4O)_2CH_3]_2$ | " | " | |
| 6 | 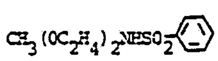 | " | " | " | |
| 7 | 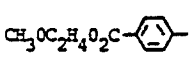 | $CON[(C_2H_4O)_3CH_3]_2$ | " | " | |
| 8 | $CH_3(OC_2H_4)_2]_2NSO_2$ | $CO_2(C_2H_4O)_2CH_3$ | " | blaustichig rot | |
| 9 | 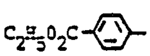 | " | 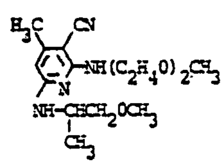 | rot | 511 |
| 10 | " | " | 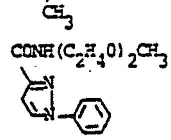 | gelb | |
| 11 | " | " | 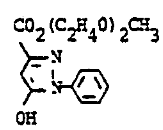 | " | |

Beispiel 10

27,6 Teile des violetten Farbstoffes der Formel

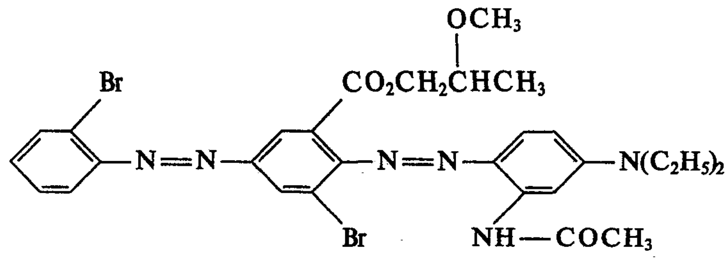

werden in 140 Raumteilen N-Methylpyrrolidon suspendiert. Dazu gibt man bei 100°C 6 Teile Kupfer-I-cyanid-Pulver. Man rührt das Gemisch 20 bis 60 Minuten bei dieser Temperatur und läßt dann erkalten. Nun läßt man 100 Teile wäßrige, ca. 20%ige Ammoniaklösung zulaufen und nach 30 Minuten Nachrührzeit noch 100 Raumteile Wasser.

Der ausgefallene Farbstoff wird abgesaugt und mit Wasser gewaschen. Nach Trocknen erhält man 21 Teile eines blauschwarzen Farbstoffpulvers, das sich in Dimethylformamid mit blauer Farbe löst. Der Farbstoff hat die Formel

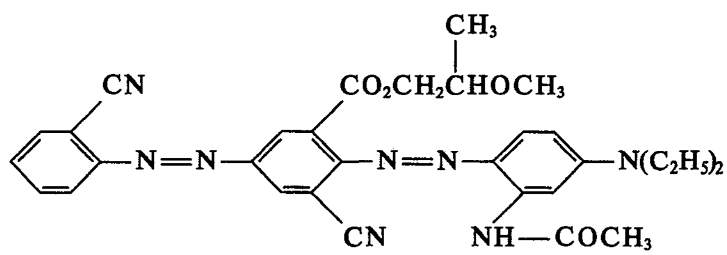

er färbt Polyestergewebe in rotstichig blauen Tönen.

Analog zu der in Beispiel 10 beschriebenen Arbeitsweise können z.B. die in Tabelle 10 benannten Farbstoffe hergestellt werden.

Tabelle 10

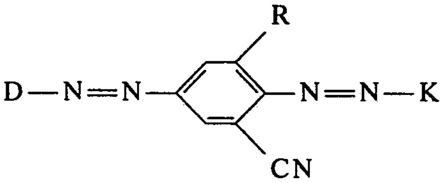

| Nr. | D | R | K | Farbton | λmax. (nm) in DMF |
|---|---|---|---|---|---|
| 1 | 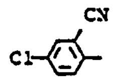 | 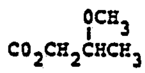 | 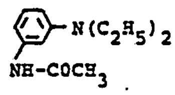 | rotsti-chig blau | |
| 2 | 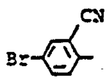 | " | " | " | |
| 3 | 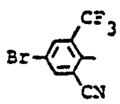 | " | " | " | |
| 4 | 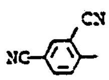 | " | " | " | |
| 5 | 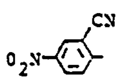 | " | " | blau | |
| 6 | 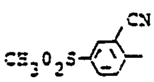 | " | " | " | |
| 7 | 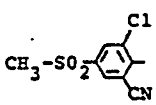 | " | " | " | |
| 8 | 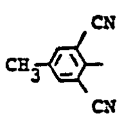 | " | " | rotstichig blau | |
| 9 | 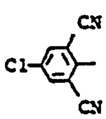 | " | " | blau | |
| 10 | 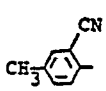 | " | " | violett | |
| 11 | 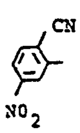 | 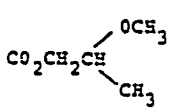 | " | rotstichig blau | |
| 12 | 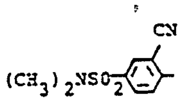 | " | " | blau | |

Fortsetzung

| Nr. | D | R | K | Farbton | $\lambda$max. (nm) in DMF |
|---|---|---|---|---|---|
| 13 | 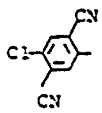 | 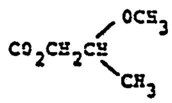 | 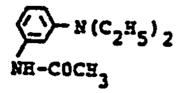 | blau | |
| 14 | 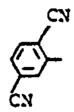 | " | " | " | |
| 15 | 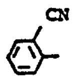 | 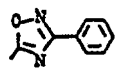 | " | rotstichig blau | |
| 16 | 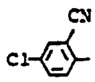 | " | " | " | |
| 17 | 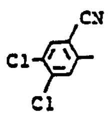 | " | " | " | |
| 18 | " | " | 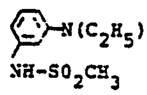 | violett | |
| 19 | 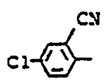 | " | " | " | |
| 20 | 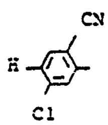 | " | " | " | |
| 21 | 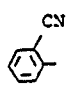 | " | 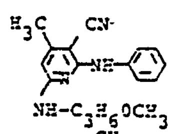 | " | |
| 22 | " | " | 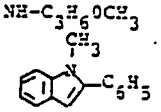 | rot | |
| 23 | " | 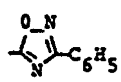 | 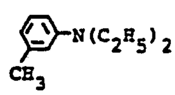 | violett | |
| 24 | " | " | 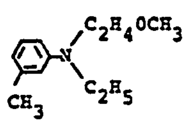 | " | |
| 25 | " | $-COC_3H_7(n)$ | " | " | |

Fortsetzung

| Nr. | D | R | K | Farbton | $\lambda$max. (nm) in DMF |
|---|---|---|---|---|---|
| 26 | 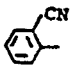 | $-COC_3H_7(n)$ | 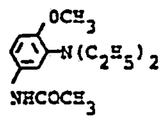 | blau | |
| 27 | " | $-CON(CH_3)_2$ | 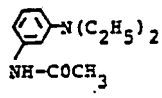 | rotstichig blau | |
| 28 | 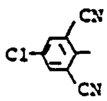 | $-CO_2C_3H_7(n)$ | 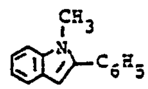 | braun | |
| 29 | 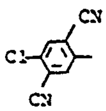 | " | 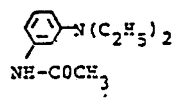 | blau | |
| 30 | 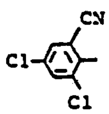 | " | " | violett | |
| 31 | 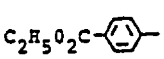 | " | " | blau | |
| 32 | 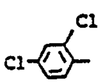 | 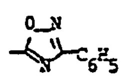 | " | " | |
| 33 | 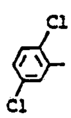 | " | " | " | |
| 34 | 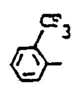 | " | " | " | |

Beispiel 11

13,4 Teile der Diazokomponente der Formel

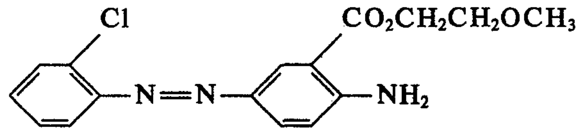

werden analog der in Beispiel 1 oder 4 beschriebenen Verfahrensweise diazotiert. Anschließend zerstört man überschüssige salpetrige Säure wie üblich und versetzt das Diazoniumsalzgemisch mit einer Lösung aus 10,6 Teilen der Kupplungskomponente der Formel

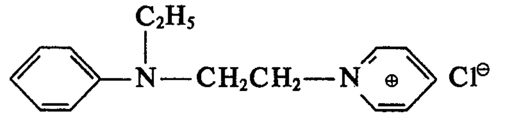
,

in 150 Raumteilen Wasser. Danach hebt man den pH-Wert der Kupplung durch Zugabe von Natronlauge auf 2,5 bis 4,5 an und fällt den entstandenen Farbstoff mit Natriumchlorid. Nach Isolieren und Trocknen wie üblich erhält man 24 Teile des Farbstoffes der Formel

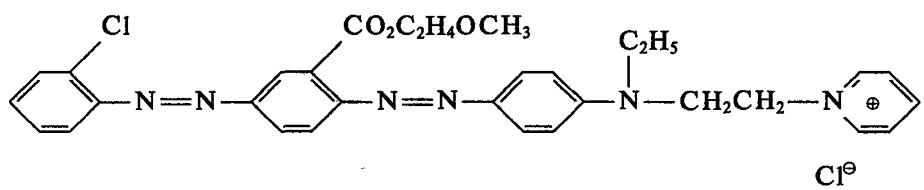

als dunkelrotes Pulver. Der Farbstoff löst sich in Wasser mit roter Farbe und färbt Polyacrylnitrilfasern in roten Tönen.

Analog zu der in Beispiel 11 beschriebenen Arbeitsweise kann man z. B. die in der Tabelle 11 aufgeführten Farbstoffe herstellen.

Tabelle 11

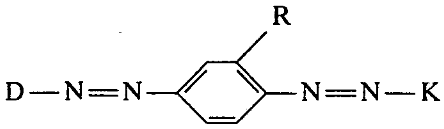

| Nr. | D | R | K | Farbton | λ max. (nm) |
|---|---|---|---|---|---|
| 1 | 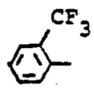 | $CO_2CH_3$ | 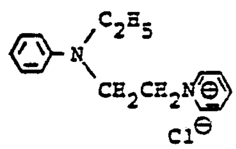 | rot | |
| 2 | 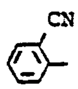 | " | " | " | |
| 3 | 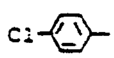 | " | " | " | |
| 4 | 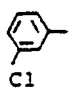 | " | " | " | |
| 5 | 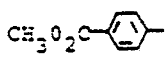 | " | " | " | |
| 6 | 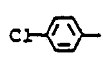 | $CON(CH_3)_2$ | " | " | |
| 7 | 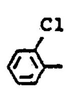 | 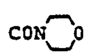 | " | " | |
| 8 | " | 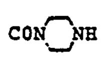 | " | " | |
| 9 | " | $CO_2CH_3$ | 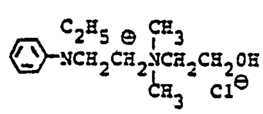 | | |
| 10 | " | " | 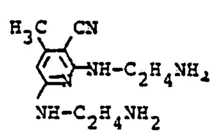 | " | |
| 11 | " | " | 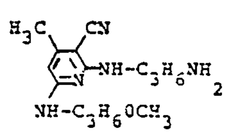 | " | |

Fortsetzung

| Nr. | D | R | K | Farbton | λmax. (nm) |
|---|---|---|---|---|---|
| 12 | 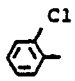 | $CO_2CH_3$ | 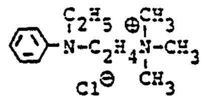 | rot | |
| 13 | " | " | 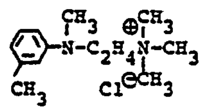 | " | |
| 14 | 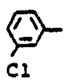 | " | " | " | |
| 15 | " | $CON(CH_3)_2$ | " | " | |
| 16 | " | CON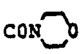 | " | " | |

Beispiel 12

303,5 Teile der Diazokomponente der Formel

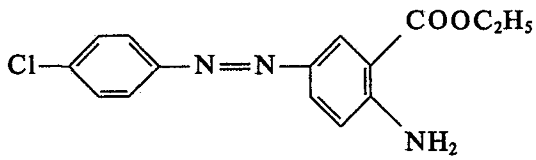

werden in einem Gemisch aus 750 Teilen Essigsäure und 750 Teilen Propionsäure bei 95°C gelöst. Nach Abkühlen auf 0–5°C wird durch Zugabe von 200 Raumteilen Nitrosylschwefelsäure (ca. 45%ig) diazotiert und 4 Stunden bei < 5°C gerührt. Nachdem Überschuß an Nitrosylschwefelsäure durch Zugabe von Harnstoff zerstört worden ist, läßt man 210 Teile p-Chlorphenyl-3-methyl-pyrazolon-5, gelöst in 400 Teilen N-Methylpyrrolidon, zulaufen und stellt dann mit ca. 200 Teilen Pyridin einen pH-Wert von 4 ein. Nach 1 Stunde ist die Kupplungsreaktion beendet. Man saugt ab, wäscht mit Methanol nach und trocknet bei 80°C. Man erhält 481 Teile eines brillanten, orange-farbenen Farbstoffs der Formel

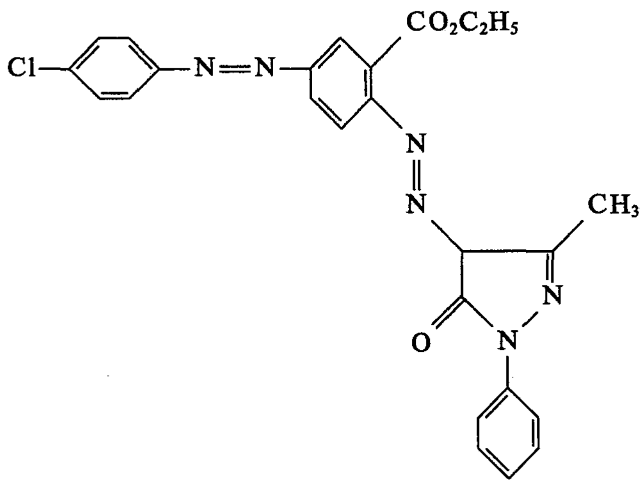

der Polyester/Baumwollmischgewebe in kräftigen gelben Tönen färbt.

Analog der in Beispiel 1 und 12 beschriebenen Arbeitsweise lassen sich die in den Tabellen 12, 13 und 14 genannten Farbstoffe herstellen.

Tabelle 12

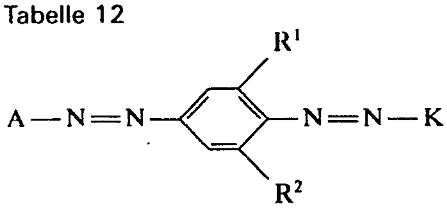

| Nr. | A | $R^1$ | $R^2$ | K | Farbton | λmax. (nm) oder Schmp. |
|---|---|---|---|---|---|---|
| 1 | 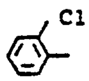 | $CO_2CH_3$ | H | 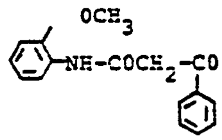 | gelb | 241 °C |
| 2 | " | $COOCH_3$ | H | 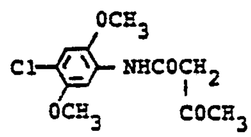 | " | 256 °C |
| 3 | " | " | H | 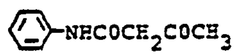 | " | 288 °C |
| 4 | " | " | H | 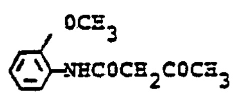 | " | 253 °C |
| 5 | " | $CO_2CH_3$ | H | 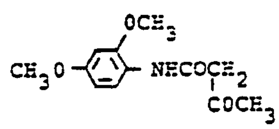 | " | 259 °C |
| 6 | " | " | Br | 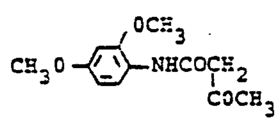 | " | 219 °C |
| 7 | " | " | H | 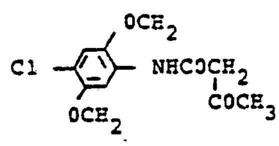 | " | 227 °C |
| 8 | " | " | H | 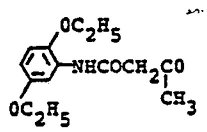 | " | 211 °C |
| 9 | " | COOH | H | 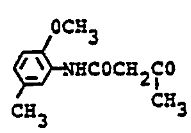 | " | 261 °C |
| 10 | " | " | H | 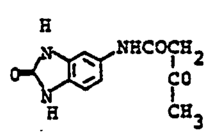 | " | > 300 °C |

Fortsetzung

| Nr. | A | $R^1$ | $R^2$ | K | Farbton | $\lambda$max. (nm) oder Schmp. |
|---|---|---|---|---|---|---|
| 11 | 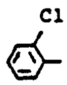 | COOH | H | 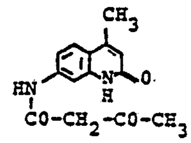 | gelb | > 36 °C |
| 12 | " | $COOC_2H_5$ | H | 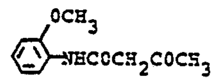 | " | 260 °C |
| 13 | " | " | H | 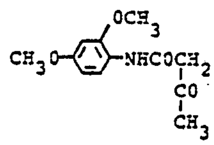 | " | 271 °C |
| 14 | " | " | H | 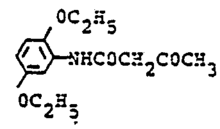 | " | 224 °C |
| 15 | " | " | H | 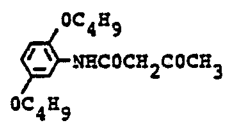 | " | 227 °C |
| 16 | " | " | H | 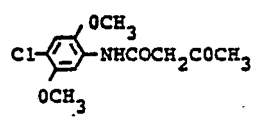 | " | 263 °C |
| 17 | " | $COOC_3H_7$ | H | 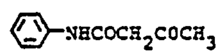 | " | 238 °C |
| 18 | " | " | H | 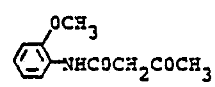 | " | 224 °C |
| 19 | " | " | H | 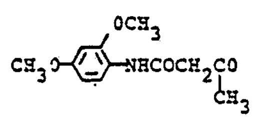 | " | 246 °C |
| 20 | " | " | H | 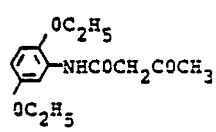 | " | 281 °C |
| 21 | " | 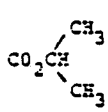 | H | 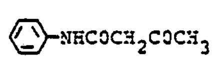 | " | 206 °C |

Fortsetzung

| Nr. | A | $R^1$ | $R^2$ | K | Farbton | λmax. (nm) oder Schmp. |
|---|---|---|---|---|---|---|
| 22 | 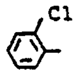 | 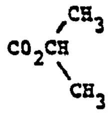 | H | 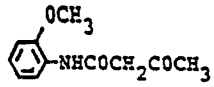 | gelb | 209 °C |
| 23 | " | " | H | 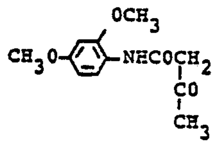 | " | 227 °C |
| 24 | " | " | H | 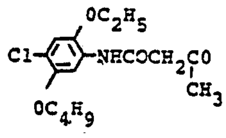 | " | 286 °C |
| 25 | " | " | H | 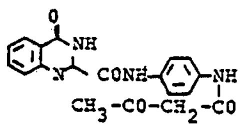 | " | > 300 °C |
| 26 | " | $CO_2C_6H_{13}$ | H | 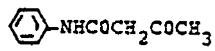 | | 203 °C |
| 27 | " | " | H | 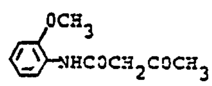 | " | 198 °C |
| 28 | " | $CO_2C_4H_9$ | H | 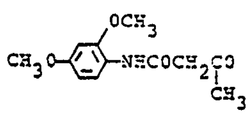 | " | 214 °C |
| 29 | 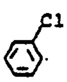 | $CO_2C_{10}H_{21}$(n) | H | 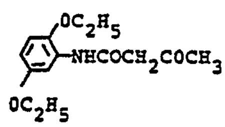 | " | 191 °C |
| 30 | " | $CO_2C_2H_5$ | Br | 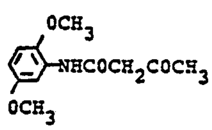 | " | 199 °C |
| 31 | 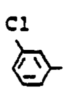 | $COOCH_3$ | H | 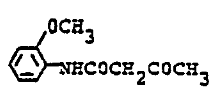 | " | 281 °C |
| 32 | " | $COOC_2H_5$ | H | 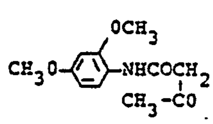 | | 266 °C |
| 33 | " | " | H | 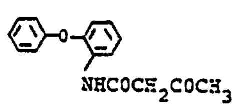 | " | |

Fortsetzung

| Nr. | A | $R^1$ | $R^2$ | K | Farbton | λmax. (nm) oder Schmp. |
|---|---|---|---|---|---|---|
| 34 | 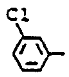 | $COOC_3H_7$ | H | 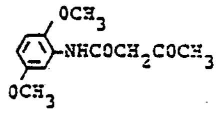 | gelb | 243 °C |
| 35 | " | " | H | 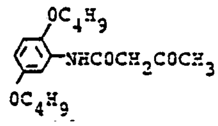 | " | 266 °C |
| 36 | " | $COOCH_3$ | H | 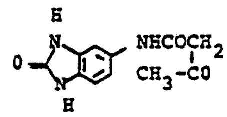 | " | 288 °C |
| 37 | " | " | H | 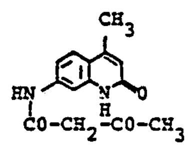 | " | 255 °C |
| 38 | 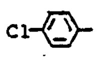 | $CO_2CH_3$ | H | 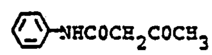 | " | 261 °C |
| 39 | " | " | H | 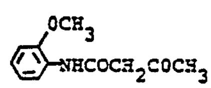 | " | 248 °C |
| 40 | " | " | H | 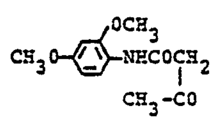 | " | 273 °C |
| 41 | " | " | H | 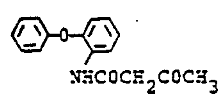 | " | 260 °C |
| 42 | " | $CO_2CH_3$ | H | 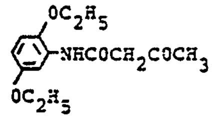 | " | 281 °C |
| 43 | " | " | H | 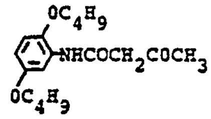 | " | 244 °C |
| 44 | " | " | H | 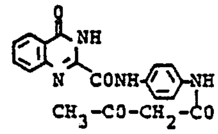 | " | 222 °C |

Fortsetzung

| Nr. | A | $R^1$ | $R^2$ | K | Farbton | $\lambda$max. (nm) oder Schmp. |
|---|---|---|---|---|---|---|
| 45 | 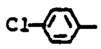 | $CO_2CH_3$ | H | 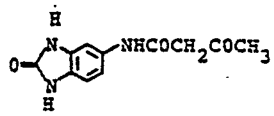 | gelb | 186 °C |
| 46 | " | " | H | 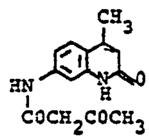 | " | 277 °C |
| 47 | " | " | H | 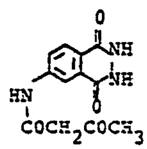 | " | 279 °C |
| 48 | " | $CO_2C_2H_5$ | H | 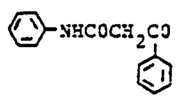 | " | 203 °C |
| 49 | " | " | H | 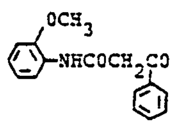 | " | 260 °C |
| 50 | " | " | H | 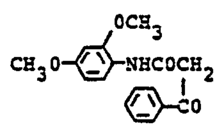 | " | 268 °C |
| 51 | " | " | H | 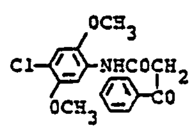 | " | 234 °C |
| 52 | " | " | H | 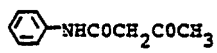 | " | 271 °C |
| 53 | " | " | H | 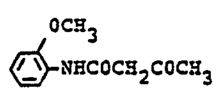 | " | 281 °C |
| 54 | " | " | H | 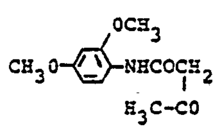 | " | 265 °C |
| 55 | " | " | H | 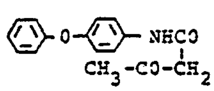 | " | 219 °C |
| 56 | " | " | H | 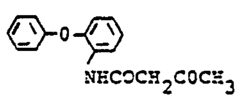 | " | 198 °C |

Fortsetzung

| Nr. | A | $R^1$ | $R^2$ | K | Farbton | λmax. (nm) oder Schmp. |
|---|---|---|---|---|---|---|
| 57 | 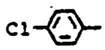 | $CO_2C_2H_5$ | H | 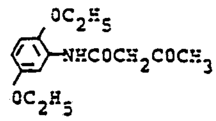 | gelb | 241 °C |
| 58 | " | " | H | 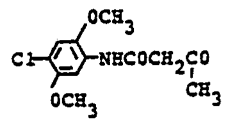 | " | 263 °C |
| 59 | " | " | H | 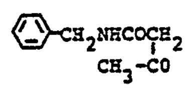 | " | 168 °C |
| 60 | " | " | H | 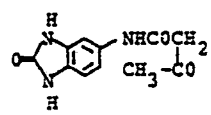 | " | 291 °C |
| 61 | " | $CO_2C_3H_7$ | H | 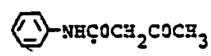 | " | 206 °C |
| 62 | " | " | H | 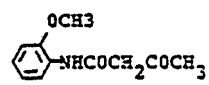 | " | 213 °C |
| 63 | " | " | H | 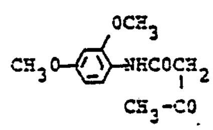 | " | 228 °C |
| 64 | " | " | H | 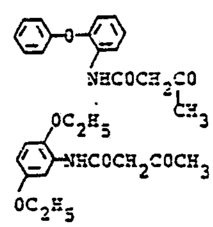 | " | 268 °C |
| 65 | " | " | H |  | " | 273 °C |
| 66 | " | " | H | 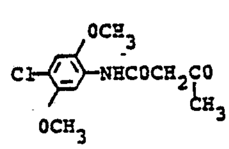 | " | 284 °C |
| 67 | " | " | H | 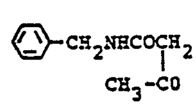 | " | 198 °C |
| 68 | " | 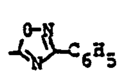 | H | 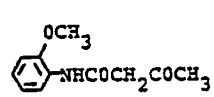 | " | 264 °C |

Fortsetzung

| Nr. | A | $R^1$ | $R^2$ | K | Farbton | λmax. (nm) oder Schmp. |
|---|---|---|---|---|---|---|
| 69 | 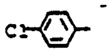 | $CO_2C_4H_9$ | H | 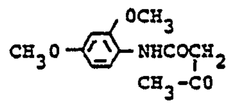 | gelb | 211 °C |
| 70 | " | 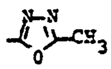 | H | 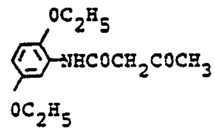 | " | 214 °C |
| 71 | " | $CO_2C_6H_{13}$ | H | 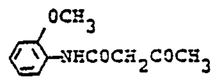 | " | 231 °C |
| 72 | " | " | H | 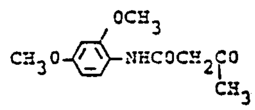 | " | 242 °C |
| 73 | " | 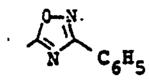 | H | 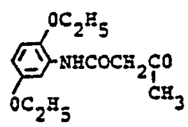 | " | 198 °C |
| 74 | " | $CO_2(CH_2)_2OCH_3$ | H | 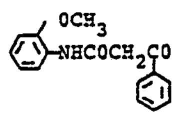 | " | 264 °C |
| 75 | " | " | H | 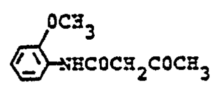 | " | 236 °C |
| 76 | " | " | H | 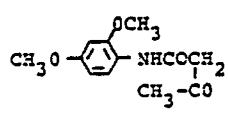 | " | 288 °C |
| 77 | " | " | H | 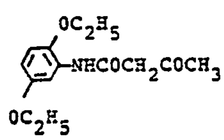 | " | 294 °C |
| 78 | " | $CO_2(CH_2)_2OC_3H_7$ | H | 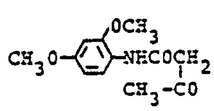 | " | 284 °C |
| 79 | " | " | H | 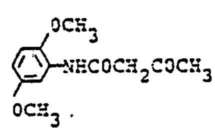 | " | 266 °C |
| 80 | " | $CO_2C_{10}H_{21}$ | H | 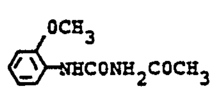 | " | 100 °C |

Fortsetzung

| Nr. | A | $R^1$ | $R^2$ | K | Farbton | λmax. (nm) oder Schmp. |
|---|---|---|---|---|---|---|
| 81 | 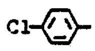 | $CO_2C_{10}H_{21}$ | H | 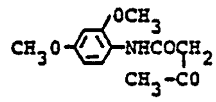 | gelb | 214 °C |
| 82 | " | 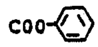 | H | 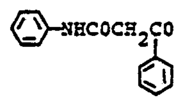 | " | 264 °C |
| 83 | " | 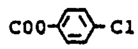 | H | 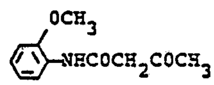 | " | 291 °C |
| 84 | " | " | H | 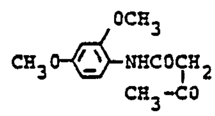 | " | |
| 85 | " | 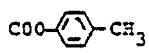 | H | 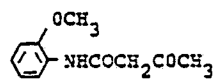 | " | 277 °C |
| 86 | " | 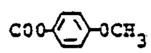 | H | " | " | 279 °C |
| 87 | " | 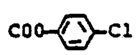 | H | 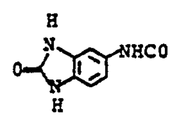 | " | 286 °C |
| 88 | " | 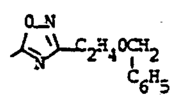 | H | 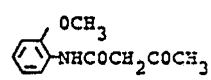 | " | 214 °C |
| 89 | " | " | H | 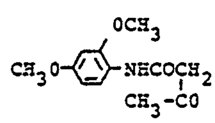 | " | 229 °C |
| 90 | " | 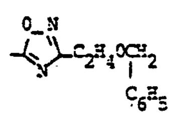 | H | 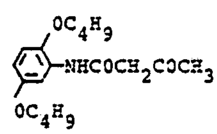 | " | 238 °C |
| 91 | " | $-CON(CH_2)_2$ | H | 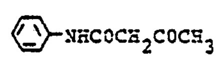 | " | 236 °C |
| 92 | " | " | H | 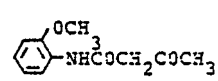 | " | 284 °C |
| 93 | " | $CON(CH_3)_2$ | H | 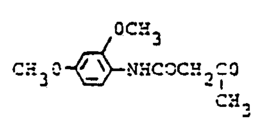 | " | 229 °C |

Fortsetzung

| Nr. | A | $R^1$ | $R^2$ | K | Farbton | λmax. (nm) oder Schmp. |
|---|---|---|---|---|---|---|
| 94 | 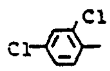 | $CO_2CH_3$ | H | 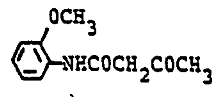 | gelb | 284 °C |
| 95 | " | " | H | 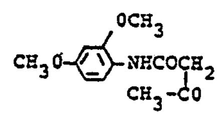 | " | 294 °C |
| 96 | " | " | H | 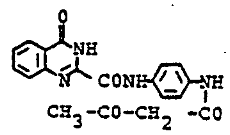 | " | ⟩ 300 °C |
| 97 | " | " | H | 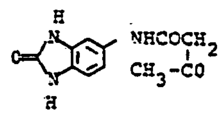 | " | 226 °C |
| 98 | " | $CO_2C_2H_5$ | H | 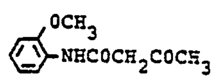 | " | 299 °C |
| 99 | " | " | H | 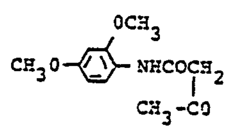 | " | 261 °C |
| 100 | " | " | H | 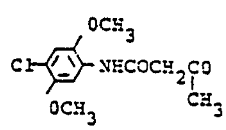 | " | 243 °C |
| 101 | " | " | H | 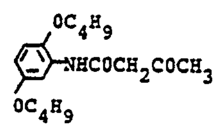 | " | 246 °C |
| 102 | 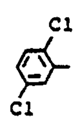 | $CO_2CH_3$ | H | 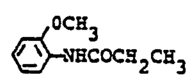 | " | 274 °C |
| 103 | " | " | H | 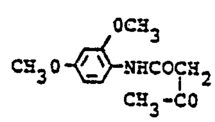 | " | 268 °C |
| 104 | " | 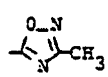 | H | 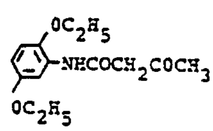 | " | 213 °C |
| 105 | " | " | H | 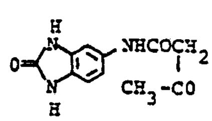 | " | 296 °C |

Fortsetzung

| Nr. | A | $R^1$ | $R^2$ | K | Farbton | λmax. (nm) oder Schmp. |
|---|---|---|---|---|---|---|
| 106 | 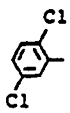 | 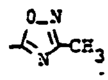 | H | 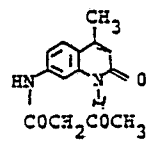 | gelb | 318 °C |
| 107 | " | $COOC_3H_7$ | H | 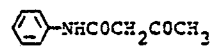 | " | 213 °C |
| 108 | " | " | H | 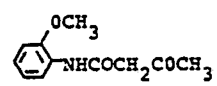 | " | 208 °C |
| 109 | " | " | H | 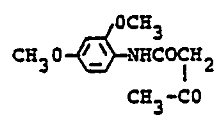 | " | 246 °C |
| 110 | " | " | H | 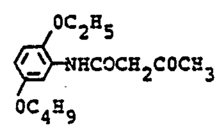 | " | 199 °C |
| 111 | 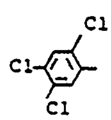 | $COOC_2H_5$ | H | 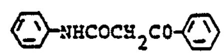 | " | 231 °C |
| 112 | " | " | H | 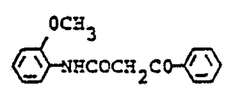 | " | 249 °C |
| 113 | " | $COOCH_3$ | H | 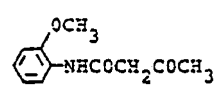 | " | 288 °C |
| 114 | " | $COOC_2H_5$ | H | 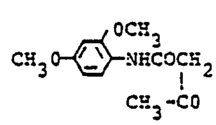 | | 298 °C |
| 115 | " | $COOC_3H_7$ | H | 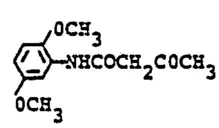 | " | 271 °C |
| 116 | " | 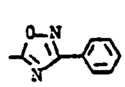 | H | 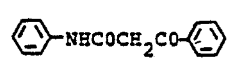 | " | 264 °C |

Fortsetzung

| Nr. | A | $R^1$ | $R^2$ | K | Farbton | λmax. (nm) oder Schmp. |
|---|---|---|---|---|---|---|
| 117 | 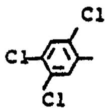 | 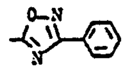 | H | 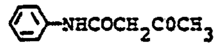 | gelb | 273 °C |
| 118 | " | " | H | 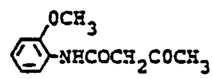 | " | 258 °C |
| 119 | " | " | H | 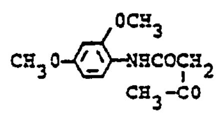 | " | 264 °C |
| 120 | " | " | H | 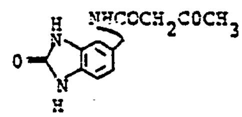 | " | 286 °C |
| 121 | " | " | H | 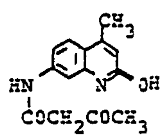 | " | 281 °C |
| 122 | 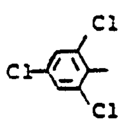 | $COOC_3H_7$ | H | 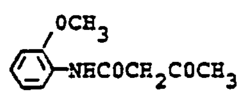 | " | 231 °C |
| 123 | 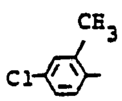 | $COOCH_3$ | H | 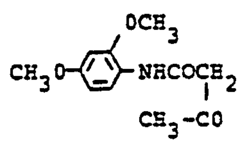 | " | 229 °C |
| 124 | 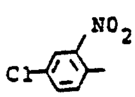 | " | H | 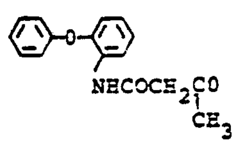 | " | 268 °C |
| 125 | 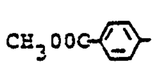 | " | H | 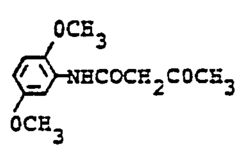 | " | 271 °C |
| 127 | 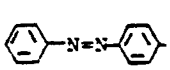 | $CO_2CH_3$ | H | 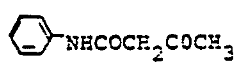 | " | 217 °C |
| 128 | " | " | H | 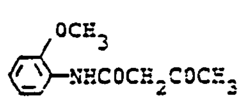 | " | 243 °C |

Fortsetzung

| Nr. | A | $R^1$ | $R^2$ | K | Farbton | λmax. (nm) oder Schmp. |
|---|---|---|---|---|---|---|
| 129 | 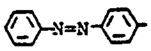 | $CO_2CH_3$ | H | 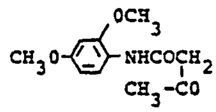 | gelb | 268 °C |
| 130 | " | 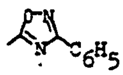 | H | 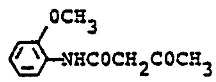 | " | 231 °C |
| 131 | 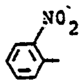 | $COOCH_3$ | H | 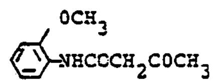 | " | 206 °C |
| 132 | 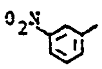 | " | H | 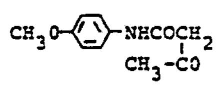 | " | 243 °C |
| 133 | 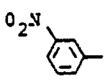 | 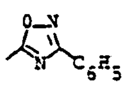 | H | 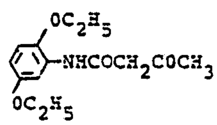 | " | 251 °C |
| 134 | 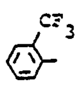 | $COOCH_3$ | H | 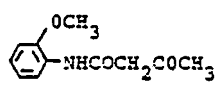 | " | 273 °C |
| 135 | " | " | H | 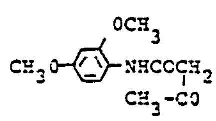 | " | 213 °C |
| 136 | " | $COOC_3H_7$ | H | 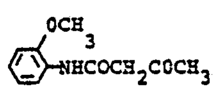 | " | 268 °C |
| 137 | " | 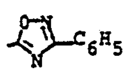 | H | " | " | 231 °C |
| 138 | " | $COOCH_3$ | H | 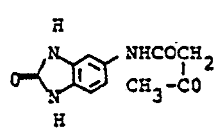 | " | 271 °C |
| 139 | " | $COOC_2H_5$ | H | 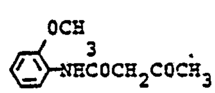 | " | 276 °C |
| 140 | " | $COOC_3H_7$ | H | 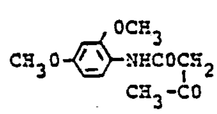 | " | 209 °C |
| 141 | 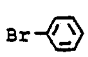 | $COOCH_3$ | H | 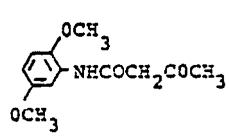 | " | 286 °C |

Tabelle 13

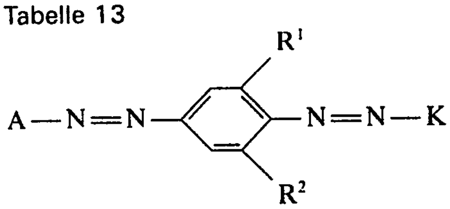

| Nr. | A | $R_1$ | $R_2$ | K | Farbton | λmax. (nm) oder Schmp. |
|---|---|---|---|---|---|---|
| 1 | 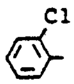 | $CO_2CH_3$ | H | 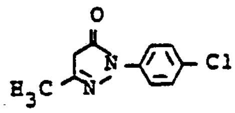 | gelb | 243 °C |
| 2 | " | " | H | 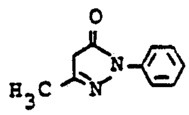 | " | 276 °C |
| 3 | " | " | H | 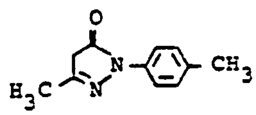 | " | 251 °C |
| 4 | " | " | H | 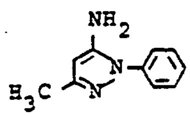 | orange | 276 °C |
| 5 | " | " | H | 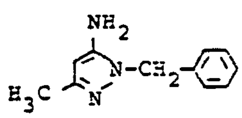 | " | 231 °C |
| 6 | " | " | H | 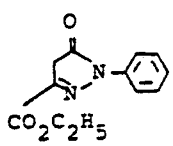 | gelb | 298 °C |
| 7 | " | " | H | 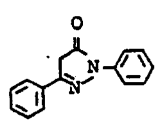 | " | 250 °C |
| 8 | " | " | H | 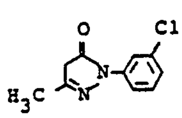 | " | 270 °C |
| 9 | " | $COOC_2H_5$ | H | 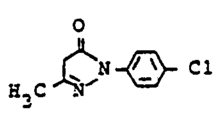 | " | 238 °C |
| 10 | " | " | H | 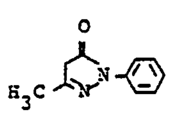 | " | |

Fortsetzung

| Nr. | A | $R_1$ | $R_2$ | K | Farbton | λmax. (nm) oder Schmp. |
|---|---|---|---|---|---|---|
| 11 | 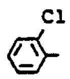 | $COOC_2H_5$ | H | 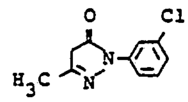 | gelb | 257 °C |
| 12 | " | " | H | 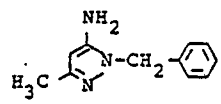 | orange | 231 °C |
| 13 | " | " | H | 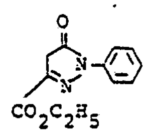 | gelb | 256 °C |
| 14 | " | " | H | 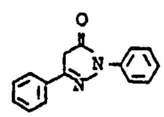 | " | 294 °C |
| 15 | " | " | H | 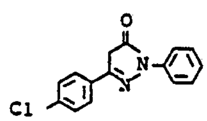 | " | 270 °C |
| 16 | " | " | H | 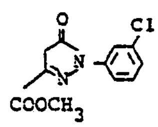 | " | 279 °C |
| 17 | " | $CO_2C_3H_7$ | H | 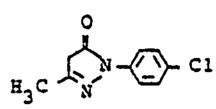 | " | 283 °C |
| 18 | " | " | H | 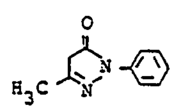 | " | 285 °C |
| 19 | " | " | H | 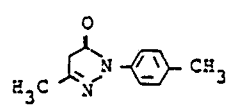 | " | 274 °C |
| 20 | " | " | H | 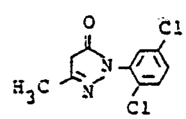 | " | 288 °C |
| 21 | " | " | H | 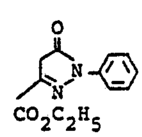 | orange | 276 °C |
| 22 | " | " | H | 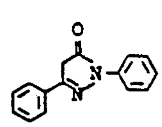 | " | 245 °C |

Fortsetzung

| Nr. | A | $R_1$ | $R_2$ | K | Farbton | λmax. (nm) oder Schmp. |
|---|---|---|---|---|---|---|
| 23 | 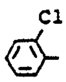 | $CO_2C_3H_7$ | H | 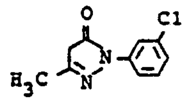 | orange | 248 °C |
| 24 | " | 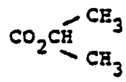 | H | 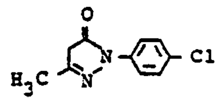 | gelb | 241 °C |
| 25 | " | " | H | 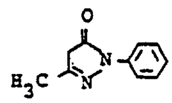 | " | 227 °C |
| 26 | " | " | H | 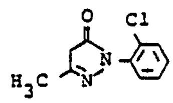 | " | 268 °C |
| 27 | " | " | H | 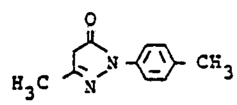 | " | 253 °C |
| 28 | " | " | H | 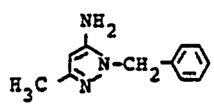 | orange | 266 °C |
| 29 | " | " | H | 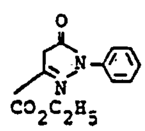 | gelb | 288 °C |
| 30 | " | " | H | 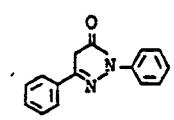 | " | 291 °C |
| 31 | " | $COOC_6H_{13}$ | H | 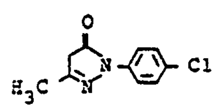 | " | 274 °C |
| 32 | " | " | H | 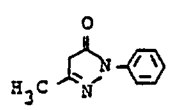 | " | 284 °C |
| 33 | " | " | H | 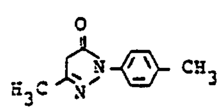 | " | 283 °C |
| 34 | " | " | H | 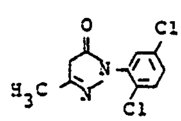 | " | 211 °C |

Fortsetzung

| Nr. | A | $R_1$ | $R_2$ | K | Farbton | λmax. (nm) oder Schmp. |
|---|---|---|---|---|---|---|
| 35 | 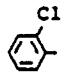 | $COOC_{10}H_{21}$ | H | 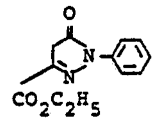 | gelb | 277 °C |
| 36 | 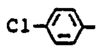 | $COOC_6H_{13}$ | H | 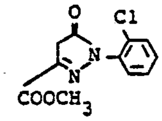 | " | 214 °C |
| 37 | " | " | H | 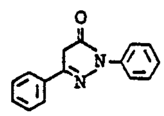 | " | 268 °C |
| 38 | " | " | H | 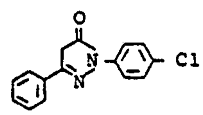 | " | 282 °C |
| 39 | " | " | H | 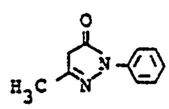 | " | 296 °C |
| 40 | 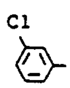 | $COOC_2H_5$ | H | 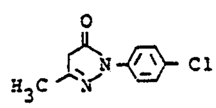 | " | 223 °C |
| 41 | " | " | H | 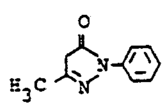 | " | 257 °C |
| 42 | " | " | H | 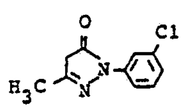 | " | 231 °C |
| 43 | " | " | H | 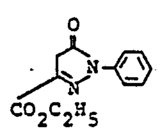 | " | 268 °C |
| 44 | " | " | H | 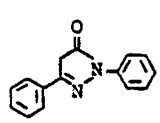 | " | 233 °C |
| 45 | " | $COOCH_3$ | H | 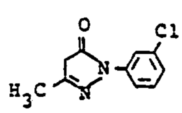 | " | 244 °C |
| 46 | " | " | H | 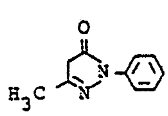 | " | 261 °C |

Fortsetzung

| Nr. | A | $R_1$ | $R_2$ | K | Farbton | λmax. (nm) oder Schmp. |
|---|---|---|---|---|---|---|
| 47 | 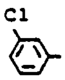 | $COO(CH_2)_2OCH_3$ | H | 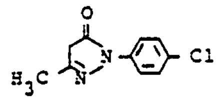 | gelb | 248 °C |
| 48 | " | " | H | 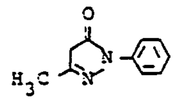 | " | 250 °C |
| 49 | " | " | H | 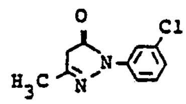 | " | 236 °C |
| 50 | " | " | H | 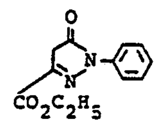 | " | 235 °C |
| 51 | " | " | H | 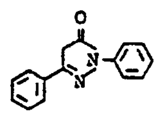 | " | 255 °C |
| 52 | " | 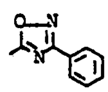 | H | 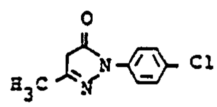 | " | 291 °C |
| 53 | " | " | H | 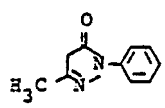 | " | 266 °C |
| 54 | " | " | H | 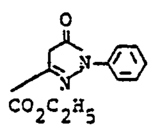 | " | 281 °C |
| 55 | " | " | H | 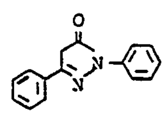 | " | 291 °C |
| 56 | 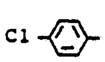 | $COOCH_3$ | H | 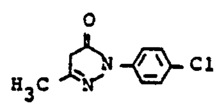 | " | 286 °C |
| 57 | " | " | H | 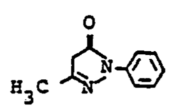 | " | 223 °C |
| 58 | " | " | H | 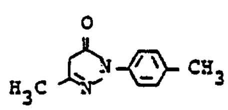 | " | 266 °C |

Fortsetzung

| Nr. | A | $R_1$ | $R_2$ | K | Farbton | λmax. (nm) oder Schmp. |
|---|---|---|---|---|---|---|
| 59 | Cl-⟨phenyl⟩- | $COOCH_3$ | H | 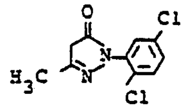 | gelb | 266 °C |
| 60 | " | " | H | 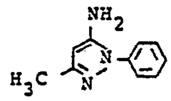 | orange | 228 °C |
| 61 | " | " | H | 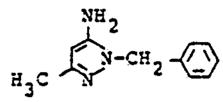 | " | 234 °C |
| 62 | " | " | H | 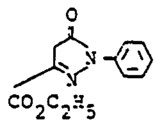 | gelb | 207 °C |
| 63 | " | " | H | 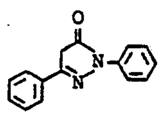 | " | 237 °C |
| 64 | " | " | H | 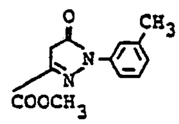 | " | 242 °C |
| 65 | " | $COOC_2H_5$ | H | 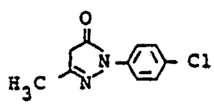 | " | 246 °C |
| 66 | " | " | H | 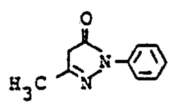 | " | 281 °C |
| 67 | " | " | H | 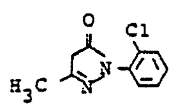 | " | 253 °C |
| 68 | " | " | H | 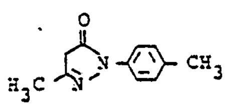 | " | 255 °C |
| 69 | " | " | H | 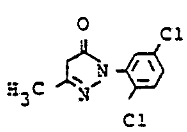 | " | 286 °C |
| 70 | " | " | H | 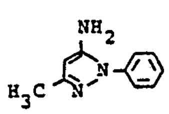 | orange | 231 °C |

Fortsetzung

| Nr. | A | $R_1$ | $R_2$ | K | Farbton | $\lambda$max. (nm) oder Schmp. |
|---|---|---|---|---|---|---|
| 71 | 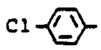 | $COOC_2H_5$ | H | 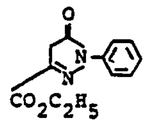 | gelb | 283 °C |
| 72 | " | " | H | 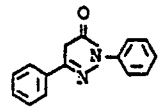 | " | 285 °C |
| 73 | " | " | H | 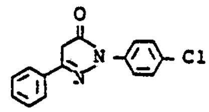 | " | 261 °C |
| 74 | " | " | H | 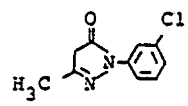 | " | 261 °C |
| 75 | " | " | H | 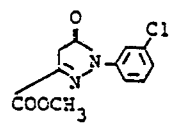 | " | 245 °C |
| 76 | " | " | H | 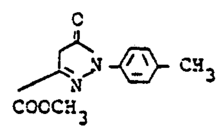 | " | 220 °C |
| 77 | " | " | Br | 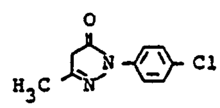 | " | 219 °C |
| 78 | " | " | " | 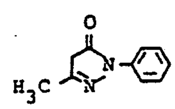 | " | 288 °C |
| 79 | " | " | " | 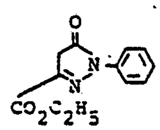 | " | 201 °C |
| 80 | " | $COOC_3H_7$ | H | 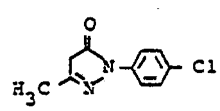 | " | 293 °C |
| 81 | " | " | H | 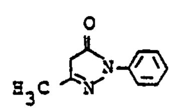 | " | 266 °C |
| 82 | " | " | H | 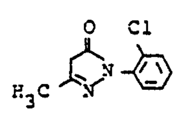 | " | 285 °C |

Fortsetzung

| Nr. | A | $R_1$ | $R_2$ | K | Farbton | λmax. (nm) oder Schmp. |
|---|---|---|---|---|---|---|
| 83 | 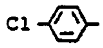 | $COOC_3H_7$ | H | 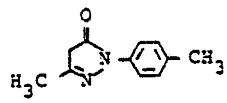 | gelb | 265 °C |
| 84 | " | " | H | 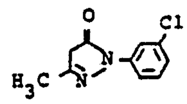 | " | 205 °C |
| 85 | " | " | H | 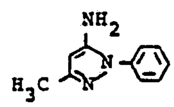 | orange | 257 °C |
| 86 | " | " | H | 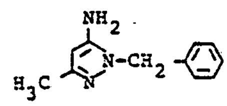 | " | 238 °C |
| 87 | " | " | H | 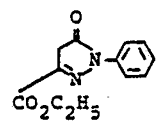 | gelb | 232 °C |
| 88 | " | " | H | 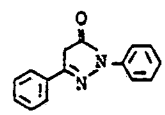 | " | 219 °C |
| 89 | " | " | H | 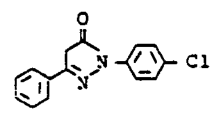 | " | 211 °C |
| 90 | " | " | H | 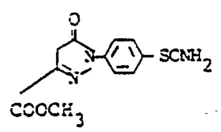 | " | 266 °C |
| 91 | " | 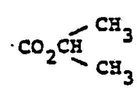 | H | 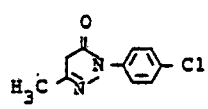 | " | 220 °C |
| 92 | " | " | H | 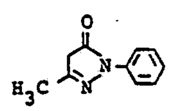 | " | 225 °C |
| 93 | " | " | H | 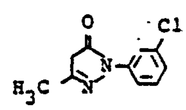 | " | 257 °C |
| 94 | " | " | H | 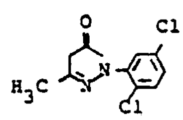 | " | 266 °C |

Fortsetzung

| Nr. | A | $R_1$ | $R_2$ | K | Farbton | λmax. (nm) oder Schmp. |
|---|---|---|---|---|---|---|
| 95 | 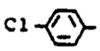 | 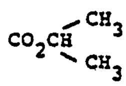 | H | 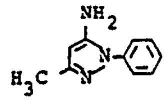 | orange | 236 °C |
| 96 | " | " | H | 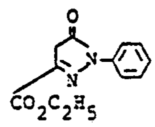 | " | 288 °C |
| 97 | " | " | H | 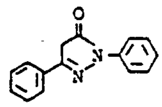 | " | 250 °C |
| 98 | " | " | H | 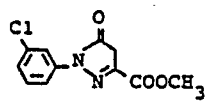 | gelb | 261 °C |
| 99 | " | $COOC_4H_9$ | H | 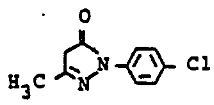 | " | 228 °C |
| 100 | " | " | H | 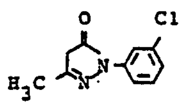 | " | 230 °C |
| 101 | " | " | H | 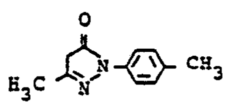 | " | 231 °C |
| 102 | " | " | H | 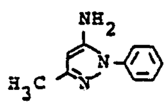 | orange | 283 °C |
| 103 | " | " | H | 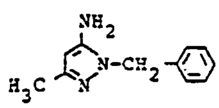 | " | 286 °C |
| 104 | " | " | H | 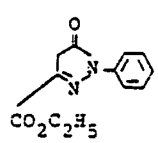 | gelb | 228 °C |
| 105 | " | " | H | 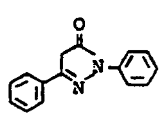 | " | 251 °C |
| 106 | " | $COO(CH_2)_2OCH_3$ | H | 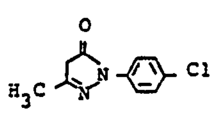 | " | 198 °C |

Fortsetzung

| Nr. | A | $R_1$ | $R_2$ | K | Farbton | λmax. (nm) oder Schmp. |
|---|---|---|---|---|---|---|
| 107 | 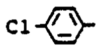 | $COO(CH_2)_2OCH_3$ | H | 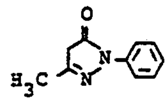 | gelb | 253 °C |
| 108 | " | " | H | 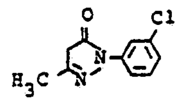 | " | 286 °C |
| 109 | " | " | H | 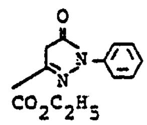 | " | 246 °C |
| 110 | " | " | H | 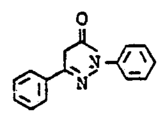 | " | 250 °C |
| 111 | " | $CO_2(CH_2)_2O(CH_2)_2OCH_3$ | H | 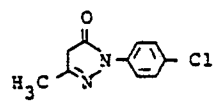 | " | 240 °C |
| 112 | " | " | H | 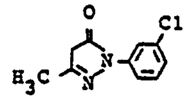 | " | 241 °C |
| 113 | " | " | H | 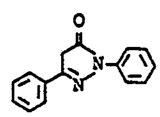 | orange | 298 °C |
| 114 | " | 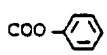 | H | 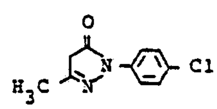 | gelb | 220 °C |
| 115 | " | 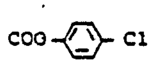 | H | 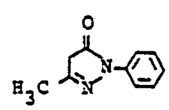 | " | 270 °C |
| 116 | " | " | H | 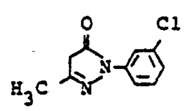 | " | 231 °C |
| 117 | " | 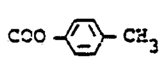 | H | 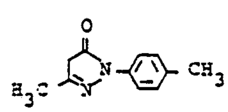 | " | 260 °C |
| 118 | " | 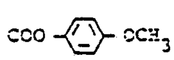 | H | 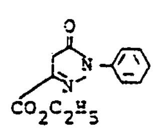 | " | 261 °C |

Fortsetzung

| Nr. | A | $R_1$ | $R_2$ | K | Farbton | λmax. (nm) oder Schmp. |
|---|---|---|---|---|---|---|
| 119 | 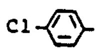 | $CO_2C_{10}H_{21}$ | H | 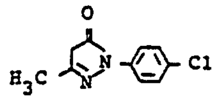 | gelb | 219 °C |
| 120 | " | " | H | 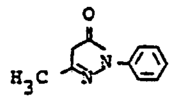 | " | 218 °C |
| 121 | " | " | H | 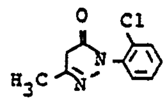 | " | 215 °C |
| 122 | " | " | H | 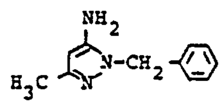 | orange | 266 °C |
| 123 | " | " | H | 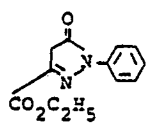 | gelb | 213 °C |
| 124 | " | " | H | 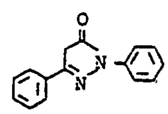 | " | 286 °C |
| 125 | " | 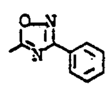 | H | 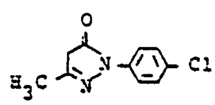 | " | 230 °C |
| 126 | " | " | H | 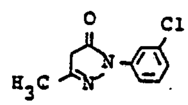 | " | 212 °C |
| 127 | " | " | H | 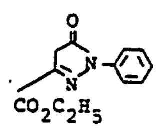 | " | 219 °C |
| 128 | " | 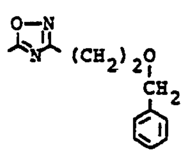 | H | 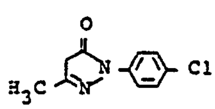 | " | 221 °C |
| 129 | " | " | H | 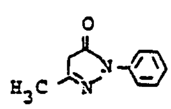 | " | 223 °C |
| 130 | " | " | H | 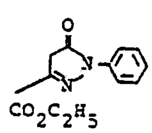 | " | 268 °C |

Fortsetzung

| Nr. | A | $R_1$ | $R_2$ | K | Farbton | λmax. (nm) oder Schmp. |
|---|---|---|---|---|---|---|
| 131 | 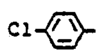 | 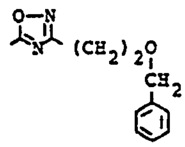 | H | 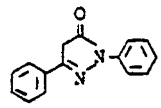 | gelb | 236 °C |
| 132 | " | $CON(CH_3)_2$ | H | 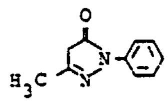 | " | 238 °C |
| 133 | " | " | H | 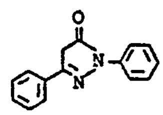 | " | 248°C |
| 134 | " | " | Br | 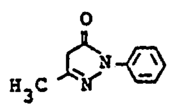 | " | 252°C |
| 135 | " | 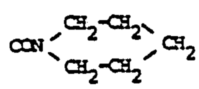 | H | 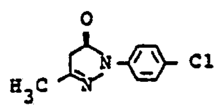 | " | 273°C |
| 136 | " | " | H | 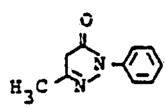 | " | 278°C |
| 137 | " | " | H | 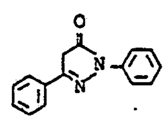 | " | 292°C |
| 138 | 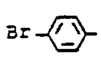 | $COOC_2H_5$ | H | 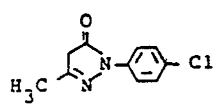 | " | 293°C |
| 139 | " | " | H | 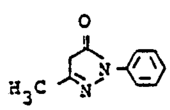 | " | 228°C |
| 140 | " | " | H | 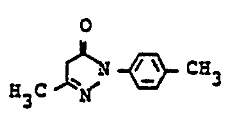 | " | 264 °C |
| 141 | " | " | H | 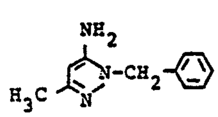 | orange | 281 °C |
| 142 | " | " | H | 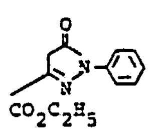 | gelb | 200 °C |

Fortsetzung

| Nr. | A | $R_1$ | $R_2$ | K | Farbton | λmax. (nm) oder Schmp. |
|---|---|---|---|---|---|---|
| 143 | 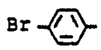 | $COOC_2H_5$ | H | 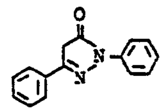 | gelb | 264 °C |
| 144 | " | $COOCH_3$ | H | 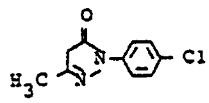 | " | 275 °C |
| 145 | " | $COOC_3H_7$ | H | 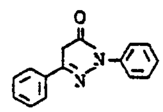 | " | 236 °C |
| 146 | " | $CON(C_2H_5)_2$ | H | 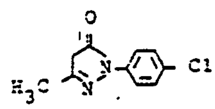 | " | 263 °C |
| 147 | " | " | H | 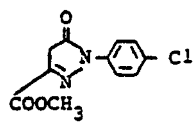 | " | 268 °C |
| 148 | " | 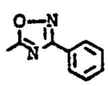 | H | 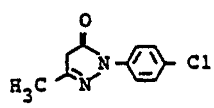 | " | 272 °C |
| 149 | " | " | H | 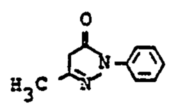 | " | 274 °C |
| 150 | " | " | H | 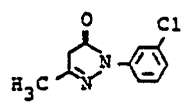 | " | 244 °C |
| 151 | " | " | H | 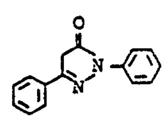 | " | 223 °C |
| 152 | 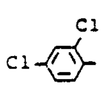 | $COOCH_3$ | H | 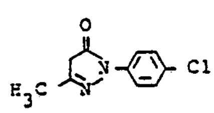 | " | 216 °C |
| 153 | " | " | H | 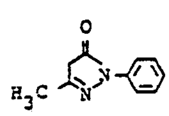 | " | 228 °C |
| 154 | " | " | H | 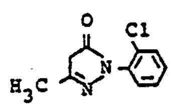 | " | 271 °C |

Fortsetzung

| Nr. | A | $R_1$ | $R_2$ | K | Farbton | λmax. (nm) oder Schmp. |
|---|---|---|---|---|---|---|
| 155 | 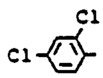 | $COOCH_3$ | H | 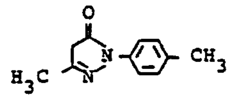 | gelb | 233 °C |
| 156 | " | " | H | 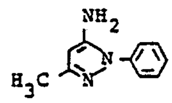 | orange | 271 °C |
| 157 | " | " | H | 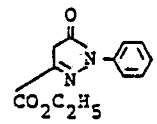 | gelb | 288 °C |
| 158 | " | " | H | 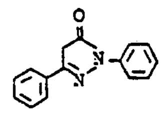 | " | 240 °C |
| 159 | " | $COOC_2H_5$ | H | 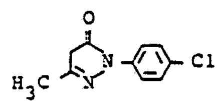 | " | 241 °C |
| 160 | " | " | H | 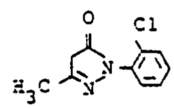 | " | 230 °C |
| 161 | " | " | H | 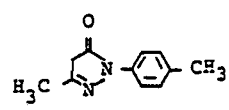 | " | 238 °C |
| 162 | " | " | H | 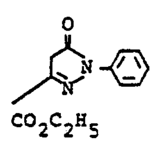 | " | 242 °C |
| 163 | " | " | H | 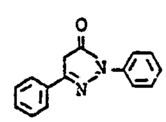 | " | 269 °C |
| 164 | " | $COOC_3H_7$ | H | 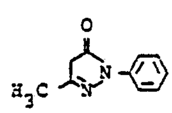 | " | 216 °C |
| 165 | " | $COOC_6H_{13}$ | H | " | " | 280 °C |
| 166 | " | $COOC_{10}H_{21}$ | H | 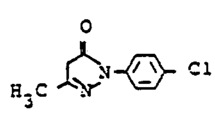 | " | 281 °C |

Fortsetzung

| Nr. | A | $R_1$ | $R_2$ | K | Farbton | λmax. (nm) oder Schmp. |
|---|---|---|---|---|---|---|
| 167 | 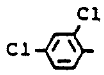 | $COOC_{10}H_{21}$ | H | 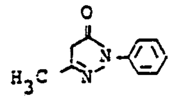 | gelb | 286 °C |
| 168 | " | 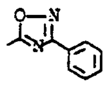 | H | 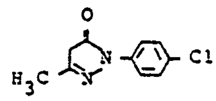 | " | 190 °C |
| 169 | " | " | H | 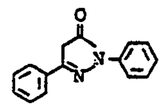 | " | 299 °C |
| 170 | 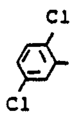 | $COOCH_3$ | H | 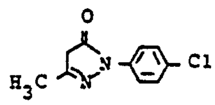 | " | 248 °C |
| 171 | " | " | H | 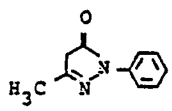 | " | 274 °C |
| 172 | " | " | H | 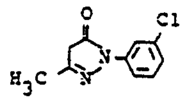 | " | 252 °C |
| 173 | " | " | H | 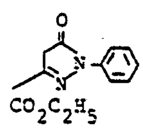 | " | 226 °C |
| 174 | " | " | H | 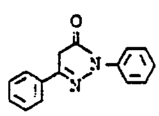 | " | 258 °C |
| 175 | " | $COOC_2H_5$ | H | 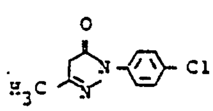 | " | 213 °C |
| 176 | " | " | H | 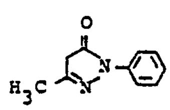 | " | 219 °C |
| 177 | " | " | H | 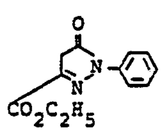 | " | 242 °C |
| 178 | " | " | H | 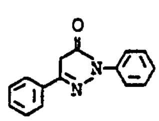 | " | 256 °C |

Fortsetzung

| Nr. | A | $R_1$ | $R_2$ | K | Farbton | λmax. (nm) oder Schmp. |
|---|---|---|---|---|---|---|
| 179 | 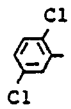 | $COOC_2H_5$ | H | 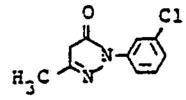 | gelb | 265 °C |
| 180 | " | $CO_2C_3H_7$ | H | 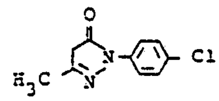 | " | 256 °C |
| 181 | " | " | H | 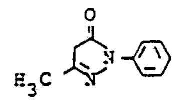 | " | 260 °C |
| 182 | " | " | H | 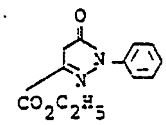 | " | 239 °C |
| 183 | " | " | H | 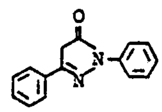 | " | 249 °C |
| 184 | " | $COOC_4H_9$ | H | 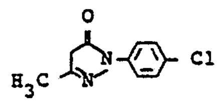 | " | 242 °C |
| 185 | " | $COOC_6H_{13}$ | H | " | " | 276 °C |
| 186 | " | 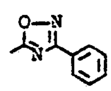 | H | 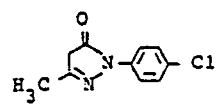 | " | 268 °C |
| 187 | " | " | H | 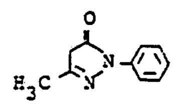 | " | 248 °C |
| 188 | " | " | H | 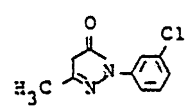 | " | 278 °C |
| 189 | 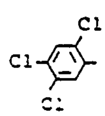 | $CCOC_2H_5$ | H | 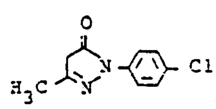 | " | 251 °C |
| 190 | " | " | H | 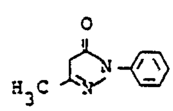 | " | 248 °C |
| 191 | " | " | H | 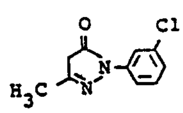 | " | 241 °C |

Fortsetzung

| Nr. | A | $R_1$ | $R_2$ | K | Farbton | λmax. (nm) oder Schmp. |
|---|---|---|---|---|---|---|
| 192 | 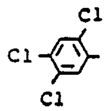 | $COOC_2H_5$ | H | 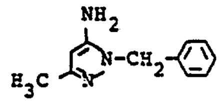 | orange | 239 °C |
| 193 | " | " | H | 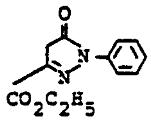 | gelb | 248 °C |
| 194 | " | " | H | 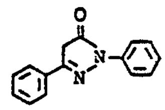 | " | 250 °C |
| 195 | " | $COOCH_3$ | H | 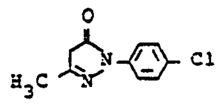 | " | 231 °C |
| 196 | " | $COOC_3H_7$ | H | 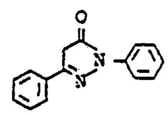 | " | 253 °C |
| 197 | " | $COOC_6H_{13}$ | H | " | " | |
| 198 | " | 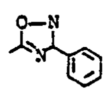 | H | 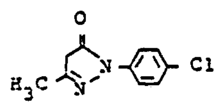 | " | 281 °C |
| 199 | " | " | H | 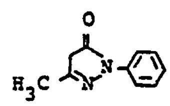 | " | 261 °C |
| 200 | " | " | H | 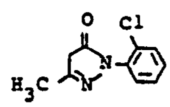 | " | 280 °C |
| 201 | " | " | H | 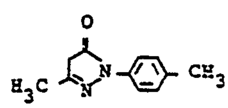 | " | 260 °C |
| 202 | " | " | H | 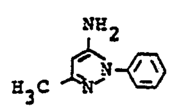 | orange | 219 °C |
| 203 | " | " | H | 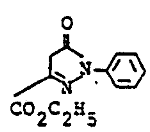 | gelb | 278 °C |
| 204 | " | " | H | 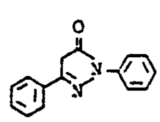 | " | 217 °C |

Fortsetzung

| Nr. | A | $R_1$ | $R_2$ | K | Farbton | λmax. (nm) oder Schmp. |
|---|---|---|---|---|---|---|
| 205 | 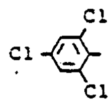 | $COOCH_3$ | H | 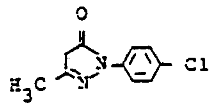 | gelb | 283 °C |
| 206 | " | " | H | 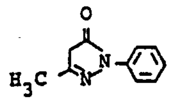 | " | 227 °C |
| 207 | " | " | H | 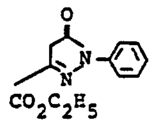 | " | 273 °C |
| 208 | " | " | H | 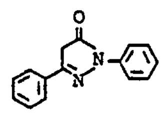 | " | 244 °C |
| 209 | " | $COOC_3H_7$ | H | 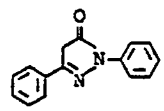 | " | 253 °C |
| 210 | " | $COOC_6H_{13}$ | H | 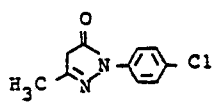 | " | 256 °C |
| 211 | 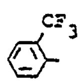 | $COOCH_3$ | H | 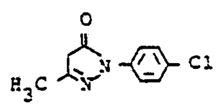 | " | 263 °C |
| 212 | " | " | H | 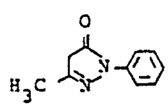 | " | 259 °C |
| 213 | " | " | H | 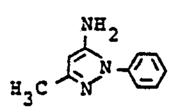 | orange | 243 °C |
| 214 | " | " | H | 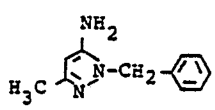 | " | 225 °C |
| 215 | " | " | H | 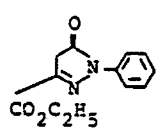 | gelb | 249 °C |
| 216 | " | " | H | 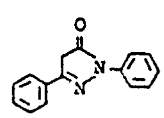 | " | 281 °C |

Fortsetzung

| Nr. | A | $R_1$ | $R_2$ | K | Farbton | λmax. (nm) oder Schmp. |
|---|---|---|---|---|---|---|
| 217 | 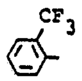 | $COOCH_3$ | H | 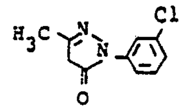 | gelb | 263 °C |
| 218 | " | $COOC_2H_5$ | H | 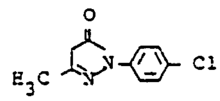 | " | 261 °C |
| 219 | " | " | H | 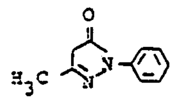 | " | 288 °C |
| 220 | " | " | H | 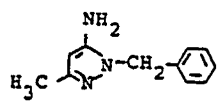 | orange | 250 °C |
| 221 | " | " | H | 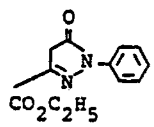 | " | 213 °C |
| 222 | " | " | H | 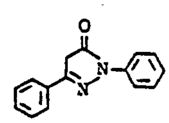 | " | 205 °C |
| 223 | " | " | H | 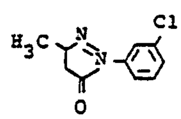 | " | 206 °C |
| 224 | " | $CO_2C_3H_7$ | H | 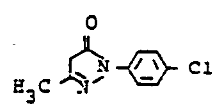 | gelb | 224 °C |
| 225 | " | " | H | 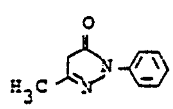 | " | 223 °C |
| 226 | " | " | H | 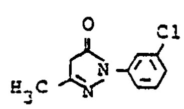 | " | 209 °C |
| 227 | " | " | H | 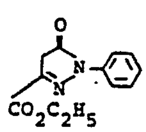 | " | 241 °C |
| 228 | " | " | H | 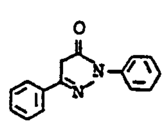 | " | 214 °C |

Fortsetzung

| Nr. | A | $R_1$ | $R_2$ | K | Farbton | λmax. (nm) oder Schmp. |
|---|---|---|---|---|---|---|
| 229 | 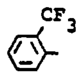 | $CO_2C_4H_9$ | H | 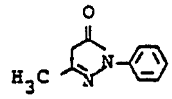 | gelb | 228 °C |
| 230 | " | $CO_2C_6H_{13}$ | H | " | " | 231 °C |
| 231 | 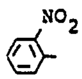 | $COOCH_3$ | H | 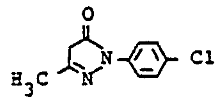 | " | 234 °C |
| 232 | " | " | H | 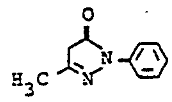 | " | 281 °C |
| 233 | " | " | H | 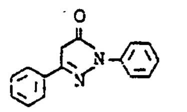 | " | 233 °C |
| 234 | " | 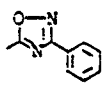 | Br | 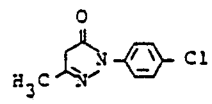 | " | 241 °C |
| 235 | 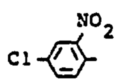 | $COOCH_3$ | Br | 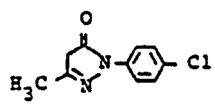 | " | 243 °C |
| 236 | 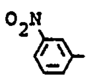 | $COOC_2H_5$ | H | 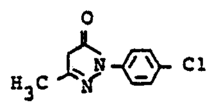 | " | 248 °C |
| 237 | " | " | H | 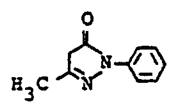 | " | 252 °C |
| 238 | " | " | H | 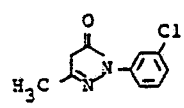 | " | 281 °C |
| 239 | " | $COOCH_3$ | H | 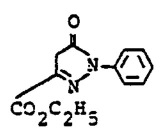 | " | 255 °C |
| 240 | " | " | H | 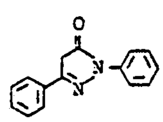 | " | 285 °C |
| 241 | 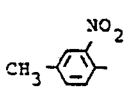 | " | H | 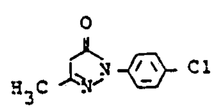 | " | 284 °C |

Fortsetzung

| Nr. | A | $R_1$ | $R_2$ | K | Farbton | λmax. (nm) oder Schmp. |
|---|---|---|---|---|---|---|
| 242 | 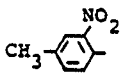 | $COOCH_3$ | H | 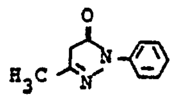 | gelb | 274 °C |
| 243 | " | " | H | 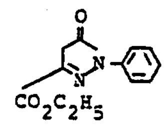 | " | 276 °C |
| 244 | " | " | H | 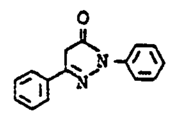 | " | 282 °C |
| 245 | " | 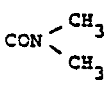 | H | 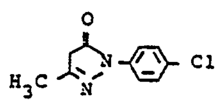 | " | 285 °C |
| 246 | " | 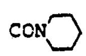 | H | 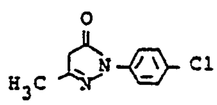 | " | |
| 247 | 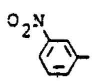 | 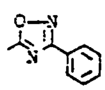 | H | 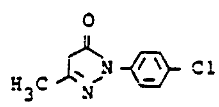 | " | 239 °C |
| 248 | " | " | H | 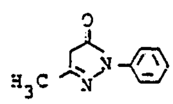 | " | 240 °C |
| 249 | " | " | H | 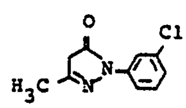 | " | 245 °C |
| 250 | 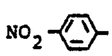 | " | H | 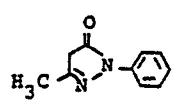 | " | 261 °C |
| 251 | " | " | H | 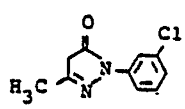 | " | 248 °C |
| 252 | " | " | H | 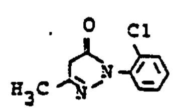 | " | 251 °C |
| 253 | 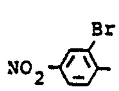 | $COOCH_3$ | H | 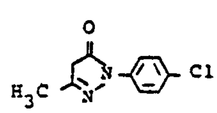 | " | 259 °C |

Fortsetzung

| Nr. | A | $R_1$ | $R_2$ | K | Farbton | λmax. (nm) oder Schmp. |
|---|---|---|---|---|---|---|
| 254 | 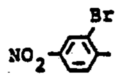 | $COOCH_3$ | H | 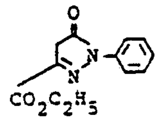 | gelb | |
| 255 | 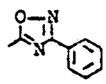 | " | H | 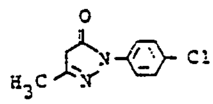 | " | 261 °C |
| 256 | 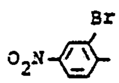 | 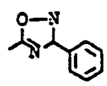 | H | 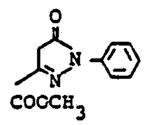 | " | 237 °C |
| 257 | 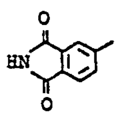 | $COOCH_3$ | H | 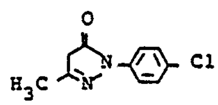 | " | 263 °C |
| 258 | " | " | H | 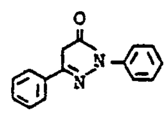 | " | 267 °C |
| 259 | 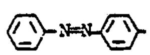 | " | H | 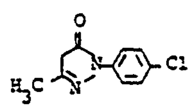 | " | 271 °C |
| 260 | 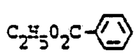 | $CO_2C_2H_5$ | H | " | gold-gelb | |
| 261 | " | " | H | 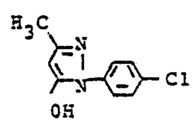 | " | |
| 262 | " | " | H | 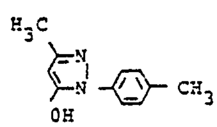 | " | |
| 263 | " | " | | 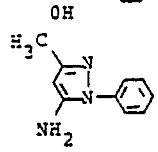 | scharlach | |

Tabelle 14

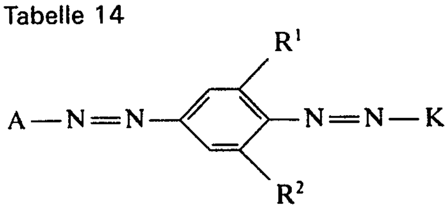

| Nr. | A | $R_1$ | $R_2$ | K | Farbton | λmax. (nm) oder Schmp. |
|---|---|---|---|---|---|---|
| 1 | 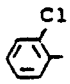 | $COOCH_3$ | H | 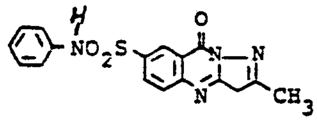 | rot | 〉300 °C |
| 2 | " | " | H | 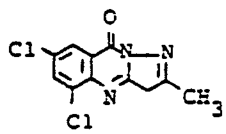 | rot-braun | 〉300 °C |
| 3 | " | " | H | 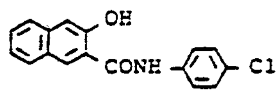 | blau-stichig rot | 286 °C |
| 4 | " | " | H | 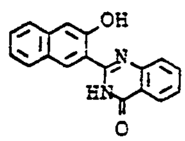 | rot | 〉300 °C |
| 5 | " | COCH | H | 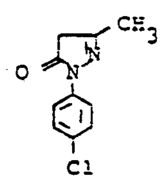 | gelb | 221 °C |
| 6 | " | $COOC_3H_7$ | H | 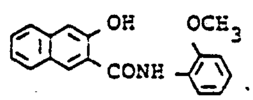 | rot | 299 °C |
| 7 | " | $COOC_6H_{13}$ | H | 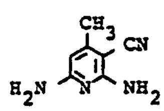 | rot-braun | 211 °C |
| 8 | " | $COOC_{10}H_{21}$ | H | 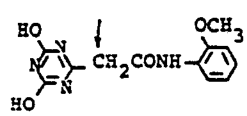 | orange | 300 °C |
| 9 | " | $COOC_3H_7$ | H | 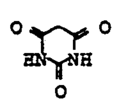 | gelb | 285 °C |
| 10 | " | " | H | 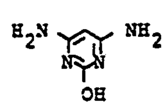 | orange | 216 °C |

Fortsetzung

| Nr. | A | $R_1$ | $R_2$ | K | Farbton | λmax. (nm) oder Schmp. |
|---|---|---|---|---|---|---|
| 11 | 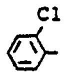 | $COOC_3H_7$ | H | 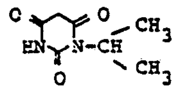 | gelb | 223 °C |
| 12 | " | " | H | 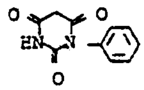 | " | 299 °C |
| 13 | " | 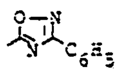 | H | 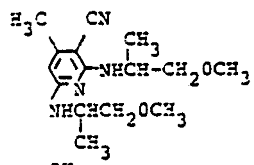 | rot | |
| 14 | " | $COOCH_3$ | H | 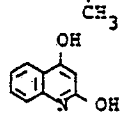 | gelb | 231 °C |
| 15 | " | " | H | 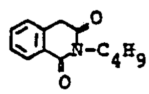 | gelb | 253 °C |
| 16 | 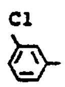 | " | H | 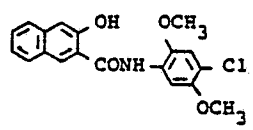 | blaustichig rot | 235 °C |
| 17 | " | " | H | 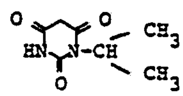 | gelb | 241 °C |
| 18 | " | " | H | 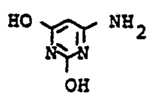 | " | 246 °C |
| 19 | " | $COO(CH_2)_2OCH_3$ | H | 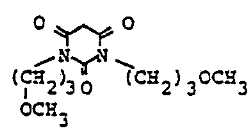 | gelb | 251 °C |
| 20 | 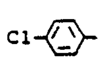 | $COOCH_3$ | H | 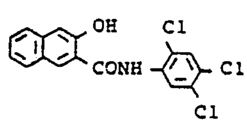 | braunrot | 254 °C |
| 21 | " | " | H | 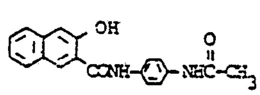 | rot | >300 °C |
| 22 | " | " | H | 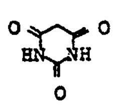 | gelb | 248 °C |

Fortsetzung

| Nr. | A | $R_1$ | $R_2$ | K | Farbton | λmax. (nm) oder Schmp. |
|---|---|---|---|---|---|---|
| 23 | 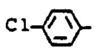 | $COOC_{10}H_{21}$(n) | H | 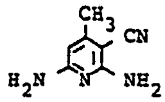 | braun-rot | 260 °C |
| 24 | " | $COOC_{10}H_{21}$(i) | H | " | braun-rot | 201 °C |
| 25 | " | " | H | 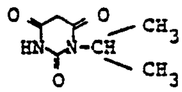 | gelb | 263 °C |
| 26 | " | " | H | 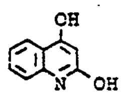 | " | 279 °C |
| 27 | 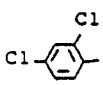 | $COOCH_3$ | H | 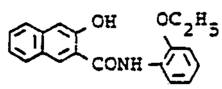 | rot | 281 °C |
| 28 | " | " | H | 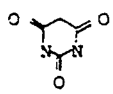 | gelb | 223 °C |
| 29 | " | " | H | 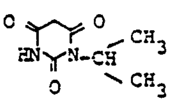 | " | 283 °C |
| 30 | " | " | H | 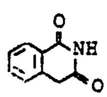 | " | 294 °C |
| 31 | " | $COOC_{10}H_{21}$ | H | 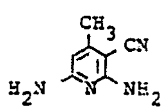 | braun-rot | 298 °C |
| 32 | 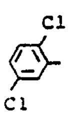 | $COOCH_3$ | H | 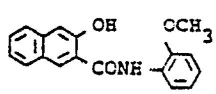 | blau-stichig rot | 214 °C |
| 33 | " | " | H | 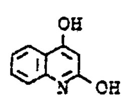 | gelb | 238 °C |
| 34 | " | $COOC_6H_{13}$ | H | 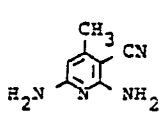 | braun-rot | 245 °C |
| 35 | " | " | Br | " | braun-rot | 211 °C |

Fortsetzung

| Nr. | A | $R_1$ | $R_2$ | K | Farbton | λmax. (nm) oder Schmp. |
|---|---|---|---|---|---|---|
| 36 | 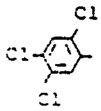 | $COOCH_3$ | H | 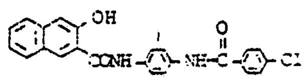 | rot | 220 °C |
| 37 | " | " | H | 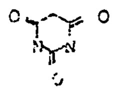 | gelb | 217 °C |
| 38 | " | " | H | 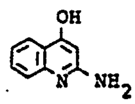 | braun | 246 °C |
| 39 | " | $COOC_3H_7$ | H | 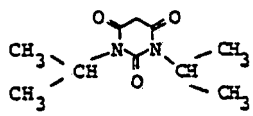 | gelb | 223 °C |
| 40 | " | $COOC_{10}H_{21}$ | H | 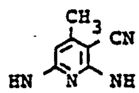 | rot-braun | 224 °C |
| 41 | 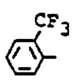 | $COOCH_3$ | H | 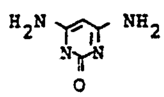 | gelb | 227 °C |
| 42 | " | " | H | 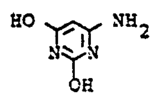 | " | 234 °C |
| 43 | " | $COOC_{10}H_{21}$ | H | 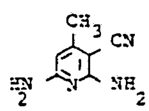 | rot-braun | 283 °C |
| 44 | 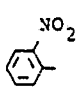 | $COOCH_3$ | H | 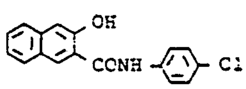 | braun-rot | 219 °C |
| 45 | 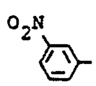 | " | H | 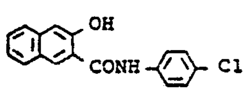 | " | 228 °C |
| 46 | 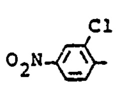 | $COOC_{10}H_{21}$ | H | 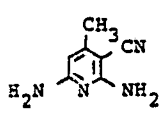 | " | 239 °C |
| 47 | " | " | H | 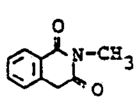 | gelb | 271 °C |

Beispiel 15

18,8 Teile der Diazokomponente der Formel

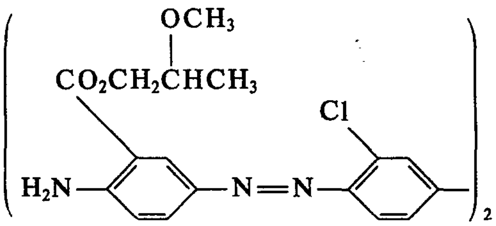

(Schmp.: 210°C, λmax. 1) 350 nm, 2) 422 nm, Minimum bei 381 nm, Lösungsmittel: Dimethylformamid)

werden in 300 Raumteilen Eisessig und 80 Raumteilen Propionsäure verrührt. Dann setzt man bei < 15°C 21 Teile einer 44%igen Nitrosylschwefelsäurelösung und etwa 100 Teile Eiswasser hinzu und rührt die Diazotierung 3 Stunden bei 5 bis 12°C. Dann zerstört man überschüssige salpetrige Säure und läßt das Diazoniumsalzgemisch in eine Lösung aus 17 Teilen 1-Phenyl-3-methylpyrazolon-6 in 100 Teilen Eisessig einlaufen und hebt den pH-Wert der Kupplung nach beendetem Zulauf des Diazoniumsalzes mit Natronlauge auf 4,5 an. Sobald die Kupplung beendet ist, wird der ausgefallene Farbstoff der Formel

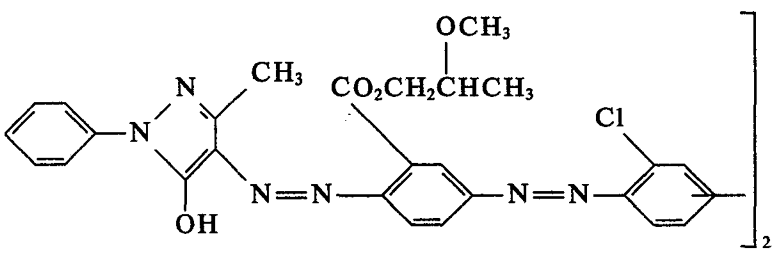

wie üblich isoliert, salzfrei gewaschen und getrocknet. Man erhält 31,5 Teile eines gelbstichig roten Pulvers, das sich in N-Methylpyrrolidon mit rotstichig gelber Farbe löst und Baumwolle, Polyester und Mischgewebe aus Baumwolle und Polyester in orangefarbenen Tönen mit guten Licht- und Naßechtheiten färbt.

Analog zu diesem Herstellverfahren können zum Beispiel folgende Farbstoffe hergestellt werden.

Tabelle 15

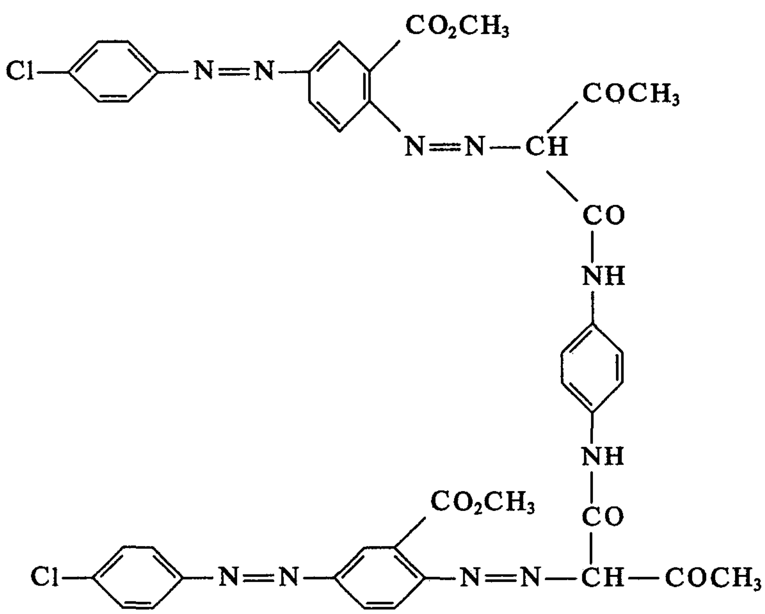

weichmacherechtes Gelb

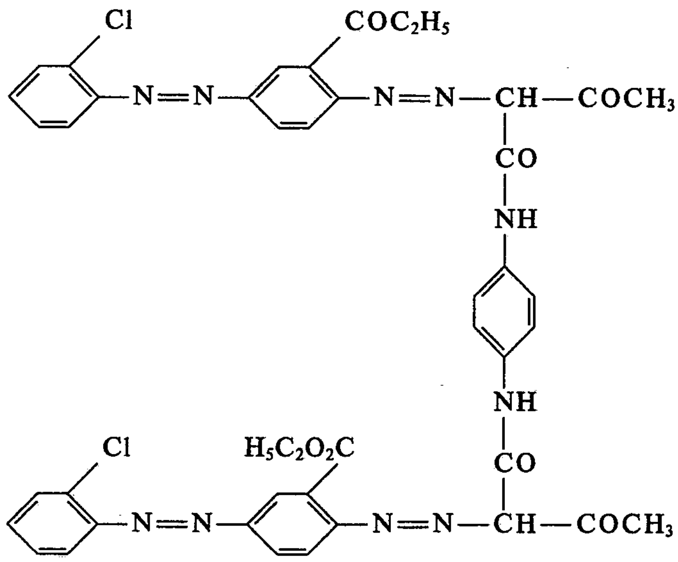

gelb

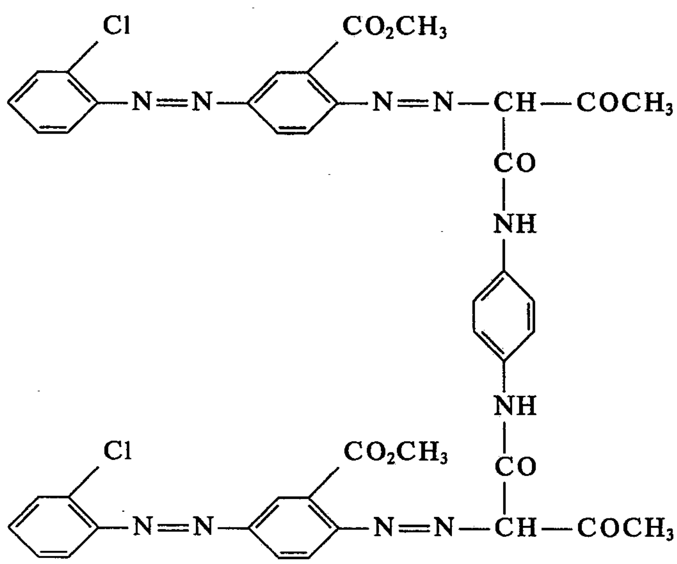

gelb

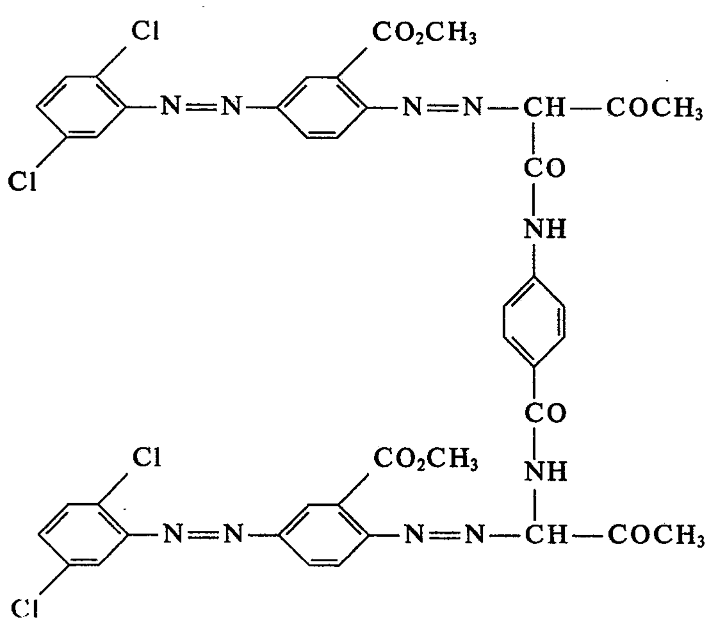

gelb

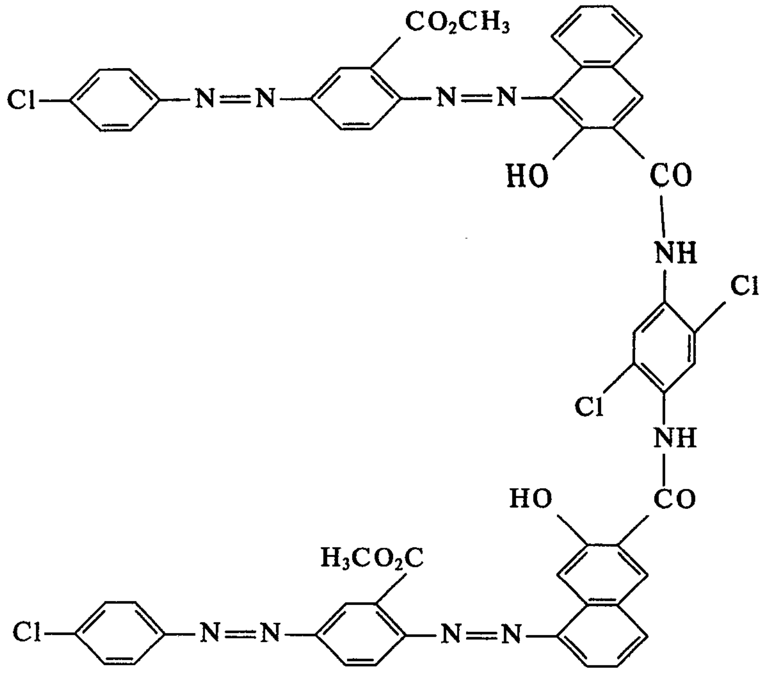

rot

Tabelle 16

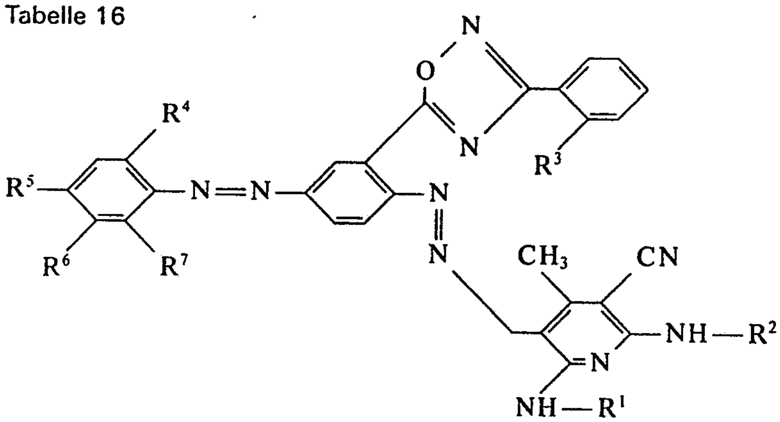

| Nr. | $R^1$ | $R^2$ | $R^3$ | $R^4$ | $R^5$ | $R^6$ | $R^7$ | Farbton | λmax. (nm) oder Schmp. |
|---|---|---|---|---|---|---|---|---|---|
| 1 | $CHCH_2OCH_3$<br>$CH_3$ | 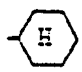 | $CH_3$ | Cl | Cl | H | H | blaustichig rot | |
| 2 | " | " | Cl | " | " | " | " | " | |
| 3 | " | 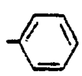 | " | " | " | " | " | bordo | |
| 4 | " | " | " | H | H | Cl | " | blaustichig rot | |
| 5 | " | 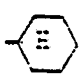 | " | Cl | Cl | " | " | bordo | |
| 6 | " | " | " | " | H | " | " | " | |
| 7 | " | 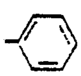 | " | H | Cl | H | " | blaustichig rot | |
| 8 | " | " | $CH_3$ | " | " | " | " | " | |
| 9 | " | " | " | " | H | Cl | " | " | |
| 10 | $C_3H_6OCH_3$ | " | " | " | " | " | " | " | |
| 11 | " | " | Cl | " | " | " | " | " | |
| 12 | $CH(CH_3)_2$ | " | " | " | " | " | " | " | |
| 13 | $C(CH_3)_3$ | $C(CH_3)_3$ | " | " | " | " | " | rot | |
| 14 | " | " | H | " | " | " | " | " | |
| 15 | " | " | Cl | Cl | Cl | H | " | blaustichig rot | |
| 16 | " | " | H | " | " | " | " | " | |
| 17 | " | " | " | " | " | " | Cl | rot | |
| 18 | $CHCH_2OCH_3$<br>$CH_3$ | 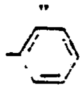 | Cl | " | " | " | " | " | |
| 19 | " | 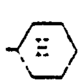 | " | " | " | " | " | " | |
| 20 | H | " | " | " | " | " | " | gelbstichig rot | |
| 21 | H | $CH-CH_2OCH_3$<br>$CH_3$ | Cl | Cl | H | H | Cl | gelbst. rot | |
| 22 | $CHCH_2OCH_3$<br>$CH_3$ | 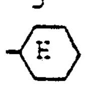 | H | H | $CO_2C_2H_5$ | H | H | rot | |

Fortsetzung

| Nr. | $R^1$ | $R^2$ | $R^3$ | $R^4$ | $R^5$ | $R^6$ | $R^7$ | Farbton | λmax. (nm) oder Schmp. |
|---|---|---|---|---|---|---|---|---|---|
| 23 | H | $CHCH_2OCH_3$<br>$CH_3$ | Cl | H | H | $NO_2$ | H | rot | |
| 24 | " | $C_3H_6OC_8H_{17}(i)$ | " | " | " | " | " | " | |
| 25 | " | " | " | Cl | " | " | " | dunkelrot | |
| 26 | " | $CHCH_2OCH_3$<br>$CH_3$ | " | " | " | " | " | " | |
| 27 | $CH\text{-}CH_2OCH_3$<br>$CH_3$ | 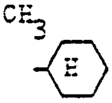 | " | " | " | " | " | " | |
| 28 | $C(CH_3)_3$ | " | " | " | Cl | H | " | blaust. rot | |
| 29 | " | " | " | " | H | Cl | " | bordo | |
| 30 | " | " | " | H | Cl | " | " | blaust. rot | |
| 31 | " | " | H | Cl | Cl | H | " | " | |

Tabelle 17

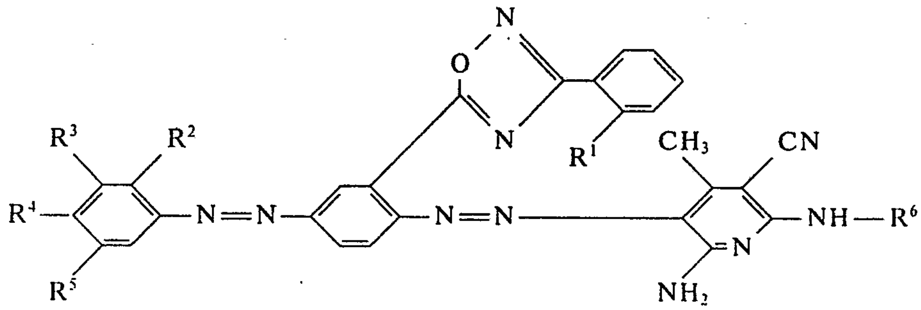

| Nr. | $R^1$ | $R^2$ | $R^3$ | $R^4$ | $R^5$ | $R^6$ | Farbton | λmax. (nm) oder Schmp. |
|---|---|---|---|---|---|---|---|---|
| 1 | H | H | Cl | H | H | $CH-CH_2OCH_3$<br>$CH_3$ | gelbstichig rot | |
| 2 | " | " | " | " | " | 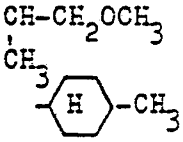 | " | |
| 3 | " | " | " | " | " | $C_2H_4OC_4H_9$ | " | |
| 4 | " | " | " | " | " | $C_3H_6OC_3H_7(n)$ | " | |
| 5 | " | " | " | " | " | $C_3H_6OC_6H_{13}(n)$ | " | |
| 6 | " | " | " | " | " | $C_3H_6OC_8H_{17}(n)$ | " | |
| 7 | Cl | " | " | " | " | $CHCH_2OCH_3$<br>$CH_3$ | " | |
| 8 | " | " | " | " | " | $C(CH_3)_3$ | " | |
| 9 | Cl | Cl | H | Cl | H | " | blaustichig rot | |
| 10 | H | H | Cl | H | " | " | gelbstichig rot | |
| 11 | " | " | Cl | Cl | " | " | rot | |
| 12 | " | Cl | H | H | Cl | $CHCH_2OCH_3$<br>$CH_3$ | " | |
| 13 | " | " | " | Cl | H | " | " | |
| 14 | Cl | " | " | " | " | " | " | |
| 15 | H | H | Cl | " | " | " | " | |
| 16 | " | " | " | H | Cl | " | " | |
| 17 | Cl | Cl | H | " | Cl | $C(CH_3)_3$ | blaustichig rot | |
| 18 | " | " | " | " | " | $C(CH_3)_2$<br>$C_2H_5$ | " | |

Tabelle 18

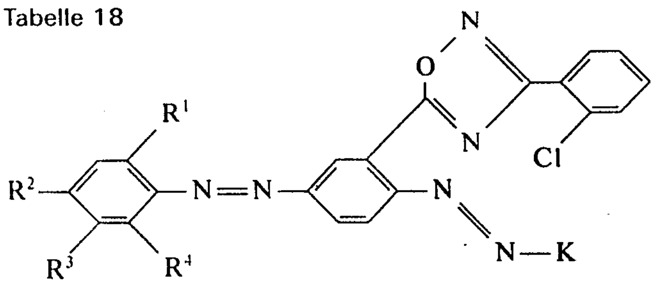

| Nr. | $R^1$ | $R^2$ | $R^3$ | $R^4$ | K | Farbton |
|---|---|---|---|---|---|---|
| 1 | Cl | $NO_2$ | H | H | 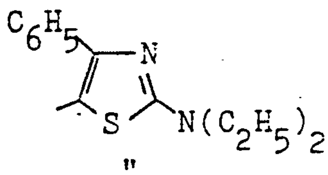 | Marineblau |
| 2 | " | " | " | Cl | " | " |
| 3 | " | Cl | Cl | H | " | " |
| 4 | " | " | " | " | 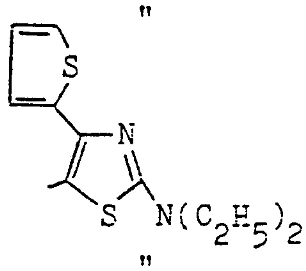 | " |
| 5 | " | $NO_2$ | H | " | " | " |
| 6 | " | " | " | " | 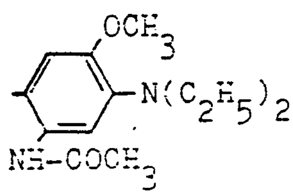 | " |
| 7 | " | " | " | " | 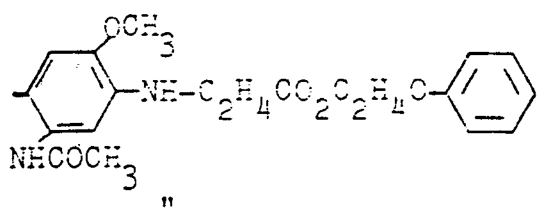 | " |
| 8 | Cl | Cl | Cl | " | " | " |
| 9 | " | $NO_2$ | H | " | 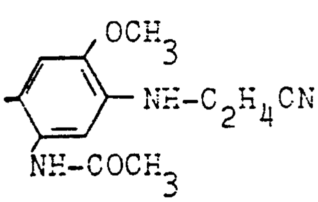 | " |
| 10 | H | " | " | " | 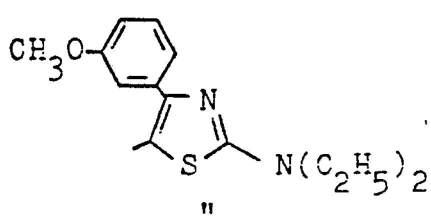 | " |
| 11 | Cl | Cl | Cl | " | " | " |

Fortsetzung

| Nr. | $R^1$ | $R^2$ | $R^3$ | $R^4$ | K | Farbton |
|---|---|---|---|---|---|---|
| 12 | Cl | $NO_2$ | H | H | 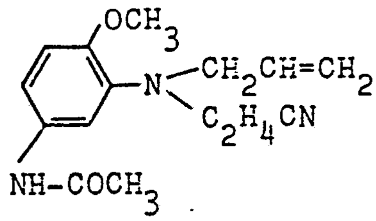 | gedecktes Marineblau |
| 13 | " | " | " | " | 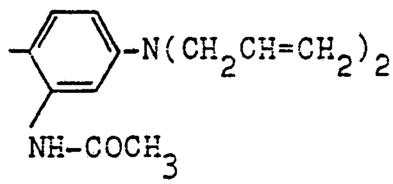 | " |

Der Farbstoff der Formel

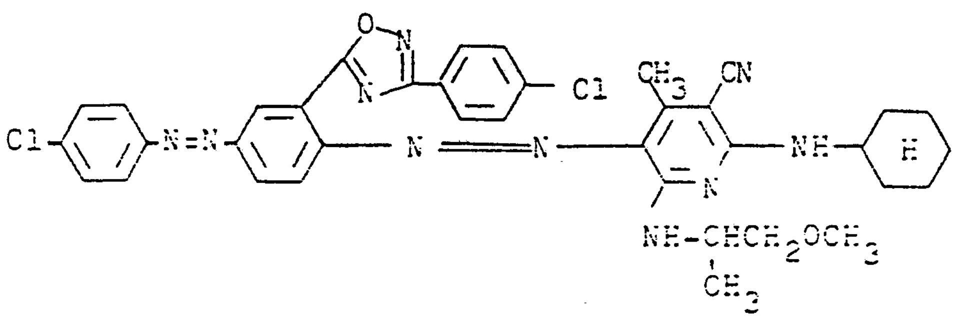

rot

**Patentansprüche**

1. Disazofarbstoffe der allgemeinen Formel

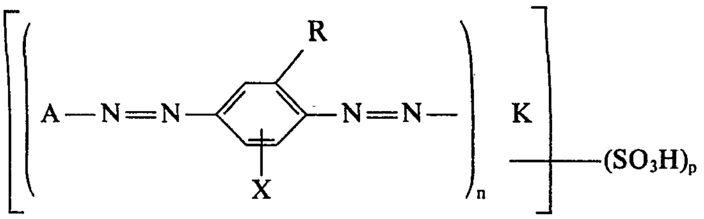

in der

A der Rest einer Diazokomponente,
K der Rest einer Kupplungskomponente, ausgenommen der Pyridonreihe,
n die Zahlen 1 oder 2,
p die Zahlen 0, 1, 2, 3 oder 4,
R ein Rest der Formel

$COOR^2$ 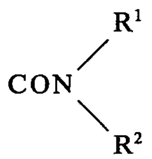 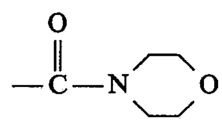 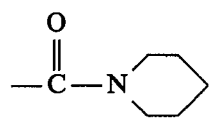 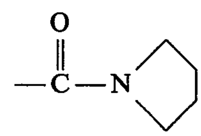

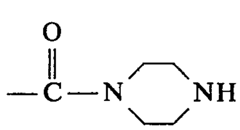 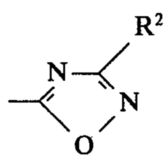 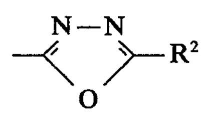 oder 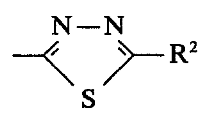

X Wasserstoff, Chlor, Brom, Methoxy, Äthoxy, Propoxy, Butoxy, Phenoxy, Methyl, Äthyl, Propyl, Butyl, Acetylamino, Dimethylamino, Diäthylamino, Carboxyl oder $-NO_2$ sind, wobei
$R^1$ gegebenenfalls substituiertes Alkyl, Alkenyl, Cycloalkyl oder Aryl und
$R^2$ Wasserstoff oder einen Rest $R^1$ bedeuten.

2. Farbstoffe gemäß Anspruch 1, wobei A durch Chlor, Brom, Cyan, Nitro, $C_1$- bis $C_4$-Alkylsulfonyl, Allylsulfonyl oder Carbonester substituiertes Phenyl ist und die Alkoholkomponente des Carbonesters ein gegebenenfalls durch Sauerstoff unterbrochener $C_1$- bis $C_8$-Alkylrest ist.
3. Farbstoffe gemäß Anspruch 1, wobei K der Rest einer Kupplungskomponente der Pyrazol-, Dioxychinolin-, Acetoacetarylid- oder 2,6-Diaminopyridinreihe ist.
4. Farbstoffe gemäß Anspruch 1, wobei n = 1 ist.
5. Farbstoffe gemäß Anspruch 1, wobei p = 0 ist.
6. Farbstoffe gemäß Anspruch 1, wobei R ein Rest der Formel

$COOR^2$ oder 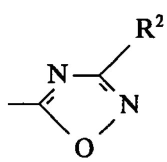

ist und $R^2$ die für Anspruch 1 angegebene Bedeutung hat.
7. Farbstoffe gemäß Anspruch 1, wobei X Wasserstoff ist.
8. Farbstoffe gemäß Anspruch 1, wobei $R^2$ für $COOR^2$ $C_1$- bis $C_4$-Alkyl oder $C_1$- bis $C_4$-Alkoxy-$C_2$- oder $C_3$-alkyl und für

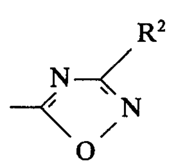

gegebenenfalls durch Chlor oder Methyl substituiertes Phenyl ist.
9. Verbindungen gemäß Anspruch 1 der Formel

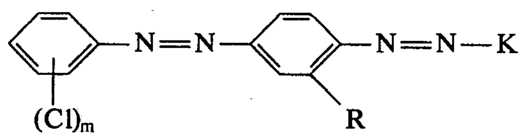

in der m die Zahlen 1, 2 oder 3 bedeutet, R die für Anspruch 6 und K die für Anspruch 3 angegebene Bedeutung haben.

10. Verbindungen gemäß Anspruch 1, wobei K ein Rest der Formel

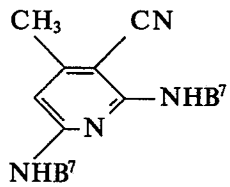

ist, und die Reste $B^7$ unabhängig voneinander Wasserstoff oder aliphatische, cycloaliphatische oder aromatische Reste sind.

11. Verbindungen gemäß Anspruch 10, wobei die Reste $B^7$ unabhängig voneinander Wasserstoff, i-Propyl, i-Butyl, t-Butyl,

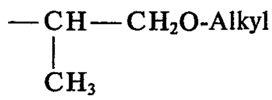 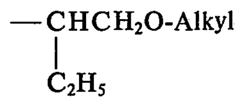 $(CH_2)_3O$-Alkyl 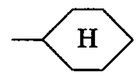

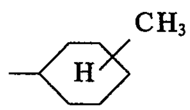 $C_6H_5$ 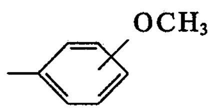 oder 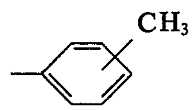

sind, wobei Alkyl 1 bis 8 C-Atome hat.

12. Verbindungen gemäß Anspruch 11, wobei die Reste $B^7$ verschieden sind.

13. Verwendung der Farbstoffe gemäß Anspruch 1 zum Färben textiler Fasern oder als Pigmente.

## Claims

1. A disazo dye of the general formula

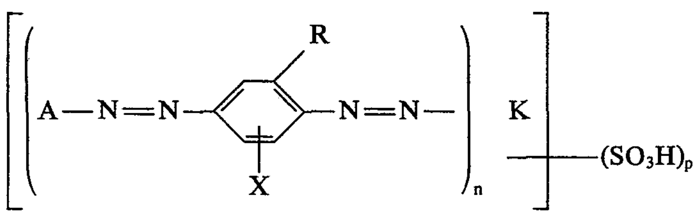

where

A is the radical of a diazo component,
K is the radical of a coupling component, with the exception of the pyridone series,
n is 1 or 2,
p is 0, 1, 2, 3 or 4,
R is a radical of the formula

$COOR^2$ 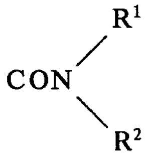 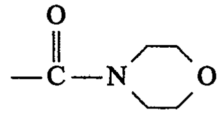 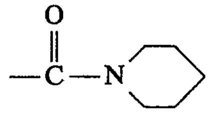 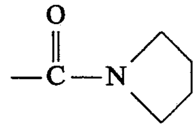

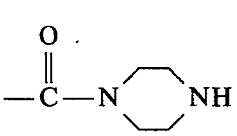 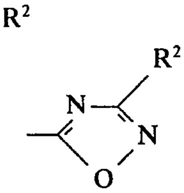 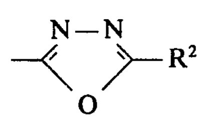 or 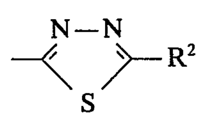

where $R^1$ is unsubstituted or substituted alkyl, alkenyl, cycloalkyl or aryl, and $R^2$ is hydrogen or $R^1$, and

X is hydrogen, chlorine, bromine, methoxy, ethoxy, propoxy, butoxy, phenoxy, methyl, ethyl, propyl, butyl, acetylamino, dimethylamino, diethylamino, carboxyl or $-NO_2$.

2. A dye as claimed in claim 1, where A is phenyl which is substituted by chlorine, bromine, cyano, nitro, $C_1-C_4$-alkylsulfonyl, allylsulfonyl or carboxylic acid ester, and the alcohol-derived component of the carboxylic acid ester is $C_1-C_8$-alkyl which may be interrupted by oxygen.

3. A dye as claimed in claim 1, where K is the radical of a coupling component of the pyrazole, dioxyquinoline, acetoacetarylide or 2,6-diaminopyridine series.

4. A dye as claimed in claim 1, where n is 1.

5. A dye as claimed in claim 1, where p is 0.

6. A dye as claimed in claim 1, where R is a radical of the formula

$COOR^2$ or 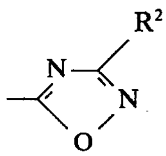

and $R^2$ has the meanings given in claim 1.

7. A dye as claimed in claim 1, where X is hydrogen.

8. A dye as claimed in claim 1, where $R^2$, in $COOR^2$, is $C_1-C_4$-alkyl or $C_1-C_4$-alkoxy-$C_2$- or $C_3$-alkyl, and, in

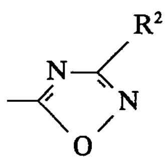

is phenyl which is unsubstituted or substituted by chlorine or methyl.

9. A compound as claimed in claim 1, of the formula

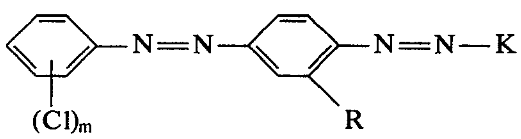

where m is 1, 2 or 3, R has the meanings given in claim 6, and K has the meanings given in claim 3.

10. A compound as claimed in claim 1, where K is a radical of the formula

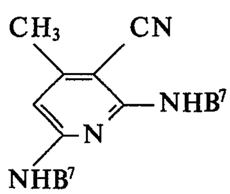

and the radicales $B^7$, independently of one another, are hydrogen or aliphatic, cycloaliphatic or aromatic radicals.

11. A compound as claimed in claim 10, where the radicals $B^7$, independently of one another, are hydrogen, i-propyl, i-butyl, t-butyl,

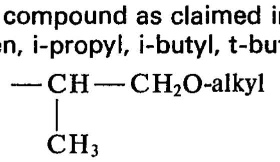 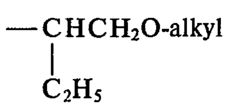 $(CH_2)_3O$-alkyl 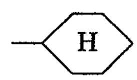

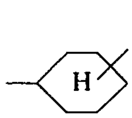 $C_6H_5$ 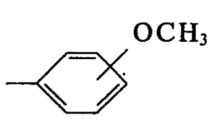 or 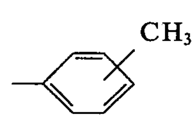

and alkyl is of 1 to 8 carbon atoms.

12. A compound as claimed in claim 11, where the radicals $B^7$ differ from one another.

13. The use of a dye as claimed in claim1 for dyeing textile fibers or as a pigment.

**Revendications**

1. Colorants diazoïques de formule générale

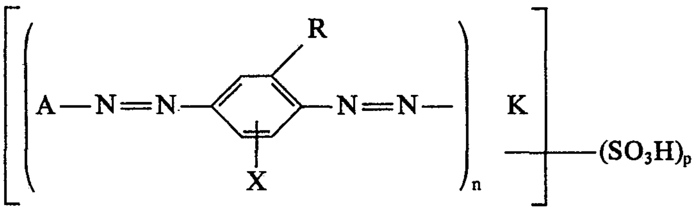

dans laquelle:

A est le radical d'un composant de diazoïque,
K est le radical d'un composant de copulation, excepté de la série des pyridones,
n est le nombre 1 ou 2,
p est le nombre 0, 1, 2, 3 ou 4,
R est un radical de formule

COOR²

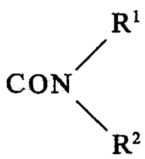

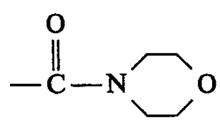

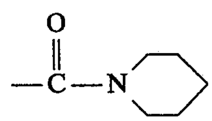

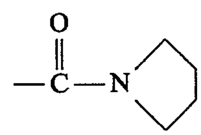

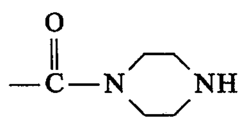

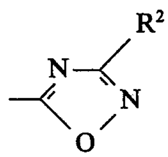

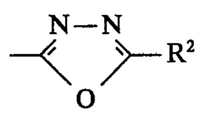

ou

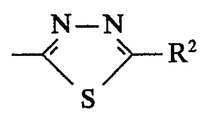

X est un hydrogène, un chlore, un brome, un groupe méthoxy, éthoxy, propoxy, butoxy, phénoxy, méthyle, éthyle, propyle, butyle, acétylamino, diméthylamino, diéthylamino, carboxyle ou $-NO_2$,
$R^1$ représentant un groupe alcoyle éventuellement substitué, alcényle, cycloalcoyle ou aryle et
$R^2$ étant un hydrogène ou un radical $R^1$.

2. Colorants selon la revendication 1, dans lesquels A est un phényle substitué avec un chlore, un brome, un groupe cyano, nitro, alcoyl($C_1-C_4$)-sulfonyle, allylsulfonyle ou ester carboxylique et le constituant alcoolique de l'ester carboxylique est un radical alcoyle en $C_1$ à $C_8$, éventuellement interrompu par un oxygène.

3. Colorants selon la revendication 1, dans lesquels K est le radical d'un constituant de copulation de la série des pyrazoles, des dioxyquinoléines, des acétoacétarylides ou des 2,6-diaminopyridines.

4. Colorants selon la revendication 1, dans lesquels n = 1.

5. Colorants selon la revendication 1, dans lesquels p = 0.

6. Colorants selon la revendication 1, dans lesquels R est un radical de formule

COOR² ou

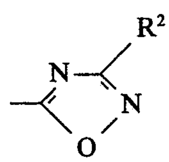

et $R^2$ a la signification donnée à propos de la revendication 1.

7. Colorants selon la revendication 1, dans lesquels X est un hydrogéné.

8. Colorants selon la revendication 1, dans lesquels $R^2$ pour $COOR^2$ est un alcoyle en $C_1$ à $C_4$ ou un alcoxy($C_1-C_4$)-alcoyle($C_2$ ou $C_3$) et, pour

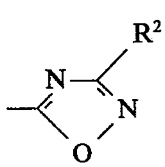

un phényle éventuellement substitué avec un chlore ou un méthyle.

9. Composés selon la revendication 1 de formule

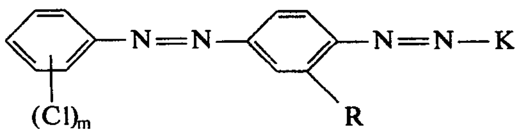

dans laquelle:
m est le nombre, 1, 2 ou 3, R a la signification donnée dans la revendication 6 et K la signification donnée dans la revendication 3.

10. Composés selon la revendication 1, dans lesquels K est un radical de formule

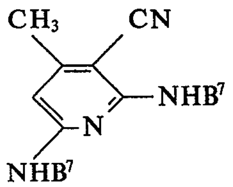

et les radicaux $B^7$, indépendamment les uns des autres, sont des atomes d'hydrogène ou des radicaux aliphatiques, cycloaliphatiques ou aromatiques.

11. Composés selon la revendication 10, dans lesquels les radicaux $B^7$, indépendamment les uns des autres, sont des atomes d'hydrogène pu des radicaux i-propyle, i-butyle, t-butyle,

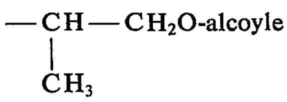 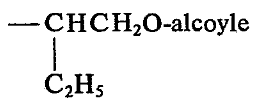 $(CH_2)_3O$-alcoyle 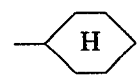

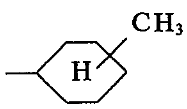 $C_6H_5$ 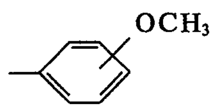 ou 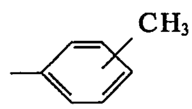 l'alcoyle

comportant 1 à 8 atomes de carbone.

12. Composés selon la revendication 11, caractérisé en ce que les radicaux $B^7$ sont différents.

13. Utilisation des colorants selon la revendication 1 pour la teinture de fibres textiles ou comme pigments.